(19) Europäisches Patentamt
European Patent Office
Office européen des brevets

(11) EP 3 471 309 B1

(12) **EUROPEAN PATENT SPECIFICATION**

(45) Date of publication and mention of the grant of the patent:
**15.02.2023 Bulletin 2023/07**

(21) Application number: **18818398.2**

(22) Date of filing: **15.06.2018**

(51) International Patent Classification (IPC):
***H04L 1/16*** *(1968.09)* ***H04L 1/18*** *(1968.09)*
***H04W 72/12*** *(2009.01)*

(52) Cooperative Patent Classification (CPC):
**H04L 1/1858; H04L 1/1628; H04L 1/1861; H04L 1/1896**

(86) International application number:
**PCT/KR2018/006774**

(87) International publication number:
**WO 2018/230999 (20.12.2018 Gazette 2018/51)**

(54) **METHODS FOR TRANSMITTING AND RECEIVING ACKNOWLEDGMENT INFORMATION BETWEEN TERMINAL AND BASE STATION IN WIRELESS COMMUNICATION SYSTEM, AND DEVICES FOR SUPPORTING SAME**

VERFAHREN ZUM SENDEN UND EMPFANGEN VON BESTÄTIGUNGSINFORMATIONEN ZWISCHEN EINEM ENDGERÄT UND EINER BASISSTATION IN EINEM DRAHTLOSKOMMUNIKATIONSSYSTEM UND VORRICHTUNGEN ZUR UNTERSTÜTZUNG DAVON

PROCÉDÉS DE TRANSMISSION ET DE RÉCEPTION D'INFORMATIONS D'ACCUSÉ DE RÉCEPTION ENTRE UN TERMINAL ET UNE STATION DE BASE DANS UN SYSTÈME DE COMMUNICATION SANS FIL, ET DISPOSITIFS LES PRENANT EN CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**15.06.2017 US 201762520497 P**
**16.06.2017 US 201762521357 P**
**26.06.2017 US 201762525169 P**
**11.08.2017 US 201762543971 P**
**08.09.2017 US 201762555694 P**
**15.11.2017 US 201762586835 P**
**16.11.2017 US 201762587455 P**
**30.11.2017 US 201762593157 P**
**22.01.2018 US 201862620407 P**
**14.02.2018 US 201862630252 P**

(43) Date of publication of application:
**17.04.2019 Bulletin 2019/16**

(73) Proprietor: **LG Electronics Inc.**
**Seoul 07336 (KR)**

(72) Inventors:
- **KIM, Seonwook**
  **Seoul 06772 (KR)**
- **YANG, Suckchel**
  **Seoul 06772 (KR)**
- **AHN, Joonkui**
  **Seoul 06772 (KR)**
- **KIM, Jaehyung**
  **Seoul 06772 (KR)**

(74) Representative: **Maikowski & Ninnemann Patentanwälte Partnerschaft mbB**
**Postfach 15 09 20**
**10671 Berlin (DE)**

(56) References cited:
**WO-A1-2016/063758**
**KR-A- 20110 063 685**
**KR-A- 20130 032 861**
**US-B2- 8 457 091**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- NTT DOCOMO ET AL: "HARQ-ACK feedback mechanisms", 3GPP DRAFT; R1-1708481, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 14 May 2017 (2017-05-14), XP051273673, Retrieved from the Internet: URL:http://www.3gpp.org/ftp/Meetings_3GPP_SYNC/RAN1/Docs/ [retrieved on 2017-05-14]
- SAMSUNG: "HARQ-ACK codebook determination", 3GPP DRAFT; R1-1708025_HARQ-ACK CODEBOOK DETERMINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 14 May 2017 (2017-05-14), XP051273221, Retrieved from the Internet: URL:http://www.3gpp.org/ftp/Meetings_3GPP_SYNC/RAN1/Docs/ [retrieved on 2017-05-14]
- HUAWEI ET AL: "Discussion on CBG-based feedback", 3GPP DRAFT; R1-1706964, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051272194, Retrieved from the Internet: URL:http://www.3gpp.org/ftp/Meetings_3GPP_SYNC/RAN1/Docs/ [retrieved on 2017-05-14]
- HUAWEI et al.: "Discussion on CBG-based Feedback", RI-1706964, 3GPP TSG RAN WG1 Meeting #89, 6 May 2017 (2017-05-06), XP051261587, Hangzhou, China

## Description

### Technical Field

The following description, relates to a wireless communication system, and more particularly, to a method for transmitting or receiving acknowledgement (ACK) information between a user equipment (UE) and a base station (BS) in a wireless communication system and an apparatus for supporting the same.

### Background Art

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

As described above, the introduction of the next generation RAT considering the enhanced mobile broadband communication, massive MTC, Ultra-reliable and low latency communication (URLLC), and the like has been discussed. Related Document D1 (3GPP contribution R1-1708481 by NTT DOCOMO) describes Counter DAI and Total DAI for HARQ-ACK feedback, CBG-based HARQ-ACK and HARQ-ACK multiplexing for multiple TBs and/or multiple CBGs. Related Document D2 (3GPP contribution R1-1708025 by Samsung) describes that a unified HARQ-ACK multiplexing mechanism is applied for TB/CBG-based retransmission and LTE DAI functionality is used to support CBG-based retransmission. Related Document D3 (3GPP contribution R1-1706964 by Huawei) describes HARQ-ACK multiplexing for CBG-based re-transmission and common mechanisms should be strived for all the multiplexing cases such as TB/CBG-based HARQ operations.

## Disclosure

### Technical Problem

An object of the present invention is to provide a method for transmitting or receiving ACK information between a UE and a BS in a wireless communication system and an apparatus for supporting the same.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present invention provides a method for transmitting or receiving ACK information between a LTE and a BS in a wireless communication system and an apparatus for supporting the same.

The invention is set out in the independent claims.

It is to be understood that both the foregoing general description and the following detailed description of the present disclosure are exemplary and explanatory and are intended to provide further explanation of the disclosure as claimed.

### Advantageous Effects

As is apparent from the above description, the embodiments of the present disclosure have the following effects.

According to the present invention, a UE and a BS may support transmission and reception of TB based ACK information together with transmission and reception of CBG based ACK information.

Particularly, the BS may configure, for the UE, transmission and reception of CBG based ACK information (through higher layer signaling), and may schedule TB based downlink data signal to the UE. In this case, according to the present invention, the BS and the UE may transmit or receive ACK information without mismatch in ACK information therebetween.

Also, if transmission and reception of CBG based ACK information and transmission and reception of TB based ACK information are simultaneously configured for a specific UE, according to the present invention, the BS and the UE may transmit or receive CBG based ACK information and TB based ACK information based on the configuration.

The effects that can be achieved through the embodiments of the present invention are not limited to what has been particularly described hereinabove and other effects which are not described herein can be derived by those skilled in the art from the following detailed description. That is, it should be noted that the effects which are not intended by the present invention can be derived by those skilled in the art from the embodiments of the present invention.

**Brief Description of the Drawings**

The accompanying drawings, which are included to provide a further understanding of the invention, provide embodiments of the present invention together with detail explanation. Yet, a technical characteristic of the present invention is not limited to a specific drawing. Characteristics disclosed in each of the drawings are combined with each other to configure a new embodiment. Reference numerals in each drawing correspond to structural elements.

FIG. 1 is a diagram illustrating physical channels and a signal transmission method using the physical channels;
FIG. 2 is a diagram illustrating exemplary radio frame structures;
FIG. 3 is a diagram illustrating an exemplary resource grid for the duration of a downlink slot;
FIG. 4 is a diagram illustrating an exemplary structure of an uplink subframe;
FIG. 5 is a diagram illustrating an exemplary structure of a downlink subframe;
FIG. 6 is a diagram illustrating a self-contained subframe structure applicable to the present invention;
FIGs. 7 and 8 are diagrams illustrating representative connection methods for connecting TXRUs to antenna elements;
FIG. 9 is a schematic diagram illustrating a hybrid beamforming structure according to an example of the present invention from the perspective of TXRUs and physical antennas;
FIG. 10 is a diagram schematically illustrating the beam sweeping operation for synchronization signals and system information during a downlink (DL) transmission process according to an example of the present invention;
FIG. 11 is a diagram simply illustrating that DL data transmitted at one slot may correspond to 4 HARQ timings in accordance with an example of the present invention;
FIG. 12 is a diagram simply illustrating that HARQ-ACK information on one or more CCs is transmitted at a specific slot within a specific CC in a carrier aggregation (CA) system in accordance with another example of the present invention;
FIGs. 13 and 14 are diagrams simply illustrating a method for transmitting or receiving HARQ-ACK when numerologies or TTIs are different between CCs;
FIG. 15 is a diagram illustrating an example that some of slots within one BW are used for UL in accordance with the present invention;
FIG. 16 is a diagram illustrating a method for transmitting or receiving HARQ-ACK based on (TB-level) C-DAI and T-DAI of a TB unit in accordance with an example of the present invention;
FIG. 17 is a diagram simply illustrating a method for transmitting or receiving HARQ-ACK based on (CBG-level) C-DAI and T-DAI of a CBG unit in accordance with an example of the present invention;
FIG. 18 is a diagram illustrating a method for transmitting or receiving HARQ-ACK according to an example of the present invention;
FIG. 19 is a diagram simply illustrating an operation for transmitting or receiving HARQ-ACK for a plurality of CCs on CC#1 in accordance with an example of the present invention;
FIG. 20 is a diagram simply illustrating a method for transmitting or receiving HARQ-ACK when 2 CCs are carrier aggregated in accordance with the present invention;
FIG. 21 is a diagram simply illustrating a method for transmitting or receiving HARQ-ACK when 2 CCs are carrier aggregated in accordance with the present invention;
FIG. 22 is a diagram simply illustrating a method for transmitting or receiving HARQ-ACK, to which DAI is applied per CC in accordance with the present invention;
FIG. 23 is a diagram simply illustrating a method for transmitting or receiving HARQ-ACK when four CCs are identified by two CGs in accordance with the present invention;
FIG. 24 is a diagram simply illustrating a method for transmitting or receiving HARQ-ACK when 1TB-CG and 2TB-CG are configured in accordance with the present invention;
FIG. 25 is a diagram simply illustrating a method for transmitting or receiving HARQ-ACK when additional T-DAI is applied to different CGs in accordance with the present invention;

FIG. 26 is a diagram simply illustrating a method for transmitting or receiving HARQ-ACK when two CGs are identified in accordance with the present invention;

FIG. 27 is a diagram illustrating an example that DL data are transmitted through three CCs of different TTIs or different slot durations in accordance with the present invention;

FIG. 28 is a diagram illustrating an example that a mismatch in HARQ-ACK payload size occurs between a BASE STATION and a UE;

FIG. 29 is a diagram illustrating a method for transmitting or receiving HARQ-ACK, which can solve a problem of FIG. 28 in accordance with the present invention;

FIG. 30 is a diagram simply illustrating a method for transmitting or receiving HARQ-ACK in accordance with an example of the present invention when DL data are transmitted through two CCs having different slot durations;

FIG. 31 is a diagram simply illustrating a method for transmitting or receiving HARQ-ACK in accordance with another example of the present invention when DL data are transmitted through two CCs having different slot durations;

FIG. 32 is a diagram simply illustrating a method for transmitting or receiving HARQ-ACK through two CCs having different slot durations in accordance with the present invention;

FIGs. 33 and 34 are diagrams simply illustrating an example of DAI calculation for supporting HARQ-ACK transmission and reception according to an example of the present invention;

FIG. 35 is a diagram simply illustrating an operation for HARQ-ACK transmission and reception according to the present invention;

FIG. 36 is a flow chart illustrating a method for transmitting ACK response information of a UE according to an example of the present invention;

FIG. 37 is a flow chart illustrating a method for transmitting ACK response information of a UE according to another embodiment of the present invention; and

FIG. 38 is a diagram illustrating a configuration of a UE and a BS, through which the embodiments proposed in the present invention can be implemented.

## Best Mode for Carrying Out the Invention

In the description of the attached drawings, a detailed description of known procedures or steps of the present disclosure will be avoided lest it should obscure the subject matter of the present disclosure. In addition, procedures or steps that could be understood to those skilled in the art will not be described either.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the present disclosure, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), gNode B (gNB), an Advanced Base Station (ABS), an access point, etc.

In the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmission end is a fixed and/or mobile node that provides a data service or a voice service and a reception end is a fixed and/or mobile node that receives a data service or a voice service. Therefore, a UE may serve as a transmission end and a BS may serve as a reception end, on an UpLink (UL). Likewise, the UE may serve as a reception end and the BS may serve as a transmission end, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5G NR system, and a 3GPP2 system. In particular, the embodiments of the present disclosure may be supported by the standard specifications, 3GPP TS 36.211, 3GPP TS 36.212, 3GPP TS 36.213, 3GPP TS 36.321, 3GPP TS 36.331, 3GPP TS 38.211, 3GPP TS 38.212, 3GPP TS 38.213, 3GPP TS 38.321 and 3GPP TS 38.331. That is, the steps or parts, which are not described to clearly reveal the technical idea of the present disclosure, in the embodiments of the present disclosure may be explained by the above standard specifications. All terms used in the embodiments of the present disclosure may be explained by the standard specifications.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the scope of the present disclosure.

Hereinafter, 3GPP LTE/LTE-A systems and 3GPP NR system are explained, which are examples of wireless access systems.

The embodiments of the present disclosure can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE.

For clarification of description for technical features of the present invention, although the embodiments of the present invention will be described based on a 3GPP NR system as well as a 3GPP LTE/LTE-A system, the present invention may be applied to an IEEE 802.16e/m system, etc.

## 1. 3GPP LTE/LTE-A System

### 1.1. Physical Channels and Signal Transmission and Reception Method Using the Same

In a wireless access system, a UE receives information from an eNB on a DL and transmits information to the eNB on a UL. The information transmitted and received between the UE and the eNB includes general data information and various types of control information. There are many physical channels according to the types/usages of information transmitted and received between the eNB and the UE.

FIG. 1 illustrates physical channels and a general signal transmission method using the physical channels, which may be used in examples of the present disclosure.

When a UE is powered on or enters a new cell, the UE performs initial cell search (S11). The initial cell search involves acquisition of synchronization to an eNB. Specifically, the UE synchronizes its timing to the eNB and acquires information such as a cell Identifier (ID) by receiving a Primary Synchronization Channel (P-SCH) and a Secondary Synchronization Channel (S-SCH) from the eNB.

Then the UE may acquire information broadcast in the cell by receiving a Physical Broadcast Channel (PBCH) from the eNB.

During the initial cell search, the UE may monitor a DL channel state by receiving a Downlink Reference Signal (DL RS).

After the initial cell search, the UE may acquire more detailed system information by receiving a Physical Downlink Control Channel (PDCCH) and receiving a Physical Downlink Shared Channel (PDSCH) based on information of the PDCCH (S12).

To complete connection to the eNB, the UE may perform a random access procedure with the eNB (S13 to S16). In the random access procedure, the UE may transmit a preamble on a Physical Random Access Channel (PRACH) (S13) and may receive a PDCCH and a PDSCH associated with the PDCCH (S14). In the case of contention-based random access, the UE may additionally perform a contention resolution procedure including transmission of an additional PRACH (S15) and reception of a PDCCH signal and a PDSCH signal corresponding to the PDCCH signal (S16).

After the above procedure, the UE may receive a PDCCH and/or a PDSCH from the eNB (S17) and transmit a Physical Uplink Shared Channel (PUSCH) and/or a Physical Uplink Control Channel (PUCCH) to the eNB (S18), in a general UL/DL signal transmission procedure.

Control information that the UE transmits to the eNB is generically called Uplink Control Information (UCI). The UCI includes a Hybrid Automatic Repeat and reQuest Acknowledgement/Negative Acknowledgement (HARQ-ACK/NACK), a Scheduling Request (SR), a Channel Quality Indicator (CQI), a Precoding Matrix Index (PMI), a Rank Indicator (RI), etc.

In the LTE system, UCI is generally transmitted on a PUCCH periodically. However, if control information and traffic data should be transmitted simultaneously, the control information and traffic data may be transmitted on a PUSCH. In addition, the UCI may be transmitted aperiodically on the PUSCH, upon receipt of a request/command from a network.

### 1.2. Resource Structure

FIG. 2 illustrates exemplary radio frame structures used in examples of the present disclosure.

FIG. 2(a) illustrates frame structure type 1. Frame structure type 1 is applicable to both a full Frequency Division Duplex (FDD) system and a half FDD system.

One radio frame is 10ms (Tf=307200·Ts) long, including equal-sized 20 slots indexed from 0 to 19. Each slot is 0.5ms (Tslot=15360·Ts) long. One subframe includes two successive slots. An ith subframe includes 2ith and (2i+1)th slots. That is, a radio frame includes 10 subframes. A time required for transmitting one subframe is defined as a Transmission Time Interval (TTI). Ts is a sampling time given as Ts=1/(15kHzx2048)=3.2552x10-8 (about 33ns). One slot includes a plurality of Orthogonal Frequency Division Multiplexing (OFDM) symbols or SC-FDMA symbols in the time domain by a plurality of Resource Blocks (RBs) in the frequency domain.

A slot includes a plurality of OFDM symbols in the time domain. Since OFDMA is adopted for DL in the 3GPP LTE system, one OFDM symbol represents one symbol period. An OFDM symbol may be called an SC-FDMA symbol or symbol period. An RB is a resource allocation unit including a plurality of contiguous subcarriers in one slot.

In a full FDD system, each of 10 subframes may be used simultaneously for DL transmission and UL transmission during a 10-ms duration. The DL transmission and the UL transmission are distinguished by frequency. On the other hand, a UE cannot perform transmission and reception simultaneously in a half FDD system.

The above radio frame structure is purely exemplary. Thus, the number of subframes in a radio frame, the number of slots in a subframe, and the number of OFDM symbols in a slot may be changed.

FIG. 2(b) illustrates frame structure type 2. Frame structure type 2 is applied to a Time Division Duplex (TDD) system. One radio frame is 10ms (Tf=307200·Ts) long, including two half-frames each having a length of 5ms (=153600·Ts) long. Each half-frame includes five subframes each being 1ms (=30720·Ts) long. An ith subframe includes 2ith and (2i+1)th slots each having a length of 0.5ms (Tslot=15360·Ts). Ts is a sampling time given as Ts=1/(15kHzx2048)=3.2552x10-8 (about 33ns).

A type-2 frame includes a special subframe having three fields, Downlink Pilot Time Slot (DwPTS), Guard Period (GP), and Uplink Pilot Time Slot (UpPTS). The DwPTS is used for initial cell search, synchronization, or channel estimation at a UE, and the UpPTS is used for channel estimation and UL transmission synchronization with a UE at an eNB. The GP is used to cancel UL interference between a UL and a DL, caused by the multi-path delay of a DL signal.

[Table 1] below lists special subframe configurations (DwPTS/GP/UpPTS lengths).

[Table 1]

<table>
<tr><th rowspan="3">Special subframe configuration</th><th colspan="3">Normal cyclic prefix in downlink</th><th colspan="3">Extended cyclic prefix in downlink</th></tr>
<tr><th rowspan="2">DwPTS</th><th colspan="2">UpPTS</th><th rowspan="2">DwPTS</th><th colspan="2">UpPTS</th></tr>
<tr><th>Normal cyclic prefix in uplink</th><th>Extended cyclic prefix in uplink</th><th>Normal cyclic prefix in uplink</th><th>Extended cyclic prefix in uplink</th></tr>
<tr><td>0</td><td>$6592 \cdot T_s$</td><td rowspan="5">$2192 \cdot T_S$</td><td rowspan="5">$2560 \cdot T_S$</td><td>$7680 \cdot T_s$</td><td rowspan="4">$2192 \cdot T_S$</td><td rowspan="4">$2560 \cdot T_S$</td></tr>
<tr><td>1</td><td>$19760 \cdot T_s$</td><td>$20480 \cdot T_s$</td></tr>
<tr><td>2</td><td>$21952 \cdot T_s$</td><td>$23040 \cdot T_s$</td></tr>
<tr><td>3</td><td>$24144 \cdot T_s$</td><td>$25600 \cdot T_s$</td></tr>
<tr><td>4</td><td>$26336 \cdot T_s$</td><td>$7680 \cdot T_s$</td><td rowspan="3">$4384 \cdot T_S$</td><td rowspan="3">$5120 \cdot T_S$</td></tr>
<tr><td>5</td><td>$6592 \cdot T_s$</td><td rowspan="4">$4384 \cdot T_S$</td><td rowspan="4">$5120 \cdot T_S$</td><td>$20480 \cdot T_s$</td></tr>
<tr><td>6</td><td>$19760 \cdot T_s$</td><td>$23040 \cdot T_s$</td></tr>
<tr><td>7</td><td>$21952 \cdot T_s$</td><td>-</td><td>-</td><td>-</td></tr>
<tr><td>a</td><td>$24144 \cdot T_s$</td><td>-</td><td>-</td><td>-</td></tr>
</table>

In addition, in the LTE Rel-13 system, it is possible to newly configure the configuration of special subframes (i.e., the lengths of DwPTS/GP/UpPTS) by considering the number of additional SC-FDMA symbols, X, which is provided by the higher layer parameter named "srs-UpPtsAdd" (if this parameter is not configured, X is set to 0). In the LTE Rel-14 system, specific subframe configuration #10 is newly added. The UE is not expected to be configured with 2 additional UpPTS SC-FDMA symbols for special subframe configurations {3, 4, 7, 8} for normal cyclic prefix in downlink and special subframe configurations {2, 3, 5, 6} for extended cyclic prefix in downlink and 4 additional UpPTS SC-FDMA symbols for special subframe configurations {1, 2, 3, 4, 6, 7, 8} for normal cyclic prefix in downlink and special subframe configurations {1, 2, 3, 5, 6} for extended cyclic prefix in downlink.)

[Table 2]

<table>
<tr><th rowspan="3">Special subframe configuration</th><th colspan="3">Normal cyclic prefix in downlink</th><th colspan="3">Extended cyclic prefix in downlink</th></tr>
<tr><th>DwPTS</th><th colspan="2">UpPTS</th><th>DwPTS</th><th colspan="2">UpPTS</th></tr>
<tr><th></th><th>Normal cyclic prefix in uplink</th><th>Extended cyclic prefix in uplink</th><th></th><th>Normal cyclic prefix in uplink</th><th>Extended cyclic prefix in uplink</th></tr>
<tr><td>0</td><td>$6592\cdot T_s$</td><td rowspan="5">$(1+X)\cdot 2192\cdot T_s$</td><td rowspan="5">$(1+X)\cdot 2560\cdot T_s$</td><td>$7680\cdot T_s$</td><td rowspan="4">$(1+X)\cdot 2192\cdot T_s$</td><td rowspan="4">$(1+X)\cdot 2560\cdot T_s$</td></tr>
<tr><td>1</td><td>$19760\cdot T_s$</td><td>$20480\cdot T_s$</td></tr>
<tr><td>2</td><td>$21952\cdot T_s$</td><td>$23040\cdot T_s$</td></tr>
<tr><td>3</td><td>$24144\cdot T_s$</td><td>$25600\cdot T_s$</td></tr>
<tr><td>4</td><td>$26336\cdot T_s$</td><td>$7680\cdot T_s$</td><td rowspan="4">$(2+X)\cdot 2192\cdot T_s$</td><td rowspan="4">$(2+X)\cdot 2560\cdot T_s$</td></tr>
<tr><td>5</td><td>$6592\cdot T_s$</td><td rowspan="5">$(2+X)\cdot 2192\cdot T_s$</td><td rowspan="5">$(2+X)\cdot 2560\cdot T_s$</td><td>$20480\cdot T_s$</td></tr>
<tr><td>6</td><td>$19760\cdot T_s$</td><td>$23040\cdot T_s$</td></tr>
<tr><td>7</td><td>$21952\cdot T_s$</td><td>$12800\cdot T_s$</td></tr>
<tr><td>8</td><td>$24144\cdot T_s$</td><td>-</td><td>-</td><td>-</td></tr>
<tr><td>9</td><td>$13168\cdot T_s$</td><td>-</td><td>-</td><td>-</td></tr>
<tr><td>10</td><td>$13168\cdot T_s$</td><td>$13152\cdot T_s$</td><td>$12800\cdot T_s$</td><td>-</td><td>-</td><td>-</td></tr>
</table>

FIG. 3 illustrates an exemplary structure of a DL resource grid for the duration of one DL slot, which may be used in examples of the present disclosure.

Referring to FIG. 3, a DL slot includes a plurality of OFDM symbols in the time domain. One DL slot includes 7 OFDM symbols in the time domain and an RB includes 12 subcarriers in the frequency domain, to which the present disclosure is not limited.

Each element of the resource grid is referred to as a Resource Element (RE). An RB includes 12x7 REs. The number of RBs in a DL slot, NDL depends on a DL transmission bandwidth.

FIG. 4 illustrates a structure of a UL subframe which may be used in examples of the present disclosure.

Referring to FIG. 4, a UL subframe may be divided into a control region and a data region in the frequency domain. A PUCCH carrying UCI is allocated to the control region and a PUSCH carrying user data is allocated to the data region. To maintain a single carrier property, a UE does not transmit a PUCCH and a PUSCH simultaneously. A pair of RBs in a subframe are allocated to a PUCCH for a UE. The RBs of the RB pair occupy different subcarriers in two slots. Thus it is said that the RB pair frequency-hops over a slot boundary.

FIG. 5 illustrates a structure of a DL subframe that may be used in examplesof the present disclosure.

Referring to FIG. 5, up to three OFDM symbols of a DL subframe, starting from OFDM symbol 0 are used as a control region to which control channels are allocated and the other OFDM symbols of the DL subframe are used as a data region to which a PDSCH is allocated. DL control channels defined for the 3GPP LTE system include a Physical Control Format Indicator Channel (PCFICH), a PDCCH, and a Physical Hybrid ARQ Indicator Channel (PHICH).

The PCFICH is transmitted in the first OFDM symbol of a subframe, carrying information about the number of OFDM symbols used for transmission of control channels (i.e. the size of the control region) in the subframe. The PHICH is a response channel to a UL transmission, delivering an HARQ ACK/NACK signal. Control information carried on the PDCCH is called Downlink Control Information (DCI). The DCI transports UL resource assignment information, DL resource assignment information, or UL Transmission (Tx) power control commands for a UE group.

## 2. New Radio Access Technology System

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has also been required. Moreover, a communication system design capable of supporting services/UEs sensitive to reliability and latency has been proposed.

As the new RAT considering the enhanced mobile broadband communication, massive MTC, Ultra-reliable and low latency communication (URLLC), and the like, a new RAT system has been proposed. In the present invention, the corresponding technology is referred to as the new RAT or new radio (NR) for convenience of description.

### 2.1. Numerologies

The NR system to which the present invention is applicable supports various OFDM numerologies shown in the following table. In this case, the value of $\mu$ and cyclic prefix information per carrier bandwidth part can be signaled in DL and UL, respectively. For example, the value of $\mu$ and cyclic prefix information per downlink carrier bandwidth part may be signaled though DL-BWP-mu and DL-MWP-cp corresponding to higher layer signaling. As another example, the value of $\mu$ and cyclic prefix information per uplink carrier bandwidth part may be signaled though UL-BWP-mu and UL-MWP-cp corresponding to higher layer signaling.

[Table 3]

| $\mu$ | $\Delta f = 2^{\mu} \cdot 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

### 2.2 Frame Structure

DL and UL transmission are configured with frames with a length of 10 ms. Each frame may be composed of ten subframes, each having a length of 1 ms. In this case, the number of consecutive OFDM symbols in each subframe is $N_{\text{symb}}^{\text{subframe},\mu} = N_{\text{symb}}^{\text{slot}} N_{\text{slot}}^{\text{subframe},\mu}$.

In addition, each subframe may be composed of two half-frames with the same size. In this case, the two half-frames are composed of subframes 0 to 4 and subframes 5 to 9, respectively.

Regarding the subcarrier spacing $\mu$, slots may be numbered within one subframe in ascending order like $n_{\text{s}}^{\mu} \in \{0,\ldots, N_{\text{slot}}^{\text{subframe},\mu} - 1\}$ and may also be numbered within a frame in ascending order like $n_{\text{s,f}}^{\mu} \in \{0,\ldots, N_{\text{slot}}^{\text{frame},\mu} - 1\}$. In this case, the number of consecutive OFDM symbols in one slot ($N_{\text{symb}}^{\text{slot}}$) may be determined as shown in the following table according to the cyclic prefix. The start slot ($n_{\text{s}}^{\mu}$) of one subframe is aligned with the start OFDM symbol ($n_{\text{s}}^{\mu} N_{\text{symb}}^{\text{slot}}$) of the same subframe in the time dimension. Table 4 shows the number of OFDM symbols in each slot/frame/subframe in the case of the normal cyclic prefix, and Table 5 shows the number of OFDM symbols in each slot/frame/subframe in the case of the extended cyclic prefix.

[Table 4]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 5]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In the NR system to which the present invention can be applied, a self-contained slot structure can be applied based on the above-described slot structure.

FIG. 6 is a diagram illustrating a self-contained slot structure applicable to the present invention.

In FIG. 6, the hatched area (e.g., symbol index = 0) indicates a downlink control region, and the black area (e.g., symbol index = 13) indicates an uplink control region. The remaining area (e.g., symbol index = 1 to 13) can be used for DL or UL data transmission.

Based on this structure, the eNB and UE can sequentially perform DL transmission and UL transmission in one slot. That is, the eNB and UE can transmit and receive not only DL data but also UL ACK/NACK in response to the DL data in one slot. Consequently, due to such a structure, it is possible to reduce a time required until data retransmission in case a data transmission error occurs, thereby minimizing the latency of the final data transmission.

In this self-contained slot structure, a predetermined length of a time gap is required for the process of allowing the eNB and UE to switch from transmission mode to reception mode and vice versa. To this end, in the self-contained slot structure, some OFDM symbols at the time of switching from DL to UL are set as a guard period (GP).

Although it is described that the self-contained slot structure includes both the DL and UL control regions, these control regions can be selectively included in the self-contained slot structure. In other words, the self-contained slot structure according to the present invention may include either the DL control region or the UL control region as well as both the DL and UL control regions as shown in FIG. 6.

In addition, for example, the slot may have various slot formats. In this case, OFDM symbols in each slot can be divided into downlink symbols (denoted by 'D'), flexible symbols (denoted by 'X'), and uplink symbols (denoted by 'U').

Thus, the UE can assume that DL transmission occurs only in symbols denoted by 'D' and 'X' in the DL slot. Similarly, the UE can assume that UL transmission occurs only in symbols denoted by 'U' and 'X' in the UL slot.

### 2.3. Analog Beamforming

In a millimeter wave (mmW) system, since a wavelength is short, a plurality of antenna elements can be installed in the same area. That is, considering that the wavelength at 30 GHz band is 1 cm, a total of 100 antenna elements can be installed in a 5 * 5 cm panel at intervals of 0.5 lambda (wavelength) in the case of a 2-dimensional array. Therefore, in the mmW system, it is possible to improve the coverage or throughput by increasing the beamforming (BF) gain using multiple antenna elements.

In this case, each antenna element can include a transceiver unit (TXRU) to enable adjustment of transmit power and phase per antenna element. By doing so, each antenna element can perform independent beamforming per frequency resource.

However, installing TXRUs in all of the about 100 antenna elements is less feasible in terms of cost. Therefore, a method of mapping a plurality of antenna elements to one TXRU and adjusting the direction of a beam using an analog phase shifter has been considered. However, this method is disadvantageous in that frequency selective beamforming is impossible because only one beam direction is generated over the full band.

To solve this problem, as an intermediate form of digital BF and analog BF, hybrid BF with B TXRUs that are fewer than Q antenna elements can be considered. In the case of the hybrid BF, the number of beam directions that can be transmitted at the same time is limited to B or less, which depends on how B TXRUs and Q antenna elements are connected.

FIGs. 7 and 8 are diagrams illustrating representative methods for connecting TXRUs to antenna elements. Here, the TXRU virtualization model represents the relationship between TXRU output signals and antenna element output signals.

FIG. 7 shows a method for connecting TXRUs to sub-arrays. In FIG. 7, one antenna element is connected to one TXRU.

Meanwhile, FIG. 8 shows a method for connecting all TXRUs to all antenna elements. In FIG. 8, all antenna element are connected to all TXRUs. In this case, separate addition units are required to connect all antenna elements to all TXRUs as shown in FIG. 8.

In FIGs. 7 and 8, W indicates a phase vector weighted by an analog phase shifter. That is, W is a major parameter determining the direction of the analog beamforming. In this case, the mapping relationship between CSI-RS antenna ports and TXRUs may be 1:1 or 1-to-many.

The configuration shown in FIG. 7 has a disadvantage in that it is difficult to achieve beamforming focusing but has an advantage in that all antennas can be configured at low cost.

On the contrary, the configuration shown in FIG. 8 is advantageous in that beamforming focusing can be easily achieved. However, since all antenna elements are connected to the TXRU, it has a disadvantage of high cost.

When a plurality of antennas are used in the NR system to which the present invention is applicable, the hybrid beamforming method obtained by combining the digital beamforming and analog beamforming can be applied. In this case, the analog (or radio frequency (RF)) beamforming means the operation where precoding (or combining) is performed at the RF end. In the case of the hybrid beamforming, precoding (or combining) is performed at the baseband end and RF end, respectively. Thus, the hybrid beamforming is advantageous in that it guarantees the performance similar to the digital beamforming while reducing the number of RF chains and D/A (digital-to-analog) (or A/D (analog-to-digital) z converters.

For convenience of description, the hybrid beamforming structure can be represented by N transceiver units (TXRUs) and M physical antennas. In this case, the digital beamforming for L data layers to be transmitted by the transmitting end may be represented by the N * L (N by L) matrix. Thereafter, N converted digital signals are converted into analog signals by the TXRUs, and then the analog beamforming, which may be represented by the M * N (M by N) matrix, is applied to the converted signals.

FIG. 9 is a schematic diagram illustrating a hybrid beamforming structure according to an example of the present invention from the perspective of TXRUs and physical antennas. In FIG. 9, it is assumed that the number of digital beams is L and the number of analog beams is N.

Additionally, a method for providing efficient beamforming to UEs located in a specific area by designing an eNB capable of changing analog beamforming on a symbol basis has been considered in the NR system to which the present invention is applicable. Further, a method of introducing a plurality of antenna panels where independent hybrid beamforming can be applied by defining N TXRUs and M RF antennas as one antenna panel has also been considered in the NR system to which the present invention is applicable.

When the eNB uses a plurality of analog beams as described above, each UE has a different analog beam suitable for signal reception. Thus, the beam sweeping operation where the eNB applies a different analog beam per symbol in a specific subframe (SF) (at least with respect to synchronization signals, system information, paging, etc.) and then perform signal transmission in order to allow all UEs to have reception opportunities has been considered in the NR system to which the present invention is applicable.

FIG. 10 is a diagram schematically illustrating the beam sweeping operation for synchronization signals and system information during a downlink (DL) transmission process according to an example of the present invention

In FIG. 10, a physical resource (or channel) for transmitting system information of the NR system to which the present invention is applicable in a broadcasting manner is referred to as a physical broadcast channel (xPBCH). In this case, analog beams belonging to different antenna panels can be simultaneously transmitted in one symbol.

In addition, the introduction of a beam reference signal (BRS) corresponding to the reference signal (RS) to which a single analog beam (corresponding to a specific antenna panel) is applied has been discussed as the configuration for measuring a channel per analog beam in the NR system to which the present invention is applicable. The BRS can be defined for a plurality of antenna ports, and each BRS antenna port may correspond to a single analog beam. In this case, unlike the BRS, all analog beams in the analog beam group can be applied to the synchronization signal or xPBCH unlike the BRS to assist a random UE to correctly receive the synchronization signal or xPBCH.

### 2.4. Bandwidth part (BWP)

In an NR system to which the present invention is applicable, a bandwidth of a maximum 400 MHz may be supported per component carrier (CC).

If a specific UE operates in this wideband CC and always operates in a state that RF module for all CCs is powered on, UE battery consumption of the specific UE may be increased.

Otherwise, in the NR system to which the present invention is applicable, if various use cases (e.g., eMBB (enhanced Mobile BroadBand), URLLC (Ultra Reliability Low Latency Communication), mMTC (massive Machine Type Communication), etc.) can be supported within one wideband CC, the NR system may support different numerologies (e.g., sub-carrier spacing) per frequency band within the corresponding CC.

Otherwise, UEs operating in the NR system to which the present invention may have different capabilities for a maximum bandwidth per UE.

Considering the various cases as above, a BS of the NR system may indicate, to a UE, an operation within a partial bandwidth not a full bandwidth of the wideband CC. At this time, for convenience of description, the partial bandwidth will be referred to as a bandwidth part (BWP). In this case, the BWP may include continuous resource blocks (RBs) on a frequency axis and correspond to one numerology (e.g., sub-carrier spacing, CP (Cyclic Prefix) length, slot/mini-slot duration, etc.).

Meanwhile, the BS may configure a plurality of BWPs within one CC configured for the UE.

For example, the BS may configure a first BWP that reserves a relatively small frequency domain for a PDCCH monitoring slot. At this time, PDSCH indicated by PDCCH may be scheduled on a second BWP greater than the first BWP.

Otherwise, if a plurality of UEs are condensed on a specific BWP, the BS may configure a different BWP for some UEs for load balancing.

Otherwise, considering frequency domain inter-cell interference cancellation, the BS may configure both BWPs except some spectrums in the middle of a full bandwidth within the same slot.

Therefore, the BS may configure at least one DL/LTL BWP for a UE associated with the wideband CC, and may activate at least one of DL/LTL BWPs configured at a specific time (through first layer signaling (L1 signaling) or MAC (Medium Access Control) CE (Control Element) or RRC (Radio Resource Control) signaling, etc.). At this time, the activated DL/LTL BWP may be defined as an active DL/LTL BWP.

Also, if the UE is in an initial access process, or before RRC connection is configured, the UE may fail to receive a configuration for a DL/LTL BWP from the BS. In this case, the UE may assume a default DL/LTL BWP. At this time, the DL/LTL BWP assumed by the UE in the above status may be defined as an initial active DL/LTL BWP.

### 2.5. DCI format in NR system

The NR system to which the present invention is applicable may support the following DCI formats. First of all, the NR system may support DCI format 0_0 and DCI format 0_1 as DCI formats for PUSCH scheduling, and may support DCI format 1_0 and DCI format 1_1 as DCI formats for PDSCH scheduling. Also, as DCI formats available for the other purposes, the NR system may additionally support DCI format 2_0, DCI format 2_1, DCI format 2_2, and DCI format 2_3.

In this case, the DCI format 0_0 may be used for scheduling of TB (Transmission Block) based (or TB-level) PUSCH, and the DCI format 0_1 may be used for scheduling of TB (Transmission Block) based (or TB-level) PUSCH or (if CBG (Code Block Group) based signal transmission and reception is configured) CBG based (or CBG-level) PUSCH.

Also, the DCI format 1_0 may be used for scheduling of TB based (or TB-level) PDSCH, and the DCI format 1_1 may be used for scheduling of TB based (or TB-level) PDSCH or (if CBG based signal transmission and reception is configured) CBG based (or CBG-level) PDSCH.

Also, the DCI format 2_0 may be used for notifying the slot format, the DCI format 2_1 may be used for notifying the PRB(s) and OFDM symbol(s) where UE may assume no transmission intended for the UE, the DCI format 2_2 may be used for transmission of a TPC (Transmission Power Control) command of PUCCH and PUSCH, and the DCI format 2_3 may be used for the transmission of a group of TPC commands for SRS transmissions by one or more UEs.

Detailed features of the DCI formats may be supported by 3GPP TS 38.212 document. That is, apparent steps or portions, which are not described, among DCI format related features may be described with reference to the above document. All terminologies disclosed herein may be described by the above standard document.

## 3. Proposed Embodiment

Hereinafter, the configuration proposed in the present invention will be described in more detail.

Specifically, in the present invention, a method for transmitting or receiving HARQ-ACK in the NR system to which the present invention is applicable will be described in details.

In case of the LTE system, if a size of DL data (that is, TB (Transmission Block) size) is a certain level or more, bit streams to be transmitted through PDSCH are divided into code blocks (CBs). Afterwards, channel coding is applied to each CB, and CRC is individually applied and thus transmitted through the PDSCH.

Therefore, if the UE fails in reception decoding for one of a plurality of CBs included in one PDSCH, the UE reports HARQ-ACK feedback corresponding to the corresponding PDSCH to the BS as NACK. In response to this HARQ-ACK feedback, the BS may retransmit all CBs to the UE.

In other words, HARQ operation for DL data in the LTE system is performed based on scheduling/transmission of the BS in a unit of TB and HARQ-ACK feedback configuration of the UE in a unit of TB in response to the scheduling/transmission of the BS.

On the other hand, the NR system to which the present invention is applicable may basically have a system BW wider than that of the LTE system. For this reason, a (maximum) TB size supported in the NR system may be greater than a TB size supported in the legacy LTE system, whereby the number of CBs constituting one TB may be more than that of CBs in the LTE system.

Therefore, if HARQ-ACK feedback of a TB unit is applied to the NR system having the aforementioned features like the LTE system, retransmission scheduling of a TB unit should be accompanied even in the case that a decoding error (that is, NACK) occurs for partial CBs, whereby resources usage efficiency may be deteriorated.

Also, the NR system to which the present invention is applicable may support an operation of delay-sensitive second type data (e.g., URLLC) transmitted at a short time duration (TTI (transmission Time Interval)) through some resources (symbols) allocated for transmission of delay-insensitive first type data (e.g., eMBB) at a long time duration. Therefore, a decoding error may be concentrated on a specific part of a plurality of CBs constituting one TB for the first type data due to an influence of an interference signal having time-selective property including the above case.

Therefore, considering operation features of the NR system having the above features, a method for performing (retransmission) scheduling in a unit of CB or CB group (CBG) and configuring/transmitting HARQ-ACK feedback in a unit of CB/CBG by a BS and a UE will be described in detail in the present invention.

For example, it is assumed that corresponding HARQ-ACK transmission timing from one DL data is determined as one of some values of previously configured set and the one value is dynamically indicated through DL assignment. In this case, HARQ-ACK information transmitted within a specific slot may correspond to DL data transmitted at one or more slots.

FIG. 11 is a diagram simply illustrating that DL data transmitted at one slot may correspond to 4 HARQ timings in accordance with an example of the present invention.

As shown in FIG. 11, if four HARQ timings are previously set by higher layer signaling, HARQ-ACK transmission timing corresponding to DL data transmitted at slot#T may dynamically be indicated as one of slot#T+6, slot#T+7, slot#T+8, and slot#T+9. Therefore, HARQ-ACK corresponding to a plurality of DL data may be transmitted within one slot. For example, HARQ-ACK information corresponding to DL data of slot#T and/or slot#T+1 and/or slot#T+2 and/or slot#T+3 may be transmitted at slot#T+9. Hereinafter, a method for transmitting or receiving HARQ-ACK in the above case will be described in detail.

FIG. 12 is a diagram simply illustrating that HARQ-ACK information on one or more CCs is transmitted at a specific slot within a specific CC in a carrier aggregation (CA) system in accordance with another example of the present invention. Hereinafter, a method for transmitting or receiving HARQ-ACK in the case shown in FIG. 12 will be described in detail.

FIGs. 13 and 14 are diagrams simply illustrating a method for transmitting or receiving HARQ-ACK when numerologies or TTIs are different between CCs. Hereinafter, a method for transmitting or receiving HARQ-ACK when numerologies (e.g., sub-carrier spacing) or TTIs (transmit time intervals) are different between CCs will be described in detail.

In this case, FIG. 13 illustrates that HARQ-ACK is transmitted on CC#2 to which TTI or slot duration longer than CC#1 is supported when TTI or slot duration of DL data received at CC#1 is relatively shorter than CC#2. On the contrary to the case of FIG. 13, FIG. 14 illustrates that HARQ-ACK is transmitted on CC#1 to which TTI or slot duration shorter than CC#2 is supported when TTI or slot duration of DL data received at CC#2 is relatively longer than CC#1.

Additionally, in configuring an HARQ-ACK codebook, in the LTE system, a size of the codebook may previously be configured by higher layer signaling (e.g., RRC signaling), and a semi-static codebook method for fixing a codebook size based on the number of CCs configured regardless of actually scheduled CCs (and subframe index) and a dynamic codebook method for adaptively changing a codebook size by indicating HARQ-ACK transmission for actually scheduled CCs (and subframe index) to increase efficiency of HARQ-ACK transmission are supported. At this time, according to the dynamic codebook method, the BS may notify the UE of the order of currently scheduled DL data (that is, counter-DAI (downlink assignment indicator), for convenience, referred to as C-DAI) and a total size of HARQ-ACK payload (that is, total-DAI, for convenience, referred to as T-DAI) which will be transmitted, by signaling a DAI value within DL assignment for scheduling DL data. As a result, a mismatch in HARQ-ACK payload recognition between the UE and the BS, which occurs as the UE misses DCI, may be reduced. At this time, whether to use which one of the semi-static codebook method and the dynamic codebook method may previously be configured by higher layer signaling (e.g., RRC signaling).

Hereinafter, the method for transmitting or receiving HARQ-ACK in various cases (e.g., single CC or a plurality of CCs having the same TTI/slot duration, or a plurality of CCs having different TTI/slot durations, etc.) described as above will be described in detail in the present invention.

At this time, for convenience of description, although the method for transmitting or receiving HARQ-ACK as proposed in the present invention will be described based on the semi-static codebook or the dynamic codebook, it does not mean that the configuration proposed in the present invention is limited to the specific codebook method. In other words, if the configuration proposed in the present invention is applicable to a second codebook method even though the configuration has been described in a sub-section of a first codebook method, the corresponding configuration may be construed as the example to which the second codebook method is applied.

Hereinafter, a technical configuration proposed in the present invention will be described in detail based on the above premise.

**3.1. Case of single CC for which CBG transmission is configured (e.g., FIG. 11)**

3.1.1. Semi-static codebook

3.1.1.1. HARQ-ACK multiplexing per TB (or slot)

The UE may transmit HARQ-ACK through different PUCCHs different per TB (or slot). At this time, HARQ-ACK payload size per PUCCH may correspond to a total number of CBGs configured for the corresponding TB or the number of (re)transmitted CBGs. Also, the different PUCCHs may mean PUCCHs transmitted on different slots or different PUCCH resources (e.g., PUCCH on different time/frequency code domain resource regions within the same slot). For example, transmission of different PUCCH resources within the same slot may mean a plurality of 1-symbol PUCCHs transmitted at different symbols or a plurality of 2-symbol PUCCHs transmitted at different symbols.

3.1.1.2. HARQ-ACK multiplexing per bundling window (BW) (or partial subset of BW)

For convenience of description, if a plurality of N slots linked to one HARQ-ACK timing exist, the N slots are defined as a bundling window (BW) hereinafter.

In this case, the UE may transmit HARQ-ACK through different PUCCHs different per BW (or partial subset of BW). At this time, HARQ-ACK payload size per PUCCH may correspond to a value obtained by multiplying the number of slots (or TBs) included in the corresponding BW (or partial subset of BW) by the number of CBGs configured for the corresponding TB. Also, the different PUCCHs may mean PUCCHs transmitted on different slots or different PUCCH resources (e.g., PUCCH on different time/frequency code domain resource regions within the same slot). For example, transmission of different PUCCH resources within the same slot may mean a plurality of 1-symbol PUCCHs transmitted at different symbols or a plurality of 2-symbol PUCCHs transmitted at different symbols.

FIG. 15 is a diagram illustrating an example that some of slots within one BW are used for UL in accordance with the present invention.

According to a method for transmitting HARQ-ACK by using a partial subset of a BW, HARQ-ACK payload may be dispersed per PUCCH. For example, as shown in FIG. 15, some slots within the BW may be used for UL.

As a detailed example, if the BS may indicate one value of +6/+7/+8/+9 as a timing of a slot at which HARQ-ACK is transmitted, through DL assignment, the BW corresponding to slot#T+9 may be four slots of slot#T/T+1/T+2/T+3. At this time, if the BW is divided into two and only HARQ-ACK corresponding to slot#T and slot#T+1 is transmitted at slot#T+9 and slot#T+2 and slot#T+3 are used for UL, the HARQ-ACK payload size transmitted at slot#T+9 may be reduced. This configuration may be configured by the BS.

If HARQ-ACK is transmitted through different PUCCHs per BW (or partial subset of BW) in FIG. 11, the BW corresponding to slot#T+9 may be slot#T - slot#T+3, and the BW corresponding to slot#T+10 may be slot#T+1 ~ slot#T+4. At this time, if PUCCH is transmitted at both slot#T+9 and slot#T+10, slot#T+1 ~ slot#T+3 may be overlapped on the BW corresponding to both slots.

If HARQ-ACK information on the slots overlapped between the BW is not transmitted initially, the HARQ-ACK information may be configured such that it is subjected to DTX (discontinuous transmission) or repeatedly transmitted from all PUCCHs. For example, if PUCCH initially including HARQ-ACK information on slot#T-slot#T+3 is transmitted at slot#T+9, the UE may transmit actual HARQ-ACK information on slot#T-slot#T+3 at slot#T+9. Subsequently, the UE may process HARQ-ACK information on slot#T+1~slot#T+3 to be subjected to DTX (or NACK) at slot#T+10 and transmit only HARQ-ACK information on slot#T+4, or may transmit HARQ-ACK information including HARQ-ACK information on all of slot#T+1~slot#T+4 through PUCCH.

In the present invention, if a semi-static codebook is configured by a partial subset of the BW, a rule as to whether the UE should configure a codebook for a corresponding subset through an allocated PUCCH resource may previously be configured. In other words, if a maximum payload (e.g., X bits) supportable for a specific PUCCH resource is determined, and if the corresponding PUCCH resource is allocated, the UE may configure a semi-static codebook for only specific slots within the BW (by a rule which is previously defined).

The above method may easily be applied to a case of a plurality of CCs. For example, if a maximum payload (e.g., X bits) supportable for a specific PUCCH resource is determined, and if the corresponding PUCCH resource is allocated, the UE may configure a semi-static codebook for only a combination of a specific CC and specific slots within the BW (by a rule which is previously defined).

3.1.1.3. Switching of HARQ-ACK multiplexing per TB (or slot) and HARQ-ACK multiplexing per bundling window (BW)

The BS may configure, for the UE, one of HARQ-ACK multiplexing per TB (or slot) of the aforementioned section 3.1.1.1 and HARQ-ACK multiplexing per bundling window (BW) of the aforementioned section 3.1.1.1. That is, the BS may switch HARQ-ACK multiplexing per TB (or slot) of the section 3.1.1.1 and HARQ-ACK multiplexing per bundling window (BW) of the section 3.1.1.1 through configuration. For example, the BS may dynamically indicate, to the UE, whether to apply which one of the two methods, through DL assignment.

3.1.1.4. Configuration of CBG-level signal transmission and reception + TB-level signal scheduling

If a specific status (e.g., status that a problem in data transmission and reception is recognized) occurs, the BS may attempt DL data transmission by performing fallback based on TB even though CBG has been configured. To this end, as an example, the BS may notify the UE of fallback based on TB by transmitting DL assignment through a common search space.

At this time, HARQ-ACK corresponding to TB based DL data may generally have a 1-bit size per TB. Particularly, if HARQ-ACK is multiplexed, since a mismatch for HARQ-ACK payload may occur, TB based HARQ-ACK according to the present invention may be configured as much as the number of CBGs which are previously configured.

In more detail, the UE may carry HARQ-ACK information of TB based DL data in only HARQ-ACK, which corresponds to a specific one CBG index (e.g., first one), among HARQ-ACKs equivalent to the number of CBGs and include the other HARQ-ACKs as NACK (or DTX), or may repeatedly transmit HARQ-ACK information of TB based DL data through HARQ-ACK corresponding to all CBG indexes.

3.1.2. Dynamic codebook

3.1.2.1. TB-level C-DAI + TB-level T-DAI

FIG. 16 is a diagram illustrating a method for transmitting or receiving HARQ-ACK based on (TB-level) C-DAI and T-DAI of a TB unit in accordance with an example of the present invention.

As shown in FIG. 16, if the BW corresponding to slot#T+9 is slot#T/T+1/T+2/T+3, the BS may signal C-DAI and T-DAI, which indicate the number of TBs, through DL assignment of actually scheduled slot#T/T+1/T+3. At this time, a size of HARQ-ACK payload to be transmitted by the LTE at slot#T+9 may be determined by multiplication of the number of CBGs which are previously configured and the number of TBs lastly received by the UE within the BW and signaled from T-DAI on DL assignment. That is, if the number of CBGs which are previously configured is 4 in FIG. 16, a size of HARQ-ACK to be transmitted on slot#T+9 may be 12 bits.

The above method may be applied to even a case of 2 TBs per PDSCH. Therefore, when maximum 2 TBs are able to be transmitted per PDSCH, C-DAI and T-DAI may be used as means for counting the number of actually scheduled TBs. Alternatively, the above method may be applied to slot-level (or PDSCH-level) C-DAI + slot-level (or PDSCH-level) T-DAI not TB-level. At this time, C-DAI and T-DAI may be used as counting means of a slot unit (or PDSCH unit) without identifying 1 TB or 2 TBs per PDSCH.

If a specific status (e.g., status that a problem in data transmission and reception is recognized) occurs, the BS may attempt DL data transmission by performing fallback based on TB even though CBG has been configured. To this end, as an example, the BS may notify the UE of fallback based on TB by transmitting DL assignment through a common search space.

At this time, HARQ-ACK corresponding to TB based DL data may generally have a 1-bit size per TB. However, if HARQ-ACK is multiplexed as shown in FIG. 16, since a mismatch for HARQ-ACK payload may occur, TB based HARQ-ACK according to the present invention may be configured as much as the number of CBGs which are previously configured.

In more detail, the UE may carry HARQ-ACK information of TB based DL data in only HARQ-ACK, which corresponds to a specific one CBG index (e.g., first one), among HARQ-ACKs equivalent to the number of CBGs and include the other HARQ-ACKs as NACK (or DTX), or may repeatedly transmit HARQ-ACK information of TB based DL data through HARQ-ACK corresponding to all CBG indexes.

3.1.2.2. CBG-level C-DAI + CBG-level T-DAI

FIG. 17 is a diagram simply illustrating a method for transmitting or receiving HARQ-ACK based on (CBG-level) C-DAI and T-DAI of a CBG unit in accordance with an example of the present invention.

As shown in FIG. 17, if the BW corresponding to slot#T+9 is slot#T/T+1/T+2/T+3, the BS may signal C-DAI and T-DAI, which indicate the number of CBGs, through DL assignment of actually scheduled slot#T/T+1/T+3. At this time, a size of HARQ-ACK payload to be transmitted by the UE at slot#T+9 may be determined by the number of CBGs lastly received by the UE within the BW and signaled from T-DAI on DL assignment. That is, since a T-DAI value received at slot#T+3 is 12 in FIG. 17, a size of HARQ-ACK payload to be transmitted at slot#T+9 may be 12 bits.

In signaling C-DAI and T-DAI values, the BS may always assume the C-DAI and T-DAI values as the number of CBGs which are previously configured (Opt 1), or may configure C-DAI and T-DAI values based on the number of CBGs actually (re)transmitted per TB (or per slot) (Opt 2). For example, according to Opt 2, if the number of CBGs actually (re)transmitted by the BS at slot#T+1 is 2, all T-DAI values signaled by the BS may be set to 10, C-DAI signaled on slot#T+1 may be set to 6, and C-DAI signaled on slot#T+3 may be set to 10.

Also, if a specific status occurs, the BS may attempt DL data transmission by performing fallback based on TB even though CBG based signal transmission has been configured.

In this case, in signaling C-DAI and T-DAI values, the BS may signal the C-DAI and T-DAI values always assumed as the number of CBGs which are previously configured. Therefore, the UE may carry HARQ-ACK information of TB based DL data in only HARQ-ACK, which corresponds to a specific one CBG index (e.g., first one), among HARQ-ACKs equivalent to the number of CBGs and include the other HARQ-ACKs as NACK (or DTX), or may repeatedly transmit HARQ-ACK information of TB based DL data through HARQ-ACK corresponding to all CBG indexes.

Alternatively, if C-DAI and T-DAI values are configured based on the number of actually scheduled CBGs in the same manner as the aforementioned Opt 2, the BS may signal, to the UE, C-DAI and T-DAI determined by regarding DL data subjected to fallback based on TB as (re)transmission of one CBG.

3.1.2.3. TB or CBG level C-DAI with scheduling restriction

As a method for reducing HARQ-ACK payload, scheduling may be allowed for some slots not all slots within the BW, and corresponding HARQ-ACK transmission may be allowed for only some slots. At this time, HARQ-ACK payload may always be determined at a size corresponding to multiplication of the number of slots allowed within the BW and the number of CBGs which are previously configured.

In this case, the BS may notify the UE of the order of HARQ-ACK by signaling only TB-level C-DAI to the UE through DL assignment. Alternatively, the BS may notify the UE of the order of HARQ-ACK by signaling only CBG-level C-DAI to the UE through DL assignment.

Therefore, the above method may be regarded as a semi-static codebook in view of a technical aspect.

In the aforementioned method, if the BS signals only CBG-level C-DAI, the BS may always assume a CBG-level C-DAI value based on the number of CBGs which are previously configured (Opt 1), or may determine C-DAI based on the number of CBGs actually (re)transmitted per TB (or per slot) (Opt 2). Particularly, in case of Opt 2, the UE may transmit HARQ-ACK corresponding to NACK (or DTX) to CBG which is not (re)transmitted.

As described in the section 3.1.2.1, if a specific status occurs, the BS may attempt DL data transmission by performing fallback based on TB even though CBG based signal transmission has been configured.

In response to this case, the UE may carry HARQ-ACK information of TB based DL data in only HARQ-ACK, which corresponds to a specific one CBG index (e.g., first one), among HARQ-ACKs equivalent to the number of CBGs and carry NACK in the other HARQ-ACKs, or may repeatedly transmit HARQ-ACK information of TB based DL data as HARQ-ACK information corresponding to all CBG indexes.

In case of TB-level C-DAI, a bit-width of a corresponding DAI field may be set to ceiling{$\log_2$(the number of maximum slots for which scheduling is allowed within the BW)}. For example, under the assumption that the UE is not likely to miss four continuous DCI, the bit-width of the DAI field may be set to 2 bits.

In case of CBG-level C-DAI, a bit-width of a corresponding DAI field may be set to ceiling{$\log_2$(the number of maximum slots for which scheduling is allowed within the BW * the number of maximum CBGs configured for a corresponding CC)}. For example, under the assumption that the UE is not likely to miss four continuous DCI, the bit-width of the DAI field may be set to 2 bits + ceiling{$\log_2$(the number of maximum CBGs configured for the corresponding CC)}.

Alternatively, even in case of CBG-level C-DAI, the bit-width of the DAI field may be configured regardless of the number of maximum CBGs which are configured. This is because that the UE has only to transmit HARQ-ACK equivalent to the number of maximum CBGs configured for the corresponding CC per slot (or per DAI index) if HARQ-ACK payload size is always fixed to {the number of maximum slots for which scheduling is allowed within the BW * the number of maximum CBGs configured for the corresponding CC} and a corresponding slot to which DAI value corresponds is only notified.

Specifically, (regardless of CBG-level C-DAI or TB-level C-DAI), the bit-width of C-DAI may be configured as follows.

- If the number of maximum slots for which scheduling is allowed within the BW is 1: C-DAI bit-width is set to 0 bit (that is, corresponding field may not exist).
- If the number of maximum slots for which scheduling is allowed within the BW is 2: C-DAI bit-width is set to 1 bit.
- If the number of maximum slots for which scheduling is allowed within the BW is 3 or more: C-DAI bit-width is set to 2 bits.
- If the number of maximum slots for which scheduling is allowed within the BW is equal to the number of total slots within the BW: C-DAI bit-width is set to 0 bit (that is, corresponding field may not exist).

Unlike the above case, under the assumption that the UE is not likely to continuously miss N number of DCI (e.g., N=4), a bit-width of C-DAI may be set to min{$\log_2$(N), $\log_2$(the number of maximum slots for which scheduling is allowed within the BW)}. However, if the number of maximum slots for which scheduling is allowed within the BW is equal to the number of total slots within the BW, the bit-width of C-DAI may be set to 0 bit (that is, corresponding field may not exist).

Alternatively, the bit-width of C-DAI may be set to $\log_2$(the number of maximum slots for which scheduling is allowed within the BW). However, if the number of maximum slots for which scheduling is allowed within the BW is equal to the number of total slots within the BW, the bit-width of C-DAI may be set to 0 bit (that is, corresponding field may not exist).

As described above, if scheduling is allowed for only some slots, the number of slots which are allowed may be set by higher layer signaling (or L1 signaling). At this time, if the number of corresponding slots is 1, an operation for HARQ-ACK transmission and reception according to the present invention may be performed without DAI value or DCI field for signaling DAI. Also, even in the case that HARQ-ACK codebook for all slots within the BW is always configured, the operation for HARQ-ACK transmission and reception according to the present invention may be performed without DAI value or DCI field for signaling DAI.

FIG. 18 is a diagram illustrating a method for transmitting or receiving HARQ-ACK according to an example of the present invention.

For example, it is assumed that the BW corresponds to N slots but DL data scheduling is performed for maximum K (<N) slots within each BW. At this time, as shown in FIG. 18, N=4 and K=3 may be configured. In this case, it is assumed that DAI of FIG. 18 is TB level DAI.

In FIG. 18, if it is assumed that the number of maximum CBGs configured for a corresponding CC is 4, HARQ-ACK codebook may always be fixed to 12 bits.

Therefore, since the UE has received DAI values 1 and 2 but have not received DAI value 3, the UE may configure 8 bits of HARQ-ACK information on TB corresponding DAI 1/2 and process the other 4 bits to be subjected to DTX (that is, NACK transmission) in configuring HARQ-ACK codebook transmitted at slot#T+8. Also, in configuring HARQ-ACK codebook transmitted at slot#T+9, since the UE has received all of DAI values 1, 2 and 3, the UE may configure 12 bits of HARQ-ACK information on TB corresponding DAI 1/2/3.

In the method for transmitting or receiving HARQ-ACK as described in the sections 3.1.2.1 ~ 3.1.2.3, HARQ-ACK may be transmitted through one PUCCH per BW.

### 3.2. Case of a plurality of CCs having the same TTI or slot duration

#### 3.2.1. Semi-static codebook

In this section, if HARQ-ACK for a plurality of CCs is transmitted through PUCCH on a specific CC, a method for transmitting HARQ-ACK through a semi-static codebook will be described in detail.

At this time, HARQ-ACK payload size is determined by the number of configured CCs, a BW size per CC and the number of configured CBGs.

FIG. 19 is a diagram simply illustrating an operation for transmitting or receiving HARQ-ACK for a plurality of CCs on CC#1 in accordance with an example of the present invention.

In FIG. 19, it is assumed that three CCs are configured, HARQ-ACK for three CCs is transmitted through PUCCH on CC#1 and the BW is configured by two slots commonly for CC. At this time, CBG may not be configured for CC#1, 4 CBGs may be configured for CC#2, and three CBGs may be configured for CC#3. In this case, a total HARQ-ACK payload size for 1 TB transmission may be configured by 16 (= 1*2 bits for CC#1 + 4*2 bits for CC#2 + 3*2 bits for CC#3) bits.

Additionally, since the HARQ-ACK payload may considerably be increased due to the introduction of CBG, a method for adaptively reducing HARQ-ACK payload size may be introduced in spite of the method for transmitting or receiving HARQ-ACK based on the semi-static codebook.

For example, with respect to a long duration PUCCH of which the number of symbols may vary from four symbols to fourteen symbols within one slot, the HARQ-ACK payload size may be configured differently depending on the number of symbols.

As a detailed example, if the number of symbols of the long duration PUCCH is X symbols or more, the HARQ-ACK payload size may be set to P, and if the number of symbols of the long duration PUCCH is less than X symbols, the HARQ-ACK payload size may be set to P' smaller than P.

At this time, as a method for reducing the amount of HARQ-ACK information by P', a bundling method according to a predefined rule may be used. For example, gradual bundling may be applied in the order of HARQ-ACK bundling per CGB subset, followed by HARQ-ACK bundling per TB or slot, followed by HARQ-ACK bundling within CC.

If the above feature is more generalized, the HARQ-ACK payload size to be transmitted by the UE may previously be determined based on the amount of frequency/time resources allocated to PUCCH as well as the number of symbols of the PUCCH.

For example, if the number of REs (for Uplink Control Indicator (UCI)) allocated to the PUCCH is Y or more, the HARQ-ACK payload size may be set to P, and if the number of REs (for UCI) is less than Y, the HARQ-ACK payload size may be set to P' smaller than P.

The above method may equally be applied to single CC as described in the section 3.1.1. Also, the above method may equally be applied to a plurality of CCs having different slot or TTI durations as described in the section 3.1.1.

Additionally, if a specific status (e.g., status that a problem in data transmission and reception is recognized) occurs, the BS may attempt DL data transmission by performing fallback based on TB even though CBG has been configured. To this end, as an example, the BS may notify the UE of fallback based on TB by transmitting DL assignment through a common search space.

At this time, HARQ-ACK corresponding to TB based DL data may generally have a 1-bit size per TB. Particularly, if HARQ-ACK is multiplexed, since a mismatch for HARQ-ACK payload may occur, TB based HARQ-ACK according to the present invention may be configured as much as the number of CBGs which are previously configured.

In more detail, the UE may carry HARQ-ACK information of TB based DL data in only HARQ-ACK, which corresponds to a specific one CBG index (e.g., first one), among HARQ-ACKs equivalent to the number of CBGs for a plurality of CCs and include the other HARQ-ACKs as NACK (or DTX), or may repeatedly transmit HARQ-ACK information of TB based DL data through HARQ-ACK corresponding to all CBG indexes for a plurality of CCs.

### 3.2.2. Dynamic codebook

#### 3.2.2.1. TB-level C-DAI across all CCs + TB-level T-DAI across all CCs

A method for transmitting or receiving HARQ-ACK as proposed in this section is that the method for transmitting or receiving HARQ-ACK in the section 3.1.2.1 is extended and applied to a CA status.

FIG. 20 is a diagram simply illustrating a method for transmitting or receiving HARQ-ACK when 2 CCs are carrier aggregated in accordance with the present invention.

As shown in FIG. 20, if HARQ-ACK for two CCs is transmitted to CC#1, TB-level DAI may be configured for all CCs, and C-DAI may be configured within the BW by first considering (e.g., counting) carriers within a specific slot and then considering (counting) carriers within next slot.

Considering that CBG may be configured per CC, HARQ-ACK payload size to be transmitted by the UE at slot#T+9 may be determined by multiplication of a maximum value of the number of CBGs previously configured per CC and the number of TBs lastly received by the UE within the BW and signaled from T-DAI on DL assignment. That is, if CBG is not configured for CC#1 and the number of CBGs previously configured for CC#2 is 4 in FIG. 20, the HARQ-ACK payload size to be transmitted by the UE on slot#T+9 may be 24 bits (4 * T-DAI value of 6).

Also, if the method for transmitting or receiving HARQ-ACK as described in the section 3.1.2.1 is applied to a CA status and/or 2 TB per PDSCH case (in other words, if maximum 2 TBs are able to be transmitted per PDSCH), C-DAI and T-DAI may be used as means for counting the number of actually scheduled TBs.

Alternatively, the C-DAI and T-DAI may be configured as slot-level (or PDSCH-level) C-DAI + slot-level (or PDSCH-level) T-DAI not TB-level, whereby the C-DAI and T-DAI may be used as counting means of a slot (or PDSCH) without identifying 1 TB or 2 TBs per PDSCH.

If the BS attempts DL data transmission by performing fallback based on TB for CC for which CBG is configured, the method proposed in the aforementioned section 3.1.2.1 may be applied.

In other words, if a specific status (e.g., status that a problem in data transmission and reception is recognized) occurs, the BS may attempt DL data transmission by performing fallback based on TB even though CBG has been configured for a specific CC. To this end, as an example, the BS may notify the UE of fallback based on TB by transmitting DL assignment through a common search space.

In response to this case, the UE may carry HARQ-ACK information of TB based DL data for a specific CC in only HARQ-ACK, which corresponds to a specific one CBG index (e.g., first one), among HARQ-ACKs equivalent to the number of CBGs for a specific CC and carry NACK in the other HARQ-ACKs, or may repeatedly transmit HARQ-ACK information of TB based DL data for a specific CC as HARQ-ACK corresponding to all CBG indexes for a specific CC.

3.2.2.2. CBG-level C-DAI across all CCs + CBG-level T-DAI across all CCs

According to the aforementioned section 3.2.2.1, since HARQ-ACK has HARQ-ACK payload size determined based on the number of CBGs among various CCs, HARQ-ACK overhead may be increased. Therefore, in this section, a method for transmitting or receiving HARQ-ACK based on the number of CBGs configured per carrier and actually scheduled slot to reduce HARQ-ACK overhead will be described in detail.

The method described hereinafter may be similar to the method for transmitting or receiving HARQ-ACK, which is extended and applied to the CA status as described in the section 3.1.2.2.

FIG. 21 is a diagram simply illustrating a method for transmitting or receiving HARQ-ACK when 2 CCs are carrier aggregated in accordance with the present invention.

As shown in FIG. 21, if HARQ-ACK for two CCs is transmitted to CC#1, it is assumed that CBG is not configured for CC#1 and the number of CBGs previously configured for CC#2 is 4. At this time, CBG-level T-DAI may be determined to be applied to all CCs, and C-DAI may be determined by first considering (e.g., counting) carriers within a specific slot within the BW and then considering carriers within next slot. In this case, HARQ-ACK payload size to be transmitted by the UE at slot#T+9 may be determined by the number of CBGs lastly received by the UE and signaled from T-DAI on DL assignment. Therefore, the HARQ-ACK payload size transmitted on slot#T+9 may be 15 bits.

If the BS attempts DL data transmission by performing fallback based on TB for CC for which CBG is configured, the method for transmitting or receiving HARQ-ACK as described in the aforementioned section 3.1.2.2 may be applied to the operation according to attempted DL data transmission and the operation as to whether the BS will always assume the number of CBGs which are previously configured or count DAI based on the number of CBGs actually (re)transmitted per TB (or per slot).

In case of a single CC (or a case that CRC is not attached to HARQ-ACK information) as described in the aforementioned section 3.1, the operation for calculating DAI in a unit of scheduled CBG may have a difficulty in always making sure of retransmission of CBG corresponding to NACK when NACK-to-ACK error occurs.

Therefore, in order to solve this problem, the TB-level DAI described in the section 3.1.2.1 may be applied to reduce HARQ-ACK overhead.

Alternatively, in case of a plurality of CCs (or a case that CRC is attached to HARQ-ACK information) as described in the aforementioned section 3.2, the probability of NACK-to-ACK error may relatively be lowered. Therefore, in order to solve this problem, the CBG-level DAI described in the section 3.2.2.2 may be applied to reduce HARQ-ACK overhead.

3.2.2.3. TB or CBG level C-DAI with scheduling restriction

As a method for reducing HARQ-ACK payload, scheduling may be allowed for only some slots (not all slots) within the BW and/or only some CC(s) (not all CCs) which are configured, and corresponding HARQ-ACK transmission may be allowed for only some slots and/or some CC(s). At this time, the HARQ-ACK payload may be determined by a size corresponding to multiplication of the number of slots and/or CCs always allowed within the BW and the number of CBGs which are previously configured.

In this case, the BS may notify the UE of the order of HARQ-ACK by signaling only TB-level C-DAI to the UE through DL assignment. Alternatively, the BS may notify the UE of the order of HARQ-ACK by signaling only CBG-level C-DAI to the UE through DL assignment.

Therefore, the above method may be regarded as a semi-static codebook in view of a technical aspect.

In the aforementioned method, if the BS signals only CBG-level C-DAI, the BS may always assume only a CBG-level C-DAI value based on the number of CBGs which are previously configured (Opt 1), or may assume a CBG-level C-DAI value based on the number of CBGs actually (retransmitted per TB (or per slot) (Opt 2). Particularly, in case of Opt 2, the UE may transmit HARQ-ACK corresponding to NACK to CBG which is not (retransmitted.

As described in the section 3.1.2.1, if a specific status occurs, the BS may attempt DL data transmission by performing fallback based on TB even though CBG based signal transmission has been configured.

In response to this case, the UE may carry HARQ-ACK information of TB based DL data in only HARQ-ACK, which corresponds to a specific one CBG index (e.g., first one), among HARQ-ACKs equivalent to the number of CBGs and carry NACK in the other HARQ-ACKs, or may repeatedly transmit HARQ-ACK information of TB based DL data as HARQ-ACK information corresponding to all CBG indexes.

If scheduling is allowed for only some slots, the number of slots which are allowed (per CC) may be set by higher layer signaling (or L1 signaling). At this time, if the number of corresponding slots (per CC) is 1, an operation for HARQ-ACK transmission and reception according to the present invention may be performed without DAI value or DCI field for signaling DAI.

In more detail, if the number of slots allowed per CC is smaller than the number of slots within the BW, positions of slots allowed for scheduling may be different per CC, and the HARQ-ACK payload size may be determined by a function of multiplication of the number of CCs and the number of allowed slots.

For example, if the number of slots within the BW is 4 and the number of slots allowed per CC is 1, positions of slots to which PDSCH is transmitted may be configured differently per CC. If the number of CCs is N and HARQ-ACK bits required per CC are K bits, the HARQ-ACK payload size may be K*N bits.

Also, if HARQ-ACK codebook for all slots within the BW is configured, the method for transmitting or receiving HARQ-ACK according to the present invention may be performed without DAI value or DCI field for signaling DAI.

In this way, if the BW corresponds to N slots but DL data scheduling is performed for maximum K (<N) slots within each BW, a value of K may be set commonly for CCs configured in a CA status or differently per CC.

Also, TB or CBG level C-DAI may be counted per CC.

In case of TB-level C-DAI, a bit-width of a corresponding DAI field per CC may be set to ceiling{$\log_2$(the number of maximum slots for which scheduling is allowed within the BW of the corresponding CC)}. Alternatively, under the assumption that the UE is not likely to miss four continuous DCI, TB-level C-DAI may be set to 2 bits.

In case of CBG-level C-DAI, a bit-width of a corresponding DAI field per CC may be set to ceiling{$\log_2$(the number of maximum slots for which scheduling is allowed within BW of a corresponding CC * the number of maximum CBGs configured for the corresponding CC)}. For example, under the assumption that the UE is not likely to miss four continuous DCI, the bit-width of the DAI field may be set to 2 bits + ceiling{$\log_2$(the number of maximum CBGs configured for the corresponding CC)}.

Alternatively, even in case of CBG-level C-DAI, the bit-width of the DAI field may be configured regardless of the number of maximum CBGs which are configured.

At this time, the bit-width of the CBG-level C-DAI may be determined in such a manner that the method proposed in the section 3.1.2.3 is applied per CC. In other words, (regardless of CBG-level C-DAI or TB-level C-DAI), the bit-width of C-DAI may be configured as follows.

- If the number (that is, value of K) of maximum slots for which scheduling is allowed within the BW of the corresponding CC is 1: C-DAI bit-width is set to 0 bit (that is, corresponding field may not exist).
- If the value of K is 2 (K=2): C-DAI bit-width is set to 1 bit.
- If the value of K is 3 or more (K=3 or more): C-DAI bit-width is set to 2 bits.
- If the value of K is N (K=N, N is the number of slots within the BW of the corresponding CC): C-DAI bit-width is set to 0 bit (that is, corresponding field may not exist).

Unlike the above case, under the assumption that the UE is not likely to continuously miss N number of DCI (e.g., N=4), a bit-width of C-DAI may be set to min{$\log_2$(N), $\log_2$(K)}. However, if K=N, the bit-width of C-DAI may be set to 0 bit (that is, corresponding field may not exist).

Alternatively, the bit-width of C-DAI may be set to $\log_2$(K). However, if K=N, the bit-width of C-DAI may be set to 0 bit (that is, corresponding field may not exist).

3.2.2.4. Separate TB-level DAI per CC or Separate TB/CBG-level DAI per CC

FIG. 22 is a diagram simply illustrating a method for transmitting or receiving HARQ-ACK, to which DAI is applied per CC in accordance with the present invention.

In comparison with the method for transmitting or receiving HARQ-ACK as described in the section 3.2.2.2, since HARQ-ACK matched with the number of maximum CBGs of CCs is transmitted in the method for transmitting or receiving HARQ-ACK as described in the section 3.2.2.1, HARQ-ACK overhead is caused. On the other hand, the HARQ-ACK overhead problem is solved in the method for transmitting or receiving HARQ-ACK as described in the section 3.2.2.2 but CBG-level DAI is used, whereby overhead for DL assignment may occur.

To solve this problem, this section proposes a method for transmitting or receiving HARQ-ACK, in which TB-level DCI is used per CC as shown in FIG. 22 to reduce DCI overhead and the number of CBGs different per CC is reflected in HARQ-ACK.

As shown in FIG. 22, if HARQ-ACK for two CCs is transmitted to CC#1, it is assumed that CBG is not configured for CC#1 and the number of CBGs previously configured for CC#2 is 4. In this case, HARQ-ACK payload size to be transmitted by the UE on slot#T+9 may be 7 bits (3 bits for CC#1 + 4 bits for CC#2).

Additionally, if DAI is applied per CC, TB-level DAI may be applied to some CCs, whereas CBG-level DAI may be applied to the other CCs.

For example, CBG-level DAI may be applied to CCs for which CBG is configured, and TB-level DAI may be applied to CCs for which CBG is not configured.

At this time, the aforementioned method of the section 3.1.2.1 may be applied to TB-level DAI per CC, and the aforementioned method of the section 3.1.2.2 may be applied to CBG-level DAI per CC.

Also, if the BS attempts DL data transmission by performing fallback based on TB for CC for which CBG is configured, the method for transmitting or receiving HARQ-ACK as described in the aforementioned section 3.1.2.2 may be applied to the operation according to the attempted DL data transmission and the operation as to whether the BS will always assume the number of CBGs which are previously configured or count DAI based on the number of CBGs actually (re)transmitted per TB (or per slot).

3.2.2.5. Separate TB-level DAI between TB-based cell group and CBG-based cell group (CG)

In case of the method for transmitting or receiving HARQ-ACK as described in the section 3.2.2.4, if the UE misses all DL assignments within a BW on a specific CC, a problem occurs in that a mismatch in HARQ-ACK payload size between the UE and the BS occurs.

Therefore, to solve the problem, this section proposes a method for calculating DAI per carrier group (CG) and transmitting HARQ-ACK to a specific CC after grouping CCs (or CCs of which the number of CBGs is K or more), for which CBGs are configured, into one CG and grouping CCs (or CCs of which the number of CBGs is less than K or for which CBG is not configured), for which CGBs are not configured, into one CG.

FIG. 23 is a diagram simply illustrating a method for transmitting or receiving HARQ-ACK when four CCs are identified by two CGs in accordance with the present invention.

As shown in FIG. 23, it is assumed that HARQ-ACK corresponding to four CCs is transmitted to CC#1, CBG is configured for CC#1 and CC#2 and CBG is not configured for CC#3 and CC#4.

At this time, the BS and the UE may configure CC#1 and CC#2 as one CG#A and configure CC#3 and CC#4 as one CG#B.

At this time, the aforementioned method of the section 3.2.2.1 may be applied to CG#A. In other words, if the number of CBGs configured for CC#1 is 2 and the number of CBGs configured for CC#2 is 4, HARQ-ACK payload size transmitted by the UE at slot#T+9 may be configured to be matched with 4 which is the number of maximum CBGs. Therefore, the HARQ-ACK payload size to be transmitted by the UE at slot#T+9 may be set to 18 bits (16 bits for CG#A + 2 bits for CG#B) in FIG. 23.

Alternatively, DAI may be applied to each CG, wherein TB-level DAI may be applied to a random CG, whereas CBG-level DAI may be applied to another CG.

As a detailed example, CBG-level DAI may be applied to CG comprised of CCs (or CCs of which the number of CBGs is K or more) for which CBG is configured, and TB-level DAI may be applied to CG comprised of CCs (or CCs of which the number of CBGs is less than K or for which CBG is not configured) for which CBG is not configured.

At this time, the aforementioned method of the section 3.2.2.1 may be applied to TB-level DAI per CG, and the aforementioned method of the section 3.2.2.2 may be applied to CBG-level DAI per CG.

Also, if the BS attempts DL data transmission by performing fallback based on TB for CC for which CBG is configured, the method for transmitting or receiving HARQ-ACK as described in the aforementioned section 3.2.2.2 may be applied to the operation according to the attempted DL data transmission and the operation as to whether the BS will always assume the number of CBGs which are previously configured or count DAI based on the number of CBGs actually (re)transmitted per TB (or per slot).

As described above, if the LTE transmits HARQ-ACK corresponding to a plurality of CCs through PUCCH on one CC and the plurality of CCs are divided into CGs (e.g., TB-based CG and CBG-based CG) to count DAI per CG, 2 TB transmission may be configured (and/or scheduled) for some of CCs which belong to the TB-based CG.

At this time, if TB-level DAI (or dynamic codebook) is applied to a corresponding CG, HARQ-ACK of all CCs within the corresponding CG may be set to 2 bits to solve a mismatch problem in the HARQ-ACK payload size between the BS and the UE.

For example, if 1 TB transmission is scheduled (or configured) for CC#3 and 2 TB transmission is scheduled (or configured) for CC#4 in FIG. 23, HARQ-ACK bits corresponding to TB-based CG may include 4 bits.

Additionally, if the UE transmits HARQ-ACK corresponding to a plurality of CCs through PUCCH on one CC and the plurality of CCs are divided into CGs (e.g., TB-based CG and CBG-based CG) to count DAI per CG, the CGs may additionally be divided depending on whether 1 TB transmission or 2 TB transmission has been configured for the plurality of CCs for which CBG is not configured.

For example, after CCs for which 1 TB transmission is configured are grouped into 1TB-CG and CCs for which 2 TB transmission is configured are grouped into 2TB-CG, C-DAI and T-DAI may be applied to each CG. In this case, CC-level DAI may be applied to 1TB-CG, and TB-level DAI may be applied to 2TB-CG.

FIG. 24 is a diagram simply illustrating a method for transmitting or receiving HARQ-ACK when 1TB-CG and 2TB-CG are configured in accordance with the present invention.

As shown in FIG. 24, if CC#1 and CC#2 for which 1 TB is configured are configured by 1TB-CG and CC#3 and CC#4 for which 2 TB is configured are configured by 2TB-CG, the HARQ-ACK payload size to be transmitted by the UE on slot#T+9 may be 7 bits (4 bits for 1TB-CG + 3 bits for 2TB-CG).

Alternatively, CC-level DAI may be applied to 2TB-CG as well as 1TB-CG. At this time, if CC-level DAI is applied to 2TB-CG, HARQ-ACK payload size corresponding to a DAI counter value of 1 may be 2 bits.

Generally, 1 TB transmission or 2 TB transmission may be configured per CC, and CBG transmission may also be configured per CC. Therefore, a total of four types of CCs may exist as follows.

- 1 TB TB-based CC
- 2 TB TB-based CC
- 1 TB CBG-based CC
- 2 TB CBG-based CC

At this time, one CG may include {1 TB TB-based CC, 2 TB TB-based CC, 1 TB CBG-based CC}, and the other CG may include {2 TB CBG-based CC}. Therefore, the UE may perform HARQ-ACK transmission by configuring HARQ-ACK bits per PDSCH within CG to be similarly matched with each other per CG.

Alternatively, a total of three CGs may be configured, wherein one CG includes {1 TB TB-based CC, 2 TB TB-based CC}, another CG includes {1 TB CBG-based CC}, and other CG includes {2 TB CBG-based CC}.

More generally, a plurality of CGs may be configured considering HARQ-ACK bits corresponding to one PDSCH per CC. For example, a plurality of CGs may be configured such that a maximum difference in HARQ-ACK bits corresponding to one PDSCH per CC which belongs to CG may be limited to X bits.

### 3.2.2.6. Addition of 1 bit to HARQ-ACK payload per CC or CG

If DAI is counted per CC or CG as described in the section 3.2.2.4 and the section 3.2.2.5, and if the UE misses all DL assignments on a specific CC or within BW on the specific CG, a mismatch for HARQ-ACK payload size between the UE and the BS may occur.

As a method for solving this mismatch, this section proposes a method for signaling the presence of HARQ-ACK payload per corresponding CC or corresponding CG by adding 1 bit to the HARQ-ACK payload per CC (in case of the section 3.2.2.4) or per CG (in case of the section 3.2.2.5).

For example, since 2 CGs exist in FIG. 23, the UE which has normally received all DL assignments may notify the BS that HARQ-ACKs for all CGs exist by transmitting "00" (or "11") as 2 bits additionally arranged at the front of the HARQ-ACK payload. Alternatively, the UE which has missed DL assignments of CC#3 and CC#4 may notify the BS that HARQ-ACK payload for the second CG does not exist by transmitting "01" (or "10") at the front of the HARQ-ACK payload.

The BS which has received such information as above may initially determine the presence of HARQ-ACK payload per CC or CG by first checking information of 2 bits at the front of the HARQ-ACK payload. For example, if the BS receives information indicating that there is no HARQ-ACK payload for the first CG, through information of 2 bits at the front of the HARQ-ACK payload, the BS may assume (or determine) that the HARQ-ACK payload corresponding to the third bit and subsequent bits is HARQ-ACK information on the second CG.

### 3.2.2.7 TB-level C-DAI + CBG-level T-DAI across all CCs

This section proposes an operation for counting the number of TBs through C-DAI, whereas counting the number of CBGs of all CCs for which T-DAI is configured. According to this operation, DCI overhead of the BS may be reduced and at the same time the UE may configure HARQ-ACK payload corresponding to the number of CBGs actually configured for each CC instead of the number of maximum CBGs among CCs even though the number of CBGs is different per CC.

### 3.2.2.8. TB-level C-DAI per CG + CBG-level T-DAI across all CGs

If CGs are configured as described in the aforementioned section 3.2.2.5, C-DAI may count the number of TBs per CG, whereas T-DAI may count the number of CBGs of all CGs.

3.2.2.9. {TB-level C-DAI & T-DAI for own CG + TB-level T-DAI for other CG} per CG

If DAI is counted per CG as described in the section 3.2.2.5, and if the UE misses all DL assignments within BW on a specific CG, a problem occurs in that a mismatch for HARQ-ACK payload size between the UE and the BS may occur. As a method for solving this problem, this section proposes a method for allowing a BS to notify a UE of additional T-DAI for different CGs through DL assignment.

FIG. 25 is a diagram simply illustrating a method for transmitting or receiving HARQ-ACK when additional T-DAI is applied to different CGs in accordance with the present invention.

In FIG. 25, T1-DAI means total DAI for CBG-based CG (that is, group of CCs for which CBG is configured), and T2-DAI means total DAI for TB-based CG (that is, group of CCs for which CBG is not configured). In this case, even though the UE misses all DL assignments for CC#3 and CC#4, a mismatch for HARQ-ACK payload between the UE and the BS may be solved through T-DAI for TB-based CG at CC#1 and CC#2.

TB-level DAI or CBG-level DAI per CG may be applied to the above method. For example, CBG-level DAI may be applied to CG comprised of CCs (or CCs of which the number of CBGs is K or more) for which CBG is configured, and TB-level DAI may be applied to CG comprised of CCs (or CCs of which the number of CBGs is less than K or for which CBG is not configured) for which CBG is not configured.

Also, the above method may be applied to the various methods (e.g., the case that CG includes 1 TB-CG and 2TB-CG) for configuring CGs as described in the section 3.2.2.5.

3.2.2.10. Semi-static codebook for one CG + TB-level DAI (or CBG-level DAI) for other CG

If CGs are identified as described in the section 3.2.2.5, a semi-static codebook may be configured for a specific CG, and TB-level DAI (or CBG-level DAI) may be applied to all CCs within the other CG as described in the aforementioned section 3.2.2.1 (or 3.2.2.2).

FIG. 26 is a diagram simply illustrating a method for transmitting or receiving HARQ-ACK when two CGs are identified in accordance with the present invention.

As shown in FIG. 26, if the number of maximum CBGs of CCs which belong to CBG-based CG is 4, HARQ-ACK payload size to be transmitted by the UE at slot#T+9 may be 24 bits (4*5 bits for CBG-based CG + 4 bits for TB-based CG, and since BW corresponds to 4 slots, 4 bits are always transmitted to the corresponding CG).

The above method may solve the problem, which may occur when the UE misses all DL assignments on a specific CG, in combination with the method for transmitting or receiving HARQ-ACK as described in the section 3.2.2.6 and the section 3.2.2.9.

Also, the above method may be applied to the various methods (e.g., the case that CG includes 1 TB-CG and 2TB-CG) for configuring CGs as described in the section 3.2.2.5.

3.2.2.11. Determination of maximum DAI value per TB-level C-DAI (or CBG-level C-DAI) + PUCCH resources

Maximum HARQ-ACK payload (or maximum DAI value) size may previously be determined in accordance with PUCCH that may be allocated to each ARI (ACK/NACK resource indicator). For example, if $2^n$ sized coded bits are applied, a PUCCH resource mother code and maximum information bits may previously be determined considering properties of optimized polar coding.

In this case, the BS may signal only C-DAI to the UE without T-DAI through DCI. At this time, the UE transmits HARQ-ACK through PUCCH to which ARI allocated through DCI indicating the last DAI value corresponds. At this time, if the maximum HARQ-ACK payload size corresponding to the corresponding PUCCH is previously determined, the UE may generate a corresponding polar mother code (or RM mother code). In detail, the UE may apply a polar (or RM) code obtained by configuring HARQ-ACK payload to reach a maximum DAI value (this may be greater than lastly received DAI value of the UE) previously set for PUCCH allocated through the ARI.

Additionally, the BS may signal a size of a mother code used (as an alternative of T-DAI) to the UE to efficiently use PUCCH resources according to the payload size. For example, the BS may indicate, to the UE, RM code, a polar code with Y1 bits mother code, or a polar code with Y2 bits mother code through DCI.

At this time, the UE may construe a configuration corresponding to the ARI value indicating the PUCCH resource differently depending on a field value indicating a size of the corresponding mother code. In other words, the PUCCH resource corresponding to the ARI value may be configured differently depending on the field value indicating the size of the corresponding mother code.

The above method may be applied to a single CC and a plurality of CCs having different TTI or slot durations as well as the plurality of CCs.

3.2.2.12. Slot-level C-DAI only + configured A/N bits in CC domain

If the BS signals only slot-level C-DAI through DCI, the UE may configure HARQ-ACK payload based on DAI value which is lastly received, whereby the HARQ-ACK payload may be configured in a CC domain in the form of a semi-static codebook. For example, if the DAI value lastly received by the UE is 2, the UE may configure a codebook by assuming scheduling from a slot on all CCs configured for two slots.

If the above method is combined with the method for transmitting or receiving HARQ-ACK as described in the section 3.2.2.1, the BS may set a maximum (slot level) DAI value per PUCCH that may be allocated through ARI, and the UE may configure the HARQ-ACK payload based on the DAI value.

Additionally, interpretation of the slot-level C-DAI value may be varied depending on the ARI value indicating PUCCH resource. In other words, the PUCCH resource corresponding to the ARI value may be configured differently per slot-level C-DAI value.

The above method may be applied to a single CC and a plurality of CCs having different TTI or slot durations as well as the plurality of CCs.

Particularly, in case of a plurality of CCs having different TTI or slot durations, slots of all CCs included in a slot duration of a corresponding CC may correspond to one DAI value based on the CC having the longest TTI or slot duration (Method 1), or slots of CCs having the same slot start time as that of the corresponding CC may correspond to one DAI value based on the CC having the shortest TTI or slot duration (Method 2).

FIG. 27 is a diagram illustrating an example that DL data are transmitted through three CCs of different TTIs or different slot durations in accordance with the present invention.

According to the Method 1 in FIG. 27, slot 5/6/7/8 of CC#1, slot#c/d of CC#2 and slot#B of CC#3 may correspond to one DAI value. Therefore, if the one DAI value corresponds to one or more of the slots, the UE may transmit HARQ-ACK information on the all slots to correspond to the one DAI value.

Alternatively, according to the Method 2 in FIG. 27, slot 5 of CC#1, slot#c of CC#2 and slot#B of CC#3 may correspond to a first DAI value, slot#6 of CC#1 may correspond to a second DAI value, slot #6 of CC#1 and slot#d of CC#2 may correspond to a third DAI value, and slot #8 of CC#1 may correspond to a fourth DAI value.

3.2.2.13. DAI counting within the same slot performed in non-fallback DCI first - fallback DCI second scheme

When HARQ-ACK information is transmitted by being multiplexed, if some of corresponding PDSCHs include PDSCH scheduled by a fallback DCI format (e.g.: NR DCI format 1_0), DAI counting may be performed as follows.

In detail, if PDSCH scheduled through the fallback DCI format is included within the same slot, the BS and the UE may perform DCI counting for PDSCH scheduled through the fallback DCI format after performing DAI counting for PDSCHs scheduled through a non-fallback DCI format. In other words, if PDSCH (hereinafter, referred to as 'non-fallback PDSCH') and PDSCH (hereinafter, referred to as 'fallback PDSCH') scheduled through the fallback DCI format exist within the same slot, the BS may set/indicate a PDSCH scheduling order (or counter) value corresponding to the non-fallback PDSCH signaled through DCI to a value smaller than a PDSCH scheduling order (or counter) value corresponding to fallback PDSCH (that is, a value corresponding to fallback PDSCH is set to be greater than a value corresponding to non-fallback PDSCH).

The above method may equally be applied to HARQ-ACK multiplexing between a plurality of CCs (or BWPs) having different TTI or slot durations.

Generally, the fallback DCI format may include a minimum parameter related to RRC configuration to minimize a DCI size for the purpose of enhancing reliability and to support an operation even in a state that RRC connection is not configured.

Considering these, if a dynamic codebook is configured, the non-fallback DCI may include a DCI field corresponding to counter DAI (e.g.: 2 bits bit-width field) and total DAI (e.g.: 2 bits bit-width field), whereas the fallback DCI may not include counter DAI and total DAI by identifying counter DAI from total DAI as a respective DCI field. At this time, since the total DAI is a value corresponding to a total number of PDSCHs scheduled to reach the corresponding slot, the present invention proposes an operation for simultaneously signaling counter DAI and total DAI through one DAI field within the fallback DCI format. As a result, the mismatch problem in HARQ-ACK payload due to different PDSCH missing cases at the same slot may be solved.

FIG. 28 is a diagram illustrating an example that a mismatch in HARQ-ACK payload size occurs between a BS and a UE.

As shown in FIG. 28, if DAI counting within the same slot is performed in a CC#1 first CC#2 second rule, the UE may miss PDSCH (scheduled by non-fallback DCI format) on CC#2 transmitted at slot#(T+3) and receive only PDSCH (scheduled by fallback DCI format) on CC#1. At this time, since the UE has not received DCI indicating 'total DAI=6', the UE may not recognize that the total DAI value is 6. For this reason, a mismatch in HARQ-ACK payload size between the BS and the UE may occur.

FIG. 29 is a diagram illustrating a method for transmitting or receiving HARQ-ACK, which can solve a problem of FIG. 28 in accordance with the present invention.

Unlike FIG. 28, if DAI counting is performed at slot#(T+3) in a CC#2 first CC#1 second rule in accordance with the method proposed in the present invention as shown in FIG. 29, even though the UE fails to receive PDSCH (scheduled by non-fallback DCI format) transmitted on CC#2 transmitted at slot#(T+3), the UE may recognize 'total DAI=6' through the PDSCH (scheduled by fallback DCI format) on CC#1. In other words, since the BS may notify the UE that counter DAI and total DAI are 6, through DAI included in the fallback DCI, successful HARQ-ACK transmission and reception may be performed without a mismatch in the HARQ-ACK payload size between the BS and the UE.

### 3.3. Case of a plurality of CCs having different TTI or slot durations

#### 3.3.1. Semi-static codebook

In this section, if HARQ-ACK for a plurality of CCs having different TTI or slot durations is transmitted through PUCCH on a specific CC, a method for transmitting HARQ-ACK through a semi-static codebook will be described in detail. At this time, HARQ-ACK payload size is determined by the number of configured CCs, a bundling window (BW) size per CC and the number of configured CBGs.

Characteristically, if CC through which PUCCH is transmitted and CCs having different TTI or slot durations exist, the HARQ-ACK payload size may be determined based on a BW determined based on a range and/or the number of values indicating HARQ timing on CCs through which PUCCH is transmitted.

For example, it is assumed that the same number of CBGs are configured for CCs and HARQ-ACK payload size within a BW on a CC through which PUCCH is transmitted is Z bits. At this time, the HARQ-ACK payload size corresponding to CC having a slot (or TTI) duration of 1/K times of a slot (or TTI) at which PUCCH is transmitted may be set to Z*K bits, and the HARQ-ACK payload size corresponding to CC having a slot (or TTI) duration of K times of a slot (or TTI) at which PUCCH is transmitted may be set to Z/K bits.

FIG. 30 is a diagram simply illustrating a method for transmitting or receiving HARQ-ACK in accordance with an example of the present invention when DL data are transmitted through two CCs having different slot durations.

As shown in FIG. 30, it is assumed that PUCCH is transmitted on CC#1 and a slot duration of CC#2 is set to twice of a slot duration of CC#1. At this time, it is assumed that a BW for slot#11 is slot#2/3/4/5 and a BW for slot#12 is slot3/4/5/6. In this case, although slot#11 and slot#12 may be included within HARQ-ACK timing corresponding to slot#B and slot#C, a rule may be established such that HARQ-ACK information corresponding to slot#B and slot#C may be transmitted at only one of two slots. At this time, if HARQ-ACK payload size corresponding to a BW of CC#1 is W bits, HARQ-ACK payload size corresponding to a BW of CC#2 may be set to W/2 bits. Therefore, HARQ-ACK payload size transmitted at slot#11 may be W bits, and HARQ-ACK payload size transmitted at slot#12 may be W+W/2 bits.

Alternatively, a rule may be established such that HARQ-ACK corresponding to a BW of CC#2 may be transmitted at all slots on CC#1. In this case, HARQ-ACK payload size transmitted at slot#11 may be W+W/2 bits, and HARQ-ACK payload size transmitted at slot#12 may also be W+W/2 bits.

At this time, it may be difficult to include HARQ-ACK information of slot#B/C on CC#2 as W/2 bits corresponding to CC#2 among W+W/2 bits corresponding to HARQ-ACK payload size transmitted at slot#11 (due to UE processing time). In this case, HARQ-ACK information corresponding to CC#2 among W+W/2 bits corresponding to HARQ-ACK payload size transmitted at slot#11 may include W/2 bits corresponding to the slot#A/B or W/4 bits corresponding to only slot#B (not W/2 bits).

FIG. 31 is a diagram simply illustrating a method for transmitting or receiving HARQ-ACK in accordance with another example of the present invention when DL data are transmitted through two CCs having different slot durations.

As shown in FIG. 31, it is assumed that PUCCH is transmitted on CC#2, a slot duration of CC#2 is set to twice of a slot duration of CC#1 and a BW for slot#F is slot#B/C. At this time, HARQ-ACK information corresponding to slot#3/4/5/6 on CC#1 included in the BW comprised of slot#B and slot#C may also be transmitted from PUCCH on slot#F. In this case, if HARQ-ACK payload size corresponding to a BW of CC#2 is W bits, HARQ-ACK payload size corresponding to a BW of CC#1 may be set to W*2 bits. Therefore, HARQ-ACK payload size transmitted at slot#F may be W+W*2bits.

FIG. 32 is a diagram simply illustrating a method for transmitting or receiving HARQ-ACK through two CCs having different slot durations in accordance with the present invention.

As shown in FIG. 32, if HARQ-ACK information is transmitted to different PUCCHs in accordance with the BW at CC#1 and the BS indicates, to the UE, one of +5/+6/+7/+8 as HARQ-ACK transmission timing through DL assignment, a BW corresponding to slot#9 may be four slots of slot#1/2/3/4.

Therefore, if the number of CBGs configured for CC#1 is 4, HARQ-ACK payload size to be transmitted at slot#9 may be 16 bits (during 1 TB transmission). Likewise, HARQ-ACK payload size which corresponds to slot#2/3/4/5 and will be transmitted at slot#10 may be 16 bits.

If HARQ-ACK of CC#1 is transmitted onto slot#E on CC#2 having a slot duration longer than that of CC#1, HARQ-ACK of a BW associated with slot#9 and slot#10 may be transmitted. In this case, HARQ-ACK payload size transmitted at each of slot#9 and slot#10 is 16 bits, whereas HARQ-ACK information on slot#2/3/4 transmitted at slot#E may be 20 bits (without duplication).

3.3.2. Dynamic codebook

If HARQ-ACK information corresponding to a plurality of CCs is transmitted through PUCCH of a specific CC, a type of CCs may be divided into four types as follows.

- Type 1: CC for which CBG is not configured, or which has a short slot or TTI duration (or if CBG is not configured for all CCs, CCs having a short slot or TTI duration, to which 1 TB transmission is configured, may be identified as type 1.)
- Type 2: CC for which CBG is not configured, or which has a long slot or TTI duration (or if CBG is not configured for all CCs, CCs having a long slot or TTI duration, to which 1 TB transmission is configured, may be identified as type 2.)
- Type 3: CC for which CBG is configured, or which has a short slot or TTI duration (or if CBG is not configured for all CCs, CCs having a short slot or TTI duration, to which 2 TB transmission is configured may be identified as type 3.)
- Type 4: CC for which CBG is configured, or which has a long slot or TTI duration (or if CBG is not configured for all CCs, CCs having a long slot or TTI duration, to which 2 TB transmission is configured may be identified as type 4.)

Hereinafter, the method for transmitting or receiving HARQ-ACK as proposed in the present invention will be described based on the above type identification.

3.3.2.1. CG is formed per type to configure a total of four CGs and DAI per CG is applied.

The BS may transmit DL data to the UE by forming CG per different types and applying DAI per CG as described above. In response to this case, as a method for transmitting HARQ-ACK for the received DL data, the UE may transmit 1) HARQ-ACK through PUCCH different per slot or TTI duration, 2) HARQ-ACK through PUCCH different per CG, or 3) all HARQ-ACKs through one PUCCH.

At this time, one of the methods described in the aforementioned sections 3.2.2.5, 3.2.2.6, 3.2.2.9 and 3.2.2.10 may be applied to a CG based DAI method.

3.3.2.2. CG is formed per slot or TTI duration to configure a total of two CGs (or Type 1/3 is configured as one CG, and Type 2/4 is configured as the other CG) and DAI per CG is applied.

The BS may transmit DL data to the UE by forming CG in accordance with a slot or TTI duration and applying DAI per CG. In response to this case, as a method for transmitting HARQ-ACK for the received DL data, the UE may transmit 1) HARQ-ACK through PUCCH different per slot or TTI duration, 2) HARQ-ACK through PUCCH different per CG, or 3) all HARQ-ACKs through one PUCCH.

At this time, one of the methods described in the aforementioned sections 3.2.2.5, 3.2.2.6, 3.2.2.9 and 3.2.2.10 may be applied to a CG based DAI method.

3.3.2.3. CG is formed depending on whether CBG has been configured (or the number of CBGs) to configure a total of two CGs (or Type 1/2 is configured as one CG, and Type 3/4 is configured as the other CG) and DAI per CG is applied.

In this case, the UE may transmit HARQ-ACK through PUCCH different per CG, or may transmit HARQ-ACK (for all CGs) to one PUCCH. At this time, one of the methods described in the aforementioned sections 3.2.2.5, 3.2.2.6, 3.2.2.9 and 3.2.2.10 may be applied to a CG based DAI method.

If CCs having a long slot or TTI duration or CCs having a short slot or TTI duration are configured by one CG, the BS and the UE may count CAI in accordance with the following methods.

FIGs. 33 and 34 are diagrams simply illustrating an example of DAI calculation for supporting HARQ-ACK transmission and reception according to an example of the present invention.

For example, as shown in FIG. 33 or FIG. 34, if a slot duration of CC#1 and CC#3 is longer than a slot duration of CC#2, HARQ-ACK information on slot#A and slot#1/2 may be transmitted to the same PUCCH. In this case, the BS and the UE may count DAI based on a short slot (Opt A), or may count DAI based on a long slot (Opt B).

(1) Opt A: As shown in FIG. 33, the BS and the UE may count (or calculate) DAI for CC#2 in which slot#2 is included, after counting (or calculating) DAI in the order of CC#1 -> CC#2 -> CC#3 based on slot#1 which is a short slot, wherein slot#1 is included in CC#1.

(2) Opt B: As shown in FIG. 34, the BS and the UE may count (or calculate) DAI in the order of CC#1 -> CC#2-> CC#2 -> CC#3 based on slot#A which is a long slot, wherein slot#A is included in CC#1.

3.3.2.4. Application of DAI to all CCs without division into CG

In this case, the UE may transmit all HARQ-ACKs through one PUCCH. At this time, one of the method described in the aforementioned section 3.2.2.1, 3.2.2.2, or 3.2.2.3 may be applied to the method for configuring HARQ-ACK.

At this time, since CCs having a long slot or TTI duration and CCs having a short slot or TTI duration are grouped, when the BS and the UE count DAI, the DAI counting method as described in the aforementioned section 3.3.2.3 may be required. Therefore, as described above, the BS and the UE may count DAI based on a short slot (Opt A), or may count DAI based on a long slot (Opt B).

### 3.4. Method for transmitting CBG ACK/NACK for specific NACK slot

It is assumed that three CCs are configured as shown in FIG. 19, HARQ-ACK for three CCs is transmitted through PUCCH on CC#1, and a bundling window (BW) corresponds to two slots common for CC. At this time, if the number of maximum CBGs configured for each CC is 10, HARQ-ACK payload size to be transmitted by the UE onto CC#1 may be maximum 60 (=3*2*10) bits.

In this case, as a method for reducing UCI overhead, the UE may report HARQ-ACK based on TB as HARQ-ACK information for each slot (that is, if even one CB of TBs constituting a specific TB is NACK, NACK is reported, and if not so, ACK is reported), and may feed HACK-ACK information on each CBG back to TB corresponding to a first NACK.

As a detailed example, if TB based ACK/NACK information corresponding to 6 slots comprised of [CC#1 slot#T, CC#2 slot#T, CC#3 slot#T, CC#1 slot#T+1, CC#2 slot#T+1, CC#3 slot#T+1] is [ACK, ACK, NACK, NACK, ACK, ACK] in the status of FIG. 19, the UE may feed HARQ-ACK information comprised of a total of 16 bits back to the BS by transmitting ACK/NACK information of 10 bits per CBG corresponding to CC#3 slot#T which is the first NACK slot together with corresponding 6 bits.

The above method may be more useful for the case that the UE configures HARQ-ACK information corresponding to slot(s) actually scheduled based on C-DAI, as well as the various methods described in the sections, 3.1, 3.2 and 3.3.

Also, in the aforementioned operation, a specific NACK slot at which the UE transmits ACK/NACK information per CBG may be set to the first NACK slot(s) or the last NACK slot(s), or may be specific NACK slot(s) previously set or set by (L1 or higher layer) signaling.

### 3.5. Method for transmitting or receiving additional HARQ-ACK

In the various methods described in the sections 3.2 and 3.3, the UE may transmit HARQ-ACK corresponding to a plurality of CCs through PUCCH on one CC. At this time, if the plurality of CCs are divided into CG (e.g., TB-based CG and CBG-based CG), since DAI is counted per CG, the UE may transmit HARQ-ACK per CG onto different PUCCHs.

For example, the UE may transmit HARQ-ACK information per CG through two long duration PUCCHs (or two 1-symbol PUCCHs or two 2-symbol PUCCHs or PUCCHs of different formats) within the same slot. At this time, the two PUCCHs may be multiplexed by a method such as TDM(Time Division Multiplexing)/FDM(Frequency Division Multiplexing)/CDM(Code Division Multiplexing).

Therefore, the UE capable of performing CBG based (DL data) operation may be configured to have prerequisite capability for multi-PUCCH transmission operation within the same slot. That is, the BS may configure CBG based (DL data) operation for only the UE capable of performing multi-PUCCH transmission within the same slot.

A rule may be established such that the UE configures HARQ-ACK codebook based on a semi-state codebook by excluding a fixed UL slot if the fixed UL slot exists within the BW in the aforementioned methods.

For example, the network may previously configure a default UL slot for the purpose of periodical RACH (Random Access Channel) transmission or scheduling request or beam recovery. Therefore, the UE may reduce a codebook size by excluding the corresponding UL slot even though a semi-static codebook is applied only if the UL slot is included in a BW corresponding to a specific PUCCH.

Alternatively, the UE may transmit HARQ-ACK information on the corresponding UL slot by always processing the HARQ-ACK information as NACK (or DTX).

Additionally, if a beam index of the BS, which will be received by the UE, is configured in accordance with multi-beam operation and a beam index of the BS per slot is signaled, slot(s) (for convenience of description, referred to as 'beam-mismatch slot') corresponding to a BS transmission beam index which is not required to be received by the UE may occur.

In this respect, a rule may be established such that the UE configures a codebook by excluding a beam-mismatch slot in configuring a semi-static codebook if the beam-mismatch slot exists within the BW in the aforementioned methods. Alternatively, the UE may transmit HARQ-ACK information on the corresponding beam-mismatch slot by always processing the HARQ-ACK information as NACK (or DTX).

In signaling a DAI (or C-DAI or T-DAI) value in the aforementioned methods, the BS may be configured to indicate a value, to which modulo computation is applied as a specific value (e.g., 16), as the DAI value considering signaling overhead.

At this time, if the DAI is CBG-level DAI, a width of more bits may be required than those of TB-level DAI. Also, as the number of CBGs configured for CBG-level DAI is increased, a width of more bits may be required for DAI signaling (e.g., if the number of CBGs is 2, each DAI includes 3 bits, and if the number of CBGs is 4, each DAI includes 4 bits).

Also, under the assumption that it is not likely that the UE continuously misses N (e.g., N=4) kinds of DCI, a bit-width of the DAI value may be set to Ceiling{$\log_2$(N)} + Ceiling{$\log_2$(max of (total configured CBG number per CC) across CCs in a PUCCH cell group)} bits or Ceiling{$\log_2$(N*max of (total configured CBG number per CC) across CCs in a PUCCH cell group)} bits. For example, when N=4, the number of maximum CBGs configured for CC#1 is 6, and when the number of maximum CBGs configured for CC#2 is 8, the bit-width of DAI may be determined as 5 bits based on 8 which is the maximum value.

As described above, in the dynamic codebook method based on CBG-level C-DAI and T-DAI, granularity indicating the number of CBGs may be different between C-DAI and T-DAI. For example, the CBG-level C-DAI value may be increased as much as 1 whenever the number of CBGs is K (e.g.: K=1), and the CBG-level T-DAI value may be increased as much as 1 whenever the number of CBGs is M (e.g.: M>K, where M=4).

In this case, a bit-width for signaling C-DAI may be greater than that for signaling T-DAI, and a difference in the bit-widths may be determined by a function of M/K. As a detailed example, if K=1, under the assumption that it is not likely that the UE continuously misses N (e.g., N=4) kinds of DCI, the bit-width of the C-DAI value may be set to Ceiling{$\log_2$(N)} + Ceiling{$\log_2$(max of (total configured CBG number per CC) across CCs in a PUCCH cell group)} bits or Ceiling{$\log_2$(N*max of (total configured CBG number per CC) across CCs in a PUCCH cell group)} bits, and the bit-width of the T-DAI value may be set to Ceiling{$\log_2$(N)} + Ceiling{$\log_2$(max of (total configured CBG number per CC) across CCs in a PUCCH cell group)-$\log_2$(M)} bits or Ceiling{$\log_2$(N*max of (total configured CBG number per CC) across CCs in a PUCCH cell group)-$\log_2$(M)} bits.

In this case, if N=4, K=1, and M=4, and the number of maximum CBGs configured for CC is 8, a C-DAI may be 5 bits, and a T-DAI field may be 3 bits (=2+$\log_2$(8)-$\log_2$(4)).

In this case, HARQ-ACK codebook size may include granularity corresponding to T-DAI. Therefore, the UE may process HARQ-ACK, which corresponds to the other DAI value except the T-DAI value among the DAI values indicated by C-DAI, as NACK. For example, if the UE is signaled 8 as a T-DAI value (because M=4) and signaled 6 as a C-DAI value (because K=1), the UE may configure a 8-bit codebook, and may transmit HARQ-ACK corresponding to C-DAI=7,8 by mapping the HARQ-ACK into NACK.

As described above, the HARQ-ACK payload size of the semi-static codebook may be determined by the number of CCs, a BW size per CC and the number of CBGs which are configured. At this time, even though a dynamic codebook has been configured for the UE through higher layer signaling (e.g., RRC signaling), a rule may be established such that the UE feeds back HARQ-ACK back as a semi-static codebook size only if HARQ-ACK payload size indicated to be fed back by the UE is greater than (maximum) HARQ-ACK payload size when the semi-static codebook is configured.

FIG. 35 is a diagram simply illustrating an operation for HARQ-ACK transmission and reception according to the present invention.

As shown in FIG. 35, in a CA (Carrier Aggregation) status between CC#1 for which CBG is not configured and CC#2 for which 4 CBGs are configured, a BW corresponding to HARQ-ACK to be transmitted by the UE at slot#T+9 may be set to four slots from slot#T to T+3. In this case, if a semi-static codebook is configured, HARQ-ACK payload size to be transmitted by the UE at slot#T+9 may be set to maximum 20 bits.

On the other hand, if the method (that is, the method to which TB-level C-DAI and TB-level T-DAI are applied) of the section 3.2.2.1 is applied to the example of FIG. 35, HARQ-ACK information to be transmitted by the UE at slot#T+9 may be set to maximum 24 bits.

Even though a dynamic codebook is configured such that the UE adaptively feeds back HARQ-ACK information in accordance with actual scheduling of the BS, the HARQ-ACK payload may be more increased than that of the semi-static codebook due to inefficiency of TB-level DAI (as shown in the example of FIG. 35). In this case, it may be efficient to transmit HARQ-ACK information corresponding to all slots through the semi-static codebook.

Therefore, in FIG. 35, even though the dynamic codebook is configured, the UE may transmit HARQ-ACK information by configuring a semi-static codebook of 20 bits.

If the UE feeds bask HARQ-ACK information based on the dynamic codebook, a mapping order of HARQ-ACK bits is a C-DAI order. However, if the UE for which the dynamic codebook is configured performs fallback in a semi-static codebook, the UE may configure ACK/NACK payload based on CC index order and slot index order (previously defined for the semi-static codebook) not the DAI order (A/N bit mapping).

To support this operation, a payload size based implicit switching method (according to T-DAI) between the semi-static codebook and the dynamic codebook or L1 signaling based explicit switching method may be configured.

That is, the BS may indicate, to the UE, the semi-static codebook or the dynamic codebook through L1 signaling (e.g.: DL assignment, UL grant). Characteristically, the BS may indicate whether to apply the semi-static codebook through a specific code point of T-DAI (or DAI field of UL grant) on DL assignment. As a result, the UE and the BS may be operated/configured to configure/transmit and detect/receive HARQ-ACK payload size (HARQ-ACK payload size carried in PUCCH in case of DL assignment, and HARQ-ACK payload size carried in PUSCH in case of UL grant) based on explicit or implicit switching between the semi-static codebook and the dynamic codebook.

The above method may be applied to the methods (e.g., the case that TB-level DAI is used even though CBG has been configured, the case that 2TBs are configured, and the case that CC for which CBGs more than those of the corresponding CC are configured and CG are configured) proposed for all dynamic codebooks as well as the method described in the section 3.2.2.1.

If CBG (re)transmission is configured, CBG-level DAI may be used in the same manner as the aforementioned section 3.2.2.2 when the UE configures a dynamic codebook in a CA status. However, in case of a non-CA status (that is, single CC status), TB-level (or slot-level or PDSCH-level) DAI may be used in the same manner as the aforementioned section 3.1.2.1.

In performing HARQ-ACK feedback using the dynamic codebook as proposed in the sections 3.1.2, 3.2.2 and 3.3.2, if the UE determines (or configures or transmits) HARQ-ACK payload size (or HARQ-ACK codebook size), it may mean that an input size for a channel encoder of actual HARQ-ACK bit streams is determined. Also, in a state that an encoding scheme is used in which reliability of corresponding input bit reception is varied depending on an input bit position at an encoding input port such as polar code or RM (Reed-Muller) code, if the UE determines (or configures or transmits) the HARQ-ACK payload size (or HARQ-ACK codebook size), it may mean that encoding is performed after HARQ-ACK bits, which belong to the HARQ-ACK payload size (or the HARQ-ACK codebook size), among actually encoded input bits which are statically fixed, are arranged at a reliable position.

As described above, if a plurality of N slots linked to one HARQ-ACK timing exist, the N slots are defined as a bundling window in the present invention. At this time, a value of the BW (during semi-static codebook) may be set as follows. In more detail, the BW value (per CC) may be determined by (some or all of) configured PDCCH monitoring periodicity (for convenience, referred to as MP, which may be a unit of slot), the number of (maximum) HARQ process IDs which are configured (for convenience, referred to as conf_HARQ), and K1 (slot spacing from PDSCH to PUCCH transmission slot, and some candidates, of which one may be indicated through DCI, may be configured from the BS).

For example, the BW value may be determined as follows.

[Equation 1]

$$BW = Min\{\ floor(A/B)\ or\ ceiling(A/B),\ Conf_HARQ\ \}$$

In this case, a value of A may be set to T*K1g or K1max - K1min. At this time, K1g is a value corresponding to granularity of K1, and if K1 is set to 2-slot spacing, K1g may be equal to 2 (K1g=2). Also, K1max may mean a maximum value of K1 values which are set, and K1min may mean a minimum value of K1 values which are set. Also, T may mean the number of K1 values which are set. For example, T may be equal to 8 (T=8).

Also, a value of B may be set to LCM(MP,K1g) or MP. At this time, LCM(a,b) may mean the least common multiple of 'a' and 'b'.

According to the above Equation, the BW per each example may be set as follows.

Example 1) T=8,MP=1, K1g=1, Conf_HARQ=6, -> BW =6
Example 2) T=8,MP=2, K1g=1, Conf_HARQ=6, -> BW =4
Example 3) T=8,MP=1, K1g=2, Conf_HARQ=6, -> BW =6
Example 4) T=8,MP=2, K1g=2, Conf_HARQ=6, -> BW =6

Particularly, in case of BW= Conf HARQ, the UE may map HARQ-ACK in the order of DAI or HARQ process index in configuring a semi-static codebook.

For another example, if the BW is different from Conf_HARQ, the UE may configure the semi-static codebook in the order of DAI or slot (and CC) index.

Additionally, in the NR system to which the present invention is applicable, UCI payload may be divided into K intervals in accordance with UCI payload size (e.g., 1≤K≤4, K may be indicated/configured by the BS), a PUCCH resource set may be configured per interval, and N PUCCH resources (e.g., 4≤N≤8 or 16, N may be indicated/configured by the BS) may be configured within one PUCCH resource set.

Therefore, in transmitting PUCCH at a specific slot, the UE may determine a PUCCH resource set in accordance with UCI payload size and determine PUCCH resource (e.g., symbol index/number, frequency resource, code domain resource, etc.) to be actually transmitted through DL assignment (and combination with resource information of DL control).

As a detailed example, an interval of the UCI payload size may be set to [N_i, N_(i+1) - 1], wherein a value of I may be i=0,1,...K-1. At this time, a specific N_i value may previously be defined, and the other N_i value may be signaled from the BS. For example, the N_i value may previously be defined as N_0=1 and N_1=3, and N_i (i=2,...,K-1) may be set from the BS. At this time, the value of N_K may be set as follows.

- Opt 1: the greatest UCI payload size that can be transmitted when and the amount of actual (maximum) REs allocated to a corresponding resource and a maximum coding rate set to a PUCCH format corresponding to the corresponding resource, among PUCCH resources configured within the Kth set, are applied.
- Opt 2: the greatest payload size that can be transmitted when the amount of maximum REs (the number of maximum REs that can be allocated for a corresponding PUCCH format in the NR system) that can be allocated to the corresponding format and a maximum coding rate, among PUCCH format(s) configured within the Kth set, are applied.

### 3.6. Method for determining HARQ-ACK codebook size

Prior to description of the method for determining HARQ-ACK codebook size proposed in the present invention, terminologies used in the present invention will be defined as follows.

- BW (bundling window): a set of a plurality of slots (or time unit) (at which PDCCH/PDSCH can be scheduled/transmitted) linked to one HARQ-ACK transmission timing.
- BW size: the number of slots (or time unit) (at which PCCH/PDSCH can be scheduled/transmitted) which belong to one BW.
- HARQ num: the number of maximum DL HARQ processes configured for the UE
- A/N size: the number of maximum PDCCHs/PDSCHs for HARQ-ACK feedback corresponding to one BW.

#### 3.6.1. Case of Semi-static codebook

A/N size may be set to min {BW size, HARQ num}.

At this time, if A/N size = BW size, ACK/NACK bits constituting HARQ-ACK payload may be ordered in accordance with a slot (or time unit) index order.

Also, if A/N size = HARQ num, ACK/NACK bits constituting HARQ-ACK payload may be ordered in accordance with HARQ process ID index order.

In a CA status, such A/N size may be applied per CC. For example, A/N size of a corresponding CC may be determined through size comparison between BW size configured for the corresponding CC and HARQ num.

#### 3.6.2. Case of Dynamic codebook

A/N size may be set to min {dCB size, sCB size}. In this case, dCB size may mean A/N size calculated from a total DAI value indicated through DL scheduling DCI. Also, sCB size may mean A/N size (determined based on the method of the section 3.5.1) when it is assumed that semi-static codebook is applied to (to the same BW).

At this time, if A/N size = dCB size, ACK/NACK bits constituting HARQ-ACK payload may be ordered in accordance with a counter-DAI value order (indicated through DL scheduling DCI).

Also, if A/N size = sCB size, ACK/NACK bits constituting HARQ-ACK payload may be ordered in accordance with a slot (or time unit) index order.

FIG. 36 is a flow chart illustrating a method for transmitting ACK response information of a UE according to an example of the present invention.

In a method for transmitting ACK response information from a UE to a BS in a wireless communication system,

First of all, signal reception in a unit of Code Block Group (CBG) (or CBG-level) may be configured for the UE. At this time, the configuration information may be received through higher layer signaling (e.g., RRC signaling) transmitted from the BS.

In this way, the UE configured to receive a signal in a unit of CBG may receive downlink control information (DCI) for scheduling downlink data in a unit of transmission block (TB) (or TB-level) from the BS (S3610).

Subsequently, the UE determines whether to receive downlink data scheduled by the DCI (e.g., whether decoding has been successfully performed) (S3620).

If the UE successfully performs decoding of downlink data scheduled by the DCI, the UE may transmit ACK information to the BS repeatedly as much as the number of CBGs as ACK response information in a unit of TB for the downlink data (S3630). Alternatively, if the UE fails in decoding of downlink data scheduled by the DCI, the UE may transmit NACK information to the BS repeatedly as much as the number of CBGs as ACK response information in a unit of TB for the downlink data (S3640).

At this time, the UE may be configured to transmit ACK response information generated by the BS based on a semi-static codebook method.

Also, the UE may receive the DCI through a common search space.

In the aforementioned configurations, the downlink data may be received through a Physical Downlink Shared Channel (PDSCH).

FIG. 37 is a flow chart illustrating a method for transmitting ACK response information of a UE according to another embodiment of the present invention.

The UE according to the present invention may generate first ACK response information in a unit of CBG (or CBG-level), which corresponds to one or more first downlink data transmitted via one or more first cells configured with signal transmission in a unit of CBG (S3710). Also, the UE may generate second ACK response information in a unit of TB (or TB-level), which corresponds to one or more second downlink data transmitted via one or more second cells for which signal transmission in a unit of TB (S3720).

At this time, the first/second ACK response information in steps S3710 and 3720 may be generated simultaneously or time sequentially.

Subsequently, the UE may transmit the ACK response information combined with the first ACK response information and the second ACK response information to the BS (S3730).

In this case, if the first cells correspond to a plurality of cells, the UE may generate the first ACK response information based on the number of maximum CBGs configured for the plurality of first cells.

In more detail, if the first downlink data correspond to a plurality of downlink data, the UE may generate the first ACK response information to include third ACK response information in a unit of CBG, which is generated based on the number of maximum CBGs per the first downlink data.

In this case, the UE may be configured to transmit ACK response information generated by the BS based on a dynamic codebook method.

Also, the UE may receive first downlink control information (DCI) for scheduling one or more first downlink data and second DCI for scheduling one or more second downlink data. At this time, first downlink assignment index (DAI) included in the first DCI and a second DAI included in the second DCI may be counted individually.

In more detail, the first DAI may be DAI in a unit of CBG, and the second DAI may be DAI in a unit of TB.

At this time, the first DAI and the second DAI may correspond to DAI in a unit of TB.

Alternatively, the first DAI and the second DAI may include total DAI for the first DAI and total DAI for the second DAI.

In the aforementioned configurations, the ACK information may correspond to HARQ (Hybrid Automatic Repeat request) information.

Since each embodiment of the above-described proposed method can be considered as one method for implementing the present invention, it is apparent that each embodiment can be regarded as a proposed method. In addition, the present invention can be implemented not only using the proposed methods independently but also by combining (or merging) some of the proposed methods. In addition, it is possible to define a rule that information on whether the proposed methods are applied (or information on rules related to the proposed methods) should be transmitted from the eNB to the UE through a predefined signal (e.g., physical layer signal, higher layer signal, etc.).

## 4. Device configuration

FIG. 38 is a diagram illustrating configurations of a UE and a base station (BS) capable of being implemented by the embodiments proposed in the present invention. The UE and the BS shown in FIG. 38 are operated to implement the aforementioned embodiments of the method for transmitting or receiving ACK information between the UE and the BS.

A UE 1 may act as a transmission end on a UL and as a reception end on a DL. A base station (eNB or gNB) 100 may act as a reception end on a UL and as a transmission end on a DL.

That is, each of the UE and the base station may include a Transmitter (Tx) 10 or 110 and a Receiver (Rx) 20 or 120, for controlling transmission and reception of information, data, and/or messages, and an antenna 30 or 130 for transmitting and receiving information, data, and/or messages.

Each of the UE and the base station may further include a processor 40 or 140 for implementing the afore-described embodiments of the present disclosure and a memory 50 or 150 for temporarily or permanently storing operations of the processor 40 or 140.

The UE and the BS configured as above may be operated as follows.

According to an example applicable to the present invention, the UE 1 configured to receive a signal in a unit of CBG may receive Downlink Control Information (DCI) for scheduling downlink data in a unit of TB from the BS 100 through the receiver 20. Subsequently, the UE 1 may transmit ACK response information corresponding to decoding success or decoding failure of the downlink data in a unit of TB to the BS through the transmitter 10, wherein the ACK response information is repeatedly transmitted as much as the number of CBGs.

In response to this case, the BS 100 may transmit Downlink Control Information (DCI) for scheduling downlink data in a unit of TB to the LTE 1 configured to receive a signal in a unit of CBG, through the transmitter 110. Subsequently, the BS 100 may receive ACK response information corresponding to the downlink data in a unit of TB, from the UE 1 through the receiver 120, wherein the ACK response information is repeatedly transmitted as much as the number of CBGs.

According to another example applicable to the present invention, the UE 1 may generate first ACK response information in a unit of CBG, which corresponds to one or more first downlink data transmitted through one or more first cells configured with signal transmission in a unit of CBG, through the processor 40, and may generate second ACK response information in a unit of TB, which corresponds to one or more second downlink data transmitted through one or more second cells configured with signal transmission in a unit of TB, through the processor 40. Subsequently, the UE 1 may transmit the ACK response information combined with the first ACK response information and the second ACK response information, to the BS 100.

In response to this case, the BS 100 may transmit one or more first downlink data through one or more first cells configured with signal transmission in a unit of CBG, through the transmitter 110, and may transmit one or more second downlink data through one or more second cells configured with signal transmission in a unit of TB, through the transmitter 110. Subsequently, the BS 100 may receive the ACK response information combined with first ACK response information in a unit of CBG for the one or more first downlink data and second ACK response information in a unit of TB for the one or more second downlink data, from the UE 1 through the receiver 120.

The Tx and Rx of the UE and the base station may perform a packet modulation/demodulation function for data transmission, a high-speed packet channel coding function, OFDM packet scheduling, TDD packet scheduling, and/or channelization. Each of the UE and the base station of FIG. 38 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

Embodiments of the present disclosure may be achieved by various means, for example, hardware, firmware, software, or a combination thereof.

In a hardware configuration, the methods according to exemplary embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present disclosure may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

The scope of protection is defined by the appended set of claims.

## INDUSTRIAL APPLICABILITY

The present disclosure is applicable to various wireless access systems including a 3GPP system, and/or a 3GPP2 system. Besides these wireless access systems, the embodiments of the present disclosure are applicable to all technical fields in which the wireless access systems find their applications. Moreover, the proposed method can also be applied to mmWave communication using an ultra-high frequency band.

## Claims

1. A method for transmitting hybrid automatic repeat request-acknowledgement, HARQ-ACK, response information by a user equipment (1), UE, to a base station, BS, in a third generation partnership project, 3GPP,-based wireless communication system, the method comprising:

   generating (S3710, S3720), based on downlink assignment index, DAI, information, a single HARQ-ACK response for a plurality of downlink, DL, data signals each corresponding to different DL transmissions from the BS; and
   transmitting (S3730) the single HARQ-ACK response to the BS, wherein
   the plurality of DL data signals include one or more code block group, CBG,-based DL data signals and one or more transport block, TB,-based DL data signals, and wherein
   the single HARQ-ACK response includes first HARQ-ACK information for the one or more CBG-based DL data signals and second HARQ-ACK information for the one or more TB-based DL data signals,
   **characterized in that**,
   the UE (1) obtains a first counter DAI and a first total DAI based on CBG-based scheduling downlink control information, DCI, for the one or more CBG-based DL data signals, and obtains the second counter DAI and the second total DAI based on TB-based scheduling DCI for the one or more TB-based DL data signals, the CBG-based scheduling DCI being different from the TB-based scheduling DCI, and
   the single HARQ-ACK response is generated (S3710, S3720), based on the first counter DAI, the first total DAI, the second counter DAI, and the second total DAI.

2. The method according to claim 1, wherein the plurality of DL signals are received from a plurality of cell groups, and wherein the plurality of cell groups include a first cell group from which the one or more CBG-based DL data signals are received, and a second cell group from which the one or more TB-based DL data signals are received.

3. The method according to claim 2,
   wherein the first counter DAI and the first total DAI are applied for the first cell group and the second counter DAI and the second total DAI are applied for the second cell group.

4. The method according to claim 2, wherein a number of CBGs is configured for each cell of the first cell group, respectively and
   wherein a payload size of the first HARQ-ACK information is determined based on a maximum number of CBGs from among the number of CBGs configured for each cell of the first cell group.

5. The method according to any one of the preceding claims, wherein the single HARQ-ACK response is generated based on a dynamic codebook method.

6. A computer-readable medium (50) comprising instructions which, when executed by a computer, cause the computer to carry out the method of any one of claims 1 to 5.

7. A method for receiving, by a base station (100), BS, hybrid automatic repeat request-acknowledgement, HARQ-ACK, response information from a user equipment, UE, in a third generation partnership project, 3GPP,-based wireless communication system, the method comprising:

   transmitting a plurality of downlink, DL, data signals each corresponding to different DL transmissions to the UE; and
   receiving (S3730) a single HARQ-ACK response for the plurality of DL data signals from the UE,
   wherein the plurality of DL data signals include one or more code block group, CBG,-based DL data signals and one or more transport block, TB,-based DL data signals, and wherein
   the single HARQ-ACK response includes first HARQ-ACK information for the one or more CBG-based DL data signals and second HARQ-ACK information for the one or more TB-based DL data signals,
   **characterized in that**,

the BS (100) transmits a first counter DAI and a first total DAI through CBG-based scheduling downlink control information, DCI, for the one or more CBG-based DL data signals, and transmits the second counter DAI and the second total DAI through TB-based scheduling DCI for the one or more TB-based DL data signals, the CBG-based scheduling DCI being different from the TB-based scheduling DCI, and
the first counter DAI, the first total DAI, the second counter DAI, and the second total DAI are used for generating the single HARQ-ACK response.

**8.** The method according to claim 7, wherein the plurality of DL signals are transmitted via a plurality of cell groups, and wherein the plurality of cell groups include a first cell group via which the one or more CBG-based DL data signals are transmitted, and a second cell group via which the one or more TB-based DL data signals are transmitted.

**9.** The method according to claim 8,
wherein the first counter DAI and the first total DAI are applied for the first cell group and the second counter DAI and the second total DAI are applied for the second cell group.

**10.** A user equipment, UE, (1) configured to operate in a third generation partnership project, 3GPP,-based wireless communication system, the UE (1) comprising:

a transmitter (10); and
a processor (40) configured to generate (53710, S3720), based on downlink assignment index, DAI, information, a single hybrid automatic repeat request-acknowledgement, HARQ-ACK, response for a plurality of downlink, DL, data signals each corresponding to different DL transmissions from a base station, BS, and to transmit (S3730) the single HARQ-ACK response through the transmitter (10) to the BS,
wherein
the plurality of DL data signals include one or more code block group, CBG,-based DL data signals and one or more transport block, TB,-based DL data signals, and wherein
the single HARQ-ACK response includes first HARQ-ACK information for the one or more CBG-based DL data signals and second HARQ-ACK information for the one or more TB-based DL data signals,
**characterized in that**,
the processor (10) obtains a first counter DAI and a first total DAI based on CBG-based scheduling downlink control information, DCI, for the one or more CBG-based DL data signals, and obtains the second counter DAI and the second total DAI based on TB-based scheduling DCI for the one or more TB-based DL data signals, the CBG-based scheduling DCI being different from the TB-based scheduling DCI, and
the single HARQ-ACK response is generated (S3710, S3720), based on the first counter DAI, the first total DAI, the second counter DAI, and the second total DAI.

**11.** A base station, BS, (100) configured to operate in a third generation partnership project, 3GPP,-based wireless communication system, the BS comprising:

a transmitter (110);
a receiver (120); and
a processor (140) configured to transmit, through the transmitter (110), a plurality of downlink, DL, data signals each corresponding to different DL transmissions to a user equipment, UE, and to receive (S3730) a single HARQ-ACK response for the plurality of DL data signals through the receiver (120) from the UE,
wherein
the plurality of DL data signals include one or more code block group, CBG,-based DL data signals and one or more transport block, TB,-based DL data signals, and wherein
the single HARQ-ACK response includes first HARQ-ACK information for the one or more CBG-based DL data signals and second HARQ-ACK information for the one or more TB-based DL data signals,
**characterized in that**,
the processor (140) transmits a first counter DAI and a first total DAI through CBG-based scheduling downlink control information, DCI, for the one or more CBG-based DL data signals, and transmits the second counter DAI and the second total DAI through TB-based scheduling DCI for the one or more TB-based DL data signals, the CBG-based scheduling DCI being different from the TB-based scheduling DCI, and
the first counter DAI, the first total DAI, the second counter DAI, and the second total DAI are used for generating the single HARQ-ACK response.

**Patentansprüche**

1. Verfahren zum Übertragen von Antwortinformationen für eine hybride automatische Wiederholungsanforderungsbestätigung, HARQ-ACK, durch eine Benutzerausrüstung (1), UE, an eine Basisstation, BS, in einem auf einem Partnerschaftsprojekt der dritten Generation, 3GPP, basierenden drahtlosen Kommunikationssystem, das Verfahren umfassend:

   Erzeugen (S3710, S3720), basierend auf Abwärtsstrecken-Zuweisungsindex- bzw. DAI-Informationen, einer einzelnen HARQ-ACK-Antwort für eine Vielzahl von Abwärtsstrecken- bzw. DL-Datensignalen, die jedes mit verschiedenen DL-Übertragungen von der BS korrespondieren; und
   Übertragen (S3730) der einzelnen HARQ-ACK-Antwort an die BS, wobei
   die Vielzahl von DL-Datensignalen ein oder mehrere Codeblockgruppen- bzw. CBG-basierte DL-Datensignale und ein oder mehrere Transportblock- bzw. TB-basierte DL-Datensignale enthält und wobei die einzelne HARQ-ACK-Antwort erste HARQ-ACK-Informationen für das eine oder die mehreren CBG-basierten DL-Datensignale und zweite HARQ-ACK-Informationen für das eine oder die mehreren TB-basierten DL-Datensignale enthält,
   **dadurch gekennzeichnet, dass**
   die UE (1) einen ersten Zähler-DAI und einen ersten Gesamt-DAI basierend auf CBG-basierten Terminierung-Abwärtsstrecken-Steuerinformationen, DCI, für das eine oder die mehreren CBG-basierten DL-Datensignale erlangt und den zweiten Zähler-DAI und den zweiten Gesamt-DAI basierend auf TB-basierten Terminierung-DCI für das eine oder die mehreren TB-basierten DL-Datensignale erlangt, wobei die CBG-basierten Terminierung-DCI von den TB-basierten Terminierung-DCI verschieden sind, und
   die einzelne HARQ-ACK-Antwort basierend auf dem ersten Zähler-DAI, dem ersten Gesamt-DAI, dem zweiten Zähler-DAI und dem zweiten Gesamt-DAI erzeugt wird (S3710, S3720).

2. Verfahren nach Anspruch 1, wobei die Vielzahl von DL-Signalen von einer Vielzahl von Zellgruppen empfangen wird und
   wobei die Vielzahl von Zellgruppen eine erste Zellgruppe, von der das eine oder die mehreren CBG-basierten DL-Datensignale empfangen werden, und eine zweite Zellgruppe, von der das eine oder die mehreren TB-basierten DL-Datensignale empfangen werden, enthält.

3. Verfahren nach Anspruch 2,
   wobei der erste Zähler-DAI und der erste Gesamt-DAI für die erste Zellgruppe angewandt werden und der zweite Zähler-DAI und der zweite Gesamt-DAI für die zweite Zellgruppe angewandt werden.

4. Verfahren nach Anspruch 2, wobei eine Anzahl von CBGs jeweils für jede Zelle der ersten Zellgruppe konfiguriert ist und
   wobei eine Nutzlastgröße der ersten HARQ-ACK-Informationen basierend auf einer maximalen Anzahl von CBGs aus der Anzahl von CBGs, die für jede Zelle der ersten Zellgruppe konfiguriert sind, bestimmt wird.

5. Verfahren nach einem der vorhergehenden Ansprüche, wobei die einzelne HARQ-ACK-Antwort basierend auf einem dynamischen Codebuch-Verfahren erzeugt wird.

6. Computerlesbares Medium (50), umfassend Anweisungen, die, wenn sie durch einen Computer ausgeführt werden, den Computer veranlassen, das Verfahren nach einem der Ansprüche 1 bis 5 auszuführen.

7. Verfahren zum Empfangen, durch eine Basisstation (100), BS, von Antwortinformationen für eine hybride automatische Wiederholungsanforderungsbestätigung, HARQ-ACK, von einer Benutzerausrüstung, UE, in einem auf einem Partnerschaftsprojekt der dritten Generation, 3GPP, basierenden drahtlosen Kommunikationssystem, das Verfahren umfassend:

   Übertragen einer Vielzahl von Abwärtsstrecken- bzw. DL-Datensignalen, die jedes mit verschiedenen DL-Übertragungen korrespondieren, an die UE; und
   Empfangen (S3730) einer einzelnen HARQ-ACK-Antwort für die Vielzahl von DL-Datensignalen von der UE, wobei
   die Vielzahl von DL-Datensignalen ein oder mehrere Codeblockgruppen- bzw. CBG-basierte DL-Datensignale und ein oder mehrere Transportblock- bzw. TB-basierte DL-Datensignale enthält und wobei
   die einzelne HARQ-ACK-Antwort erste HARQ-ACK-Informationen für das eine oder die mehreren CBG-basierten DL-Datensignale und zweite HARQ-ACK-Informationen für das eine oder die mehreren TB-basierten DL-Datensignale enthält,
**dadurch gekennzeichnet, dass**
die BS (100) einen ersten Zähler-DAI und einen ersten Gesamt-DAI durch CBG-basierte Terminierung-Abwärtsstrecken-Steuerinformationen, DCI, für das eine oder die mehreren CBG-basierten DL-Datensignale überträgt und den zweiten Zähler-DAI und den zweiten Gesamt-DAI durch TB-basierte Terminierung-DCI für das eine oder die mehreren TB-basierten DL-Datensignale überträgt, wobei die CBG-basierten Terminierung-DCI von den TB-basierten Terminierung-DCI verschieden sind, und
der erste Zähler-DAI, der erste Gesamt-DAI, der zweite Zähler-DAI und der zweite Gesamt-DAI zum Erzeugen der einzelnen HARQ-ACK-Antwort verwendet werden.

**8.** Verfahren nach Anspruch 7, wobei die Vielzahl von DL-Signalen über eine Vielzahl von Zellgruppen übertragen wird und
wobei die Vielzahl von Zellgruppen eine erste Zellgruppe, über die das eine oder die mehreren CBG-basierten DL-Datensignale übertragen werden, und eine zweite Zellgruppe, über die das eine oder die mehreren TB-basierten DL-Datensignale übertragen werden, enthält.

**9.** Verfahren nach Anspruch 8,
wobei der erste Zähler-DAI und der erste Gesamt-DAI für die erste Zellgruppe angewandt werden und der zweite Zähler-DAI und der zweite Gesamt-DAI für die zweite Zellgruppe angewandt werden.

**10.** Benutzerausrüstung, UE, (1) konfiguriert zum Betriebenwerden in einem auf einem Partnerschaftsprojekt der dritten Generation, 3GPP, basierenden drahtlosen Kommunikationssystem, die UE (1) umfassend:

einen Sender (10); und
einen Prozessor (40), konfiguriert zum Erzeugen (S3710, S3720), basierend auf Abwärtsstrecken-Zuweisungsindex- bzw. DAI-Informationen, einer einzelnen Antwort für eine hybride automatische Wiederholungsanforderungsbestätigung, HARQ-ACK, für eine Vielzahl von Abwärtsstrecken- bzw. DL-Datensignalen, die jedes mit verschiedenen DL-Übertragungen von einer Basisstation, BS, korrespondieren, und zum Übertragen (S3730) der einzelnen HARQ-ACK-Antwort durch den Sender (10) an die BS, wobei
die Vielzahl von DL-Datensignalen ein oder mehrere Codeblockgruppen- bzw. CBG-basierte DL-Datensignale und ein oder mehrere Transportblock- bzw. TB-basierte DL-Datensignale enthält und wobei
die einzelne HARQ-ACK-Antwort erste HARQ-ACK-Informationen für das eine oder die mehreren CBG-basierten DL-Datensignale und zweite HARQ-ACK-Informationen für das eine oder die mehreren TB-basierten DL-Datensignale enthält,
**dadurch gekennzeichnet, dass**
der Prozessor (10) einen ersten Zähler-DAI und einen ersten Gesamt-DAI basierend auf CBG-basierten Terminierung-Abwärtsstrecken-Steuerinformationen, DCI, für das eine oder die mehreren CBG-basierten DL-Datensignale erlangt und den zweiten Zähler-DAI und den zweiten Gesamt-DAI basierend auf TB-basierten Terminierung-DCI für das eine oder die mehreren TB-basierten DL-Datensignale erlangt, wobei die CBG-basierten Terminierung-DCI von den TB-basierten Terminierung-DCI verschieden sind, und
die einzelne HARQ-ACK-Antwort basierend auf dem ersten Zähler-DAI, dem ersten Gesamt-DAI, dem zweiten Zähler-DAI und dem zweiten Gesamt-DAI erzeugt wird (S3710, S3720).

**11.** Basisstation, BS, (100) konfiguriert zum Betriebenwerden in einem auf einem Partnerschaftsprojekt der dritten Generation, 3GPP, basierenden drahtlosen Kommunikationssystem, die BS umfassend:

einen Sender (110);
einen Empfänger (120); und
einen Prozessor (140), konfiguriert zum Übertragen, durch den Sender (110), einer Vielzahl von Abwärtsstrecken- bzw. DL-Datensignalen, die jedes mit verschiedenen DL-Übertragungen korrespondieren, an eine Benutzerausrüstung, UE, und zum Empfangen (S3730) einer einzelnen HARQ-ACK-Antwort für die Vielzahl von DL-Datensignalen durch den Empfänger (120) von der UE, wobei
die Vielzahl von DL-Datensignalen ein oder mehrere Codeblockgruppen- bzw. CBG-basierte DL-Datensignale und ein oder mehrere Transportblock- bzw. TB-basierte DL-Datensignale enthält und wobei
die einzelne HARQ-ACK-Antwort erste HARQ-ACK-Informationen für das eine oder die mehreren CBG-basierten DL-Datensignale und zweite HARQ-ACK-Informationen für das eine oder die mehreren TB-basierten DL-Datensignale enthält,
**dadurch gekennzeichnet, dass**

der Prozessor (140) einen ersten Zähler-DAI und einen ersten Gesamt-DAI durch CBG-basierte Terminierung-Abwärtsstrecken-Steuerinformationen, DCI, für das eine oder die mehreren CBG-basierten DL-Datensignale überträgt und den zweiten Zähler-DAI und den zweiten Gesamt-DAI durch TB-basierte Terminierung-DCI für das eine oder die mehreren TB-basierten DL-Datensignale überträgt, wobei die CBG-basierten Terminierung-DCI von den TB-basierten Terminierung-DCI verschieden sind, und
der erste Zähler-DAI, der erste Gesamt-DAI, der zweite Zähler-DAI und der zweite Gesamt-DAI zum Erzeugen der einzelnen HARQ-ACK-Antwort verwendet werden.

## Revendications

1. Procédé de transmission d'informations de réponse à un accusé de réception de demande de répétition automatique hybride, HARQ-ACK, par un équipement utilisateur (l), UE, à une station de base, BS, dans un système de communication sans fil selon le projet de partenariat de troisième génération, 3GPP, le procédé comprenant :

   la génération (S3710, S3720), sur la base d'informations d'indice d'assignation de liaison descendante, DAI, d'une réponse HARQ-ACK unique pour une pluralité de signaux de données de liaison descendante, DL, correspondant chacun à différentes transmissions DL à partir de la station de base ; et
   la transmission (S3730) de la réponse HARQ-ACK unique à la BS,
   dans lequel la pluralité de signaux de données DL comporte un ou plusieurs signaux de données DL basés sur des groupes de blocs de code, CBG, et un ou plusieurs signaux de données DL basés sur des blocs de transport, TB, et dans lequel
   la réponse HARQ-ACK unique comporte des premières informations HARQ-ACK pour les un ou plusieurs signaux de données DL basés sur CBG et des secondes informations HARQ-ACK pour les un ou plusieurs signaux de données DL basés sur TB,
   **caractérisé en ce que**,
   l'UE (1) obtient un premier DAI de compteur et un premier DAI total basés sur des informations de commande de liaison descendante, DCI, d'ordonnancement basées sur CBG, pour les un ou plusieurs signaux de données DL basés sur CBG, et obtient le second DAI de compteur et le second DAI total basés sur les DCI d'ordonnancement basées sur TB pour les un ou plusieurs signaux de données DL basés sur TB, les DCI d'ordonnancement basées sur CBG étant différentes des DCI d'ordonnancement basées sur TB, et
   la réponse HARQ-ACK unique est générée (S3710, S3720), sur la base du premier DAI de compteur, du premier DAI total, du second deuxième DAI de compteur et du second DAI total.

2. Procédé selon la revendication 1, dans lequel la pluralité de signaux DL est reçue à partir d'une pluralité de groupes de cellules, et
   dans lequel la pluralité de groupes de cellules comprend un premier groupe de cellules à partir duquel les un ou plusieurs signaux de données DL basés sur CBG sont reçus, et un second groupe de cellules à partir duquel les un ou plusieurs signaux de données DL basés sur TB sont reçus.

3. Procédé selon la revendication 2,
   dans lequel le premier DAI de compteur et le premier DAI total sont appliqués pour le premier groupe de cellules et le second DAI de compteur et le second DAI total sont appliqués pour le second groupe de cellules.

4. Procédé selon la revendication 2, dans lequel un nombre de CBG est configuré pour chaque cellule du premier groupe de cellules, respectivement et
   dans lequel la taille de la charge utile des premières informations HARQ-ACK est déterminée sur la base d'un nombre maximum de CBG parmi le nombre de CBG configurés pour chaque cellule du premier groupe de cellules.

5. Procédé selon l'une quelconque des revendications précédentes, dans lequel la réponse HARQ-ACK unique est générée selon un procédé de livre de codes dynamique.

6. Support lisible par ordinateur (50) comprenant des instructions qui, à leur exécution par un ordinateur, amènent l'ordinateur à entreprendre le procédé selon l'une quelconque des revendications 1 à 5.

7. Procédé de réception, par une station de base (100), BS, d'informations de réponse à un accusé de réception de demande de répétition automatique hybride, HARQ-ACK, à partir d'un équipement utilisateur, UE, dans un système de communication sans fil selon le projet de partenariat de troisième génération, 3GPP, le procédé comprenant :

la transmission d'une pluralité de signaux de données de liaison descendante, DL, correspondant chacun à différentes transmissions DL à l'UE ; et

la réception (S3730) d'une réponse HARQ-ACK unique pour la pluralité de signaux de données DL provenant de l'UE, dans lequel

la pluralité de signaux de données DL comporte un ou plusieurs signaux de données DL basés sur des groupes de blocs de code, CBG, et un ou plusieurs signaux de données DL basés sur des blocs de transport, TB, et dans lequel la réponse HARQ-ACK unique comporte des premières informations HARQ-ACK pour les un ou plusieurs signaux de données DL basés sur CBG et des secondes informations HARQ-ACK pour les un ou plusieurs signaux de données DL basés sur TB,

**caractérisé en ce que**,

la BS (100) transmet un premier DAI de compteur et un premier DAI total par le biais d'informations de commande de liaison descendante, DCI, d'ordonnancement basées sur CBG, pour les un ou plusieurs signaux de données DL basés sur CBG, et transmet le second DAI de compteur et le second DAI total par le biais de DCI d'ordonnancement basées sur TB pour les un ou plusieurs signaux de données DL basés sur TB, les DCI d'ordonnancement basées sur CBG étant différentes des DCI d'ordonnancement basées sur TB, et

le premier DAI de compteur, le premier DAI total, le second DAI de compteur et le second DAI total sont utilisés pour générer la réponse HARQ-ACK unique.

**8.** Procédé selon la revendication 7, dans lequel la pluralité de signaux DL est transmise par l'intermédiaire d'une pluralité de groupes de cellules, et
dans lequel la pluralité de groupes de cellules comporte un premier groupe de cellules par l'intermédiaire duquel les un ou plusieurs signaux de données DL basés sur CBG sont transmis, et un second groupe de cellules par l'intermédiaire duquel les un ou plusieurs signaux de données DL basés sur TB sont transmis.

**9.** Procédé selon la revendication 8,
dans lequel le premier DAI de compteur et le premier DAI total sont appliqués pour le premier groupe de cellules et le second DAI de compteur et le second DAI total sont appliqués pour le second groupe de cellules.

**10.** Equipement utilisateur, UE, (1) configuré pour fonctionner dans un système de communication sans fil selon le projet de partenariat de troisième génération, 3GPP, l'UE (1) comprenant :

un émetteur (10) ; et

un processeur (40) configuré pour générer (S3710, S3720), sur la base d'informations d'indice d'assignation de liaison descendante, DAI, une réponse à un accusé de réception de demande de répétition automatique hybride, HARQ-ACK, pour une pluralité de signaux de données de liaison descendante, DL, correspondant chacun à différentes transmissions DL à partir d'une station de base, BS, et transmettre (S3730) la réponse HARQ-ACK unique par le biais de l'émetteur (10) à la BS,

dans lequel

la pluralité de signaux de données DL comporte un ou plusieurs signaux de données DL basés sur des groupes de blocs de code, CBG, et un ou plusieurs signaux de données DL basés sur des blocs de transport, TB, et dans lequel la réponse HARQ-ACK unique comporte des premières informations HARQ-ACK pour les un ou plusieurs signaux de données DL basés sur CBG et des secondes informations HARQ-ACK pour les un ou plusieurs signaux de données DL basés sur TB,

**caractérisé en ce que**,

le processeur (10) obtient un premier DAI de compteur et un premier DAI total sur la base d'informations de commande de liaison descendante, DCI, d'ordonnancement basées sur CBG, pour les un ou plusieurs signaux de données DL basés sur CBG, et obtient le second DAI de compteur et le second DAI total sur la base de DCI d'ordonnancement basées sur TB pour les un ou plusieurs signaux de données DL basés sur TB, les DCI d'ordonnancement basées sur CBG étant différentes des DCI d'ordonnancement basées sur TB, et

la réponse HARQ-ACK unique est générée (S3710, S3720), sur la base du premier DAI de compteur, du premier DAI total, du second DAI de compteur et du second DAI total.

**11.** Station de base, BS, (100) configurée pour fonctionner dans un système de communication sans fil selon le projet de partenariat de troisième génération, 3GPP, la station de base comprenant :

un émetteur (110) ;

un récepteur (120) ; et

un processeur (140) configuré pour transmettre, par le biais de l'émetteur (110), une pluralité de signaux de données de liaison descendante, DL, correspondant chacun à différentes transmissions DL à un équipement utilisateur, UE, et recevoir (S3730) une réponse HARQ-ACK unique pour la pluralité de signaux de données DL par le biais du récepteur (120) de l'UE,

dans laquelle

la pluralité de signaux de données DL comporte un ou plusieurs signaux de données DL basés sur des groupes de blocs de code, CBG, et un ou plusieurs signaux de données DL basés sur des blocs de transport, TB, et dans laquelle la réponse HARQ-ACK unique comporte des premières informations HARQ-ACK pour les un ou plusieurs signaux de données DL basés sur CBG et des secondes informations HARQ-ACK pour les un ou plusieurs signaux de données DL basés sur TB

**caractérisée en ce que**,

le processeur (140) transmet un premier DAI de compteur et un premier DAI total par le biais d'informations de commande de liaison descendante, DCI, d'ordonnancement basées sur CBG, pour les un ou plusieurs signaux de données DL basés sur CBG, et transmet le second DAI de compteur et le second DAI total par le biais de DCI d'ordonnancement basées sur TB pour les un ou plusieurs signaux de données DL basés sur TB, les DCI d'ordonnancement basées sur CBG étant différentes des DCI d'ordonnancement basées sur TB, et

le premier DAI de compteur, le premier DAI total, le second DAI de compteur et le second DAI total sont utilisés pour générer la réponse HARQ-ACK unique.

FIG. 1

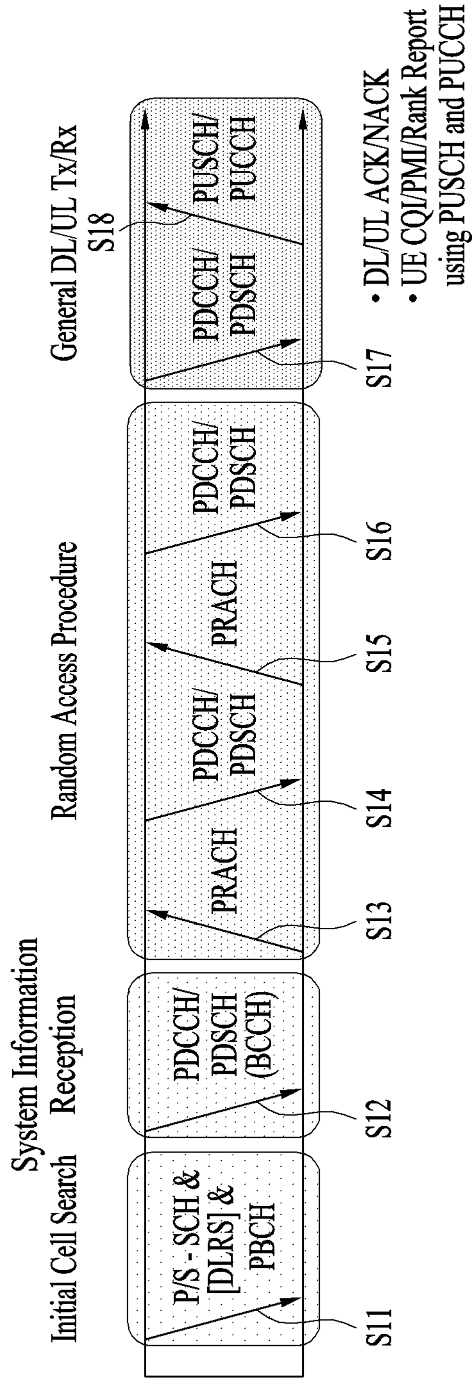
Initial Cell Search
P/S - SCH & [DLRS] & PBCH
S11
System Information Reception
PDCCH/ PDSCH (BCCH)
S12
Random Access Procedure
PRACH
S13
PDCCH/ PDSCH
S14
PRACH
S15
PDCCH/ PDSCH
S16
General DL/UL Tx/Rx
PDCCH/ PDSCH
S17
S18
PUSCH/ PUCCH
• DL/UL ACK/NACK
• UE CQI/PMI/Rank Report using PUSCH and PUCCH

FIG. 2

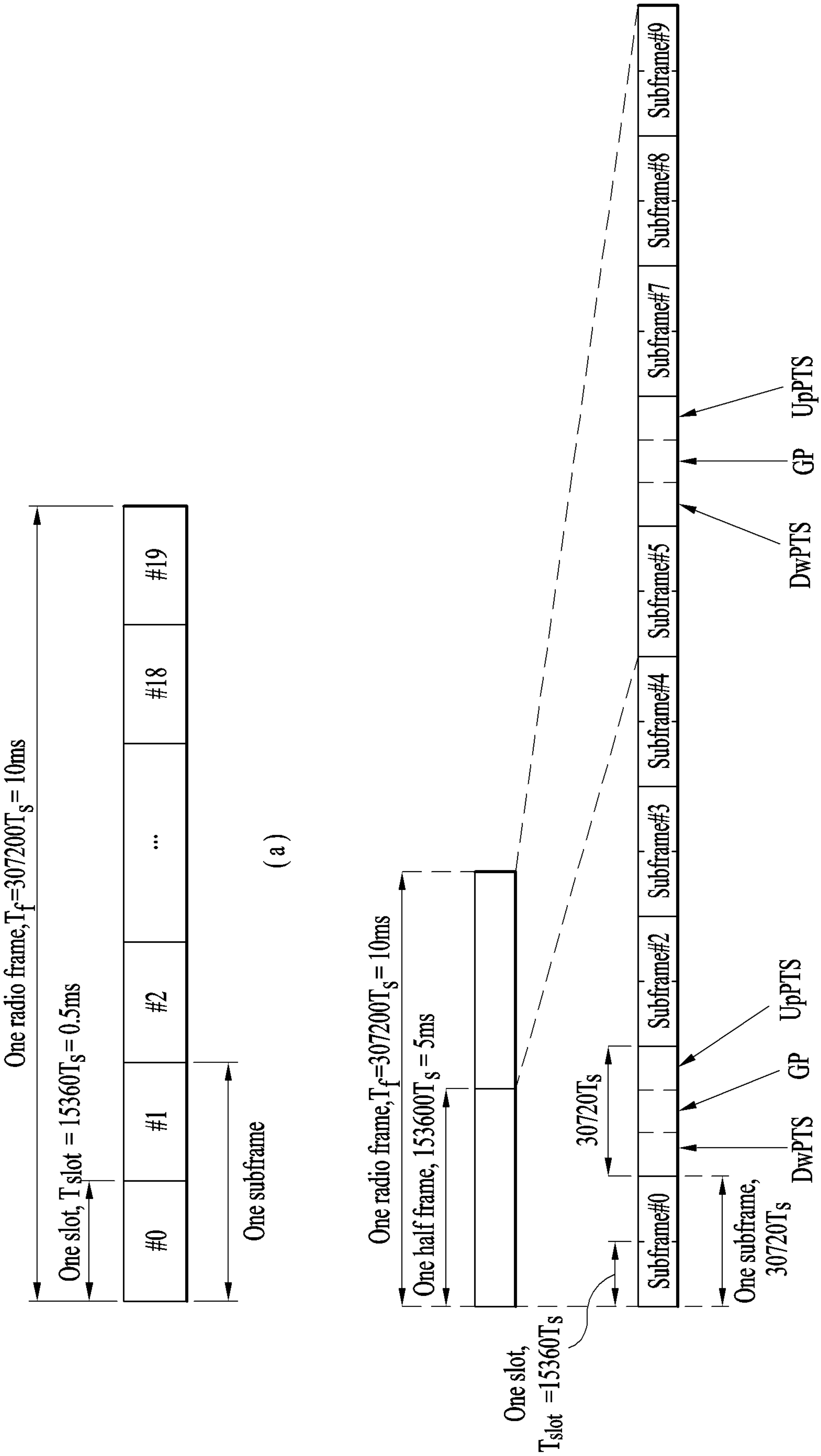

One radio frame, $T_f$=307200$T_s$= 10ms
One slot, $T_{slot}$ = 15360$T_s$= 0.5ms
#0
#1
#2
...
#18
#19
One subframe
(a)
One radio frame, $T_f$=307200$T_s$= 10ms
One half frame, 153600$T_s$ = 5ms
One slot, $T_{slot}$ =15360$T_s$
30720$T_s$
Subframe#0
Subframe#2
Subframe#3
Subframe#4
Subframe#5
Subframe#7
Subframe#8
Subframe#9
DwPTS
GP
UpPTS
DwPTS
GP
UpPTS
One subframe, 30720$T_s$
(b)

FIG. 3

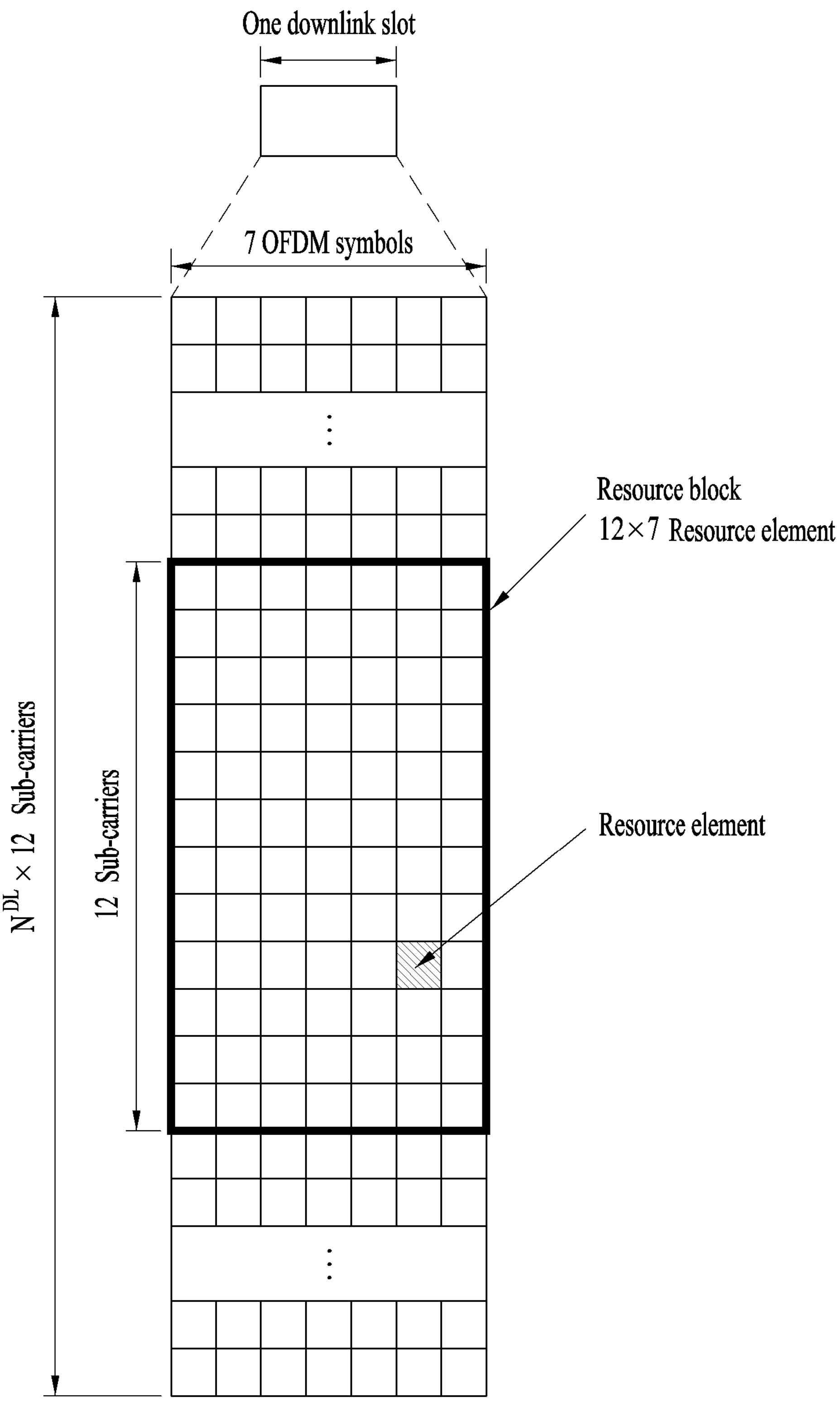
One downlink slot
7 OFDM symbols
Resource block
12×7 Resource element
Resource element
$N^{DL} \times 12$ Sub-carriers
12 Sub-carriers

FIG. 4

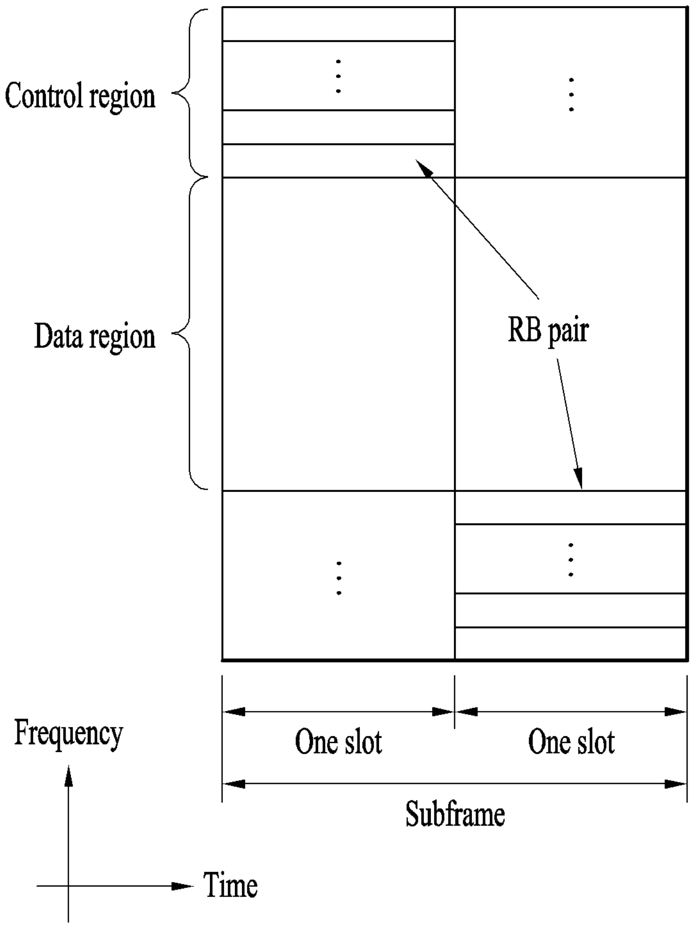
Control region
Data region
RB pair
Frequency
Time
One slot
One slot
Subframe

FIG. 5

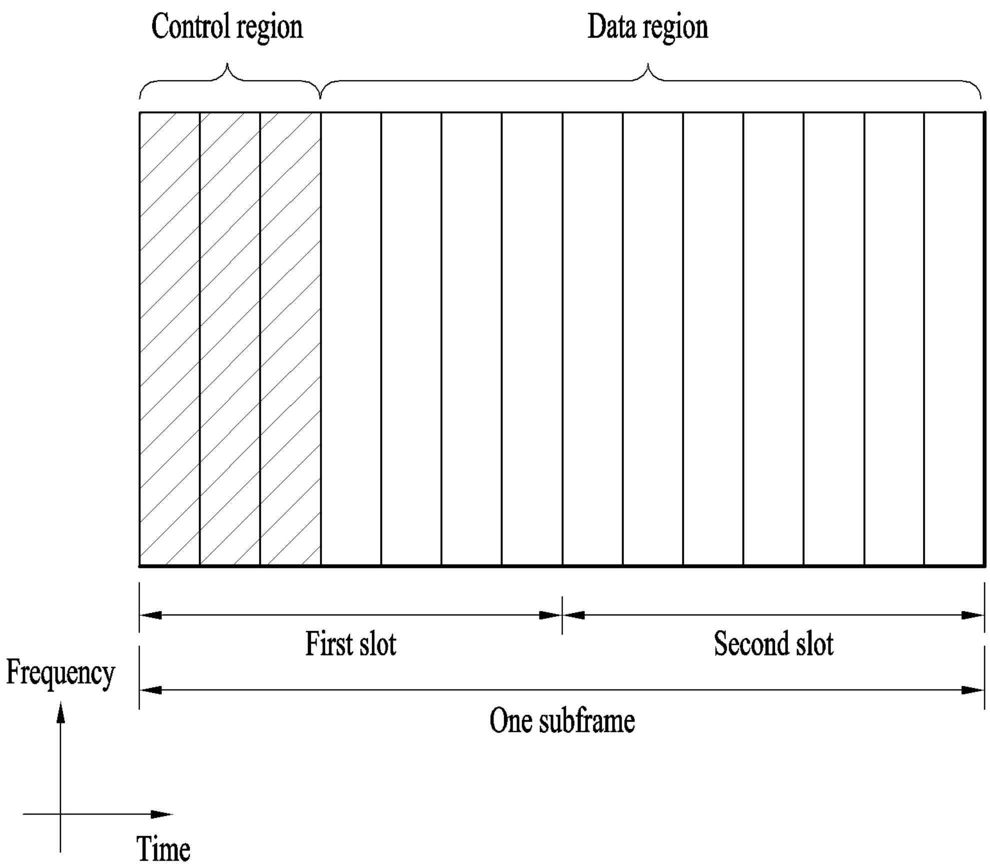
Control region
Data region
First slot
Second slot
One subframe
Frequency
Time

FIG. 6

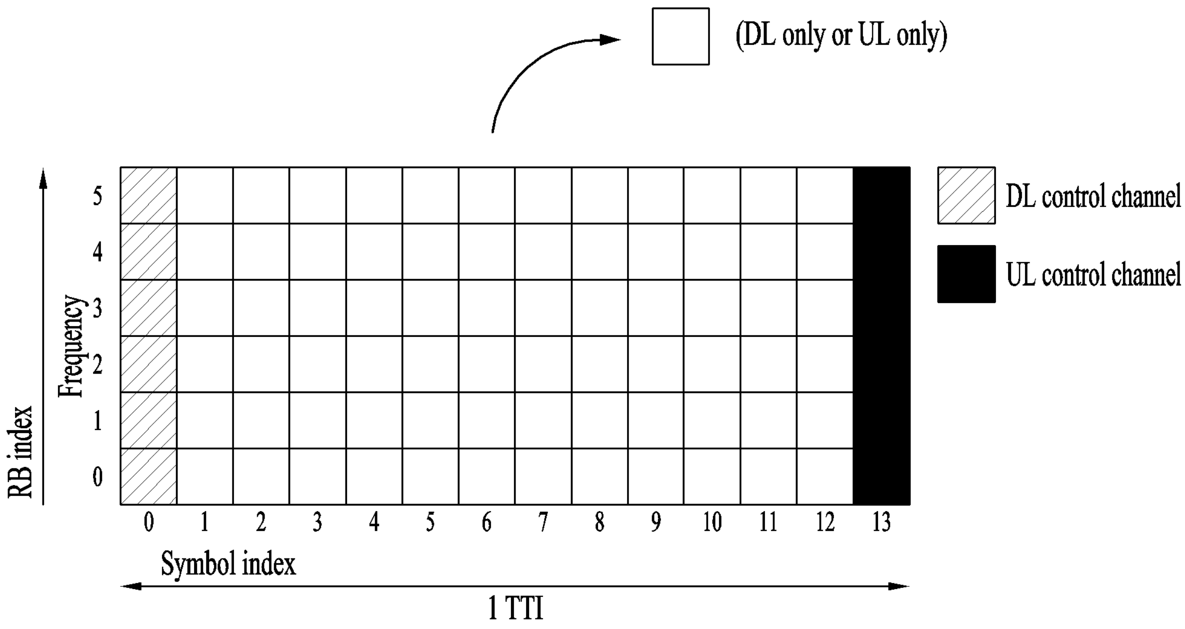
(DL only or UL only)
DL control channel
UL control channel
RB index
Frequency
5
4
3
2
1
0
0
1
2
3
4
5
6
7
8
9
10
11
12
13
Symbol index
1 TTI

FIG. 7

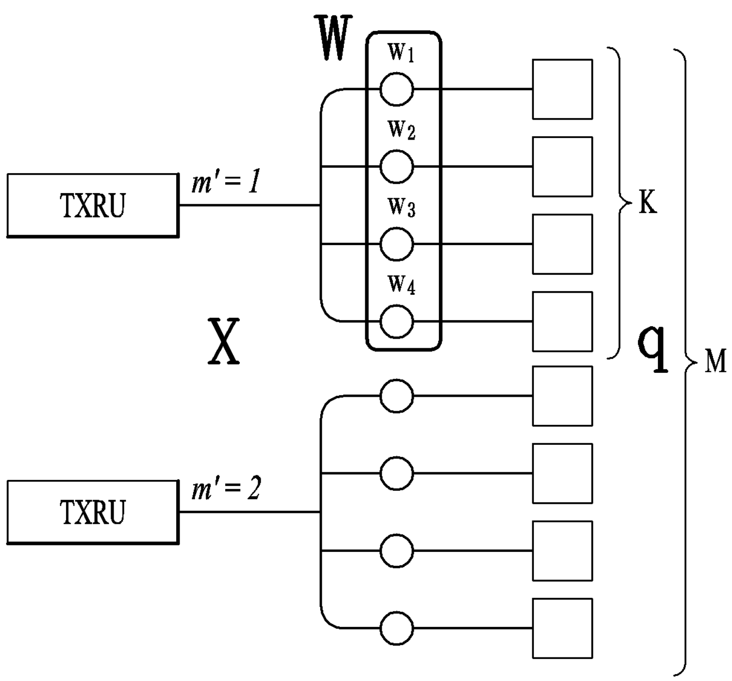
W
X
TXRU
m' = 1
TXRU
m' = 2
W1
W2
W3
W4
K
q
M

FIG. 8

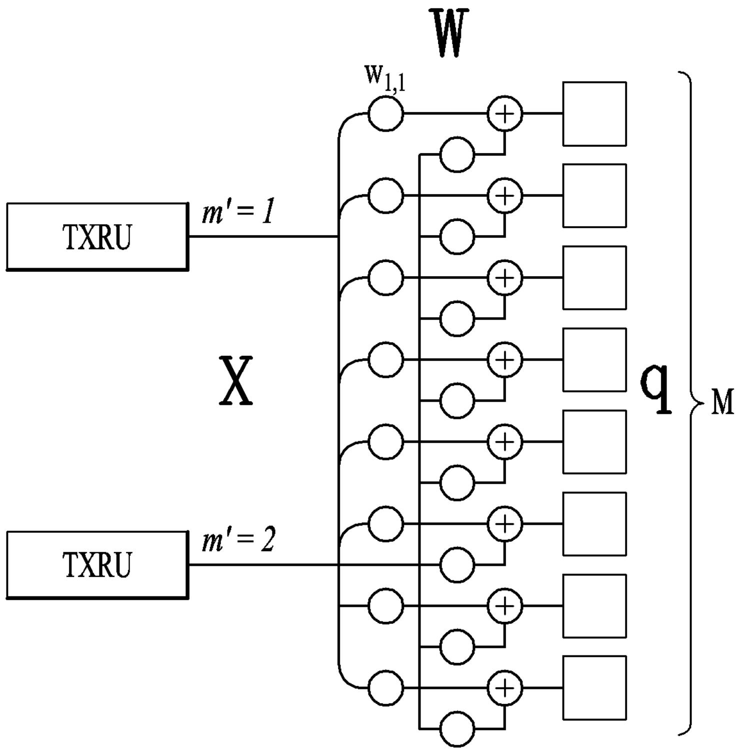

FIG. 9

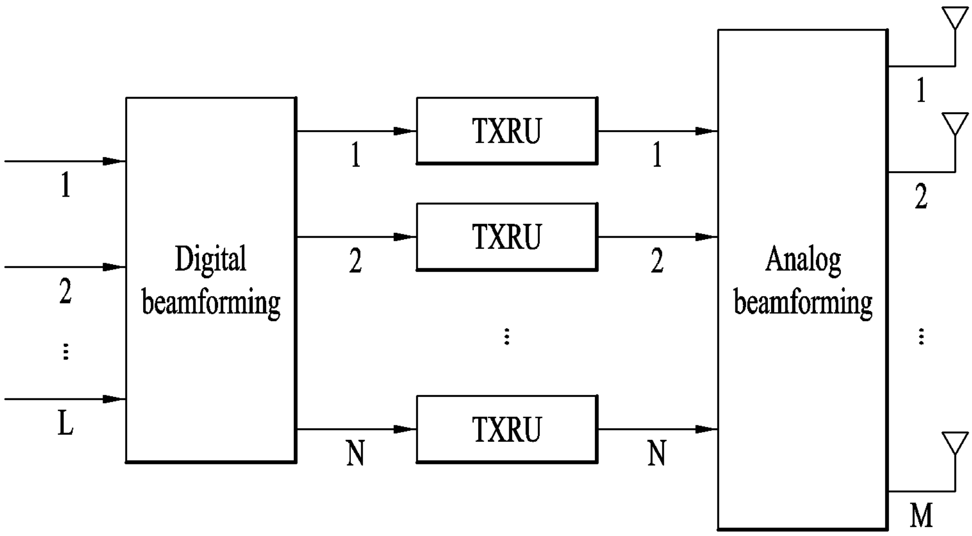
1
2
⋮
L
Digital
beamforming
1
2
N
TXRU
TXRU
⋮
TXRU
1
2
N
Analog
beamforming
1
2
⋮
M

FIG. 10

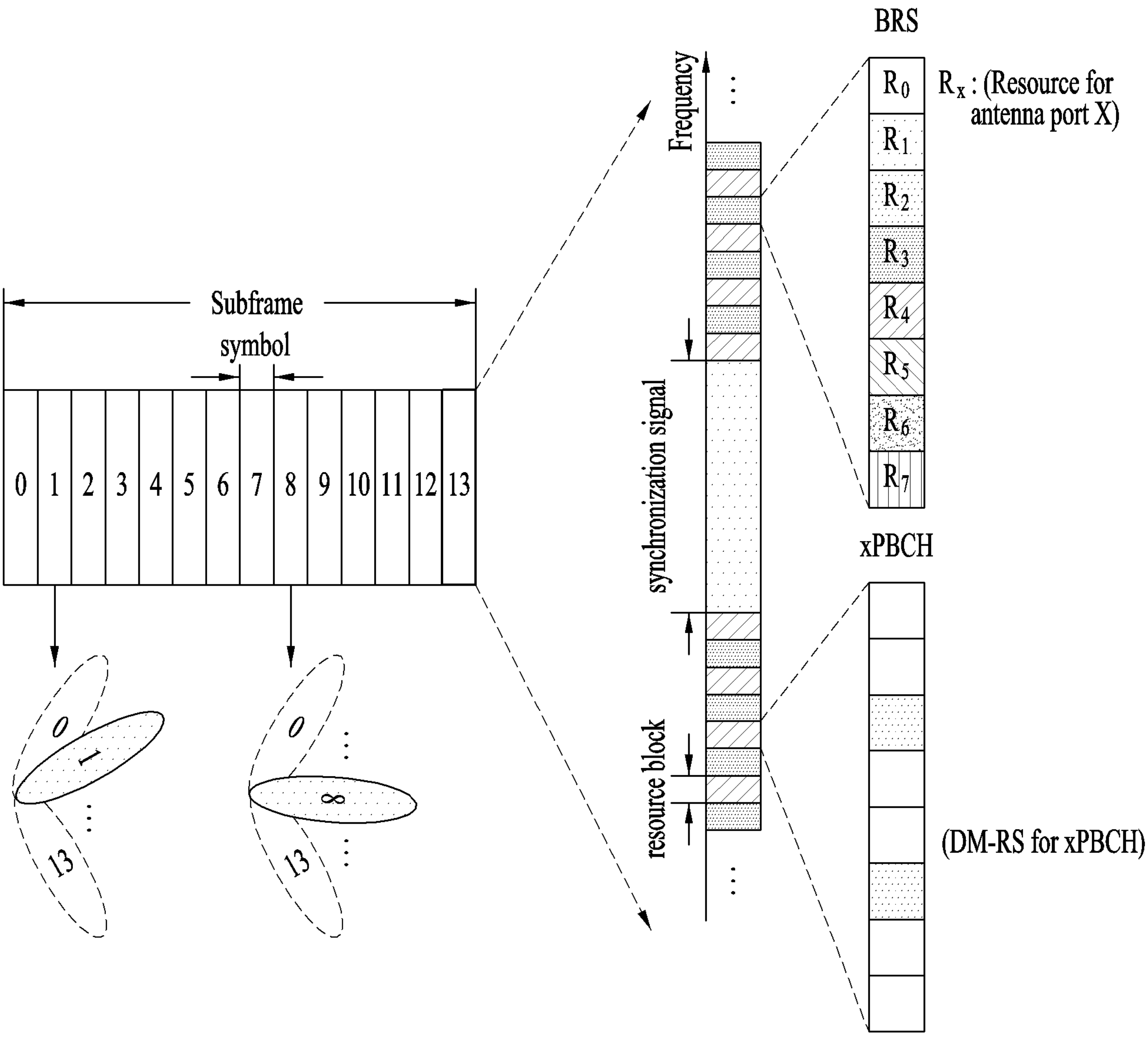
Subframe
symbol
0
1
2
3
4
5
6
7
8
9
10
11
12
13
Frequency
synchronization signal
resource block
BRS
$R_0$
$R_1$
$R_2$
$R_3$
$R_4$
$R_5$
$R_6$
$R_7$
$R_x$ : (Resource for antenna port X)
xPBCH
(DM-RS for xPBCH)

FIG. 11

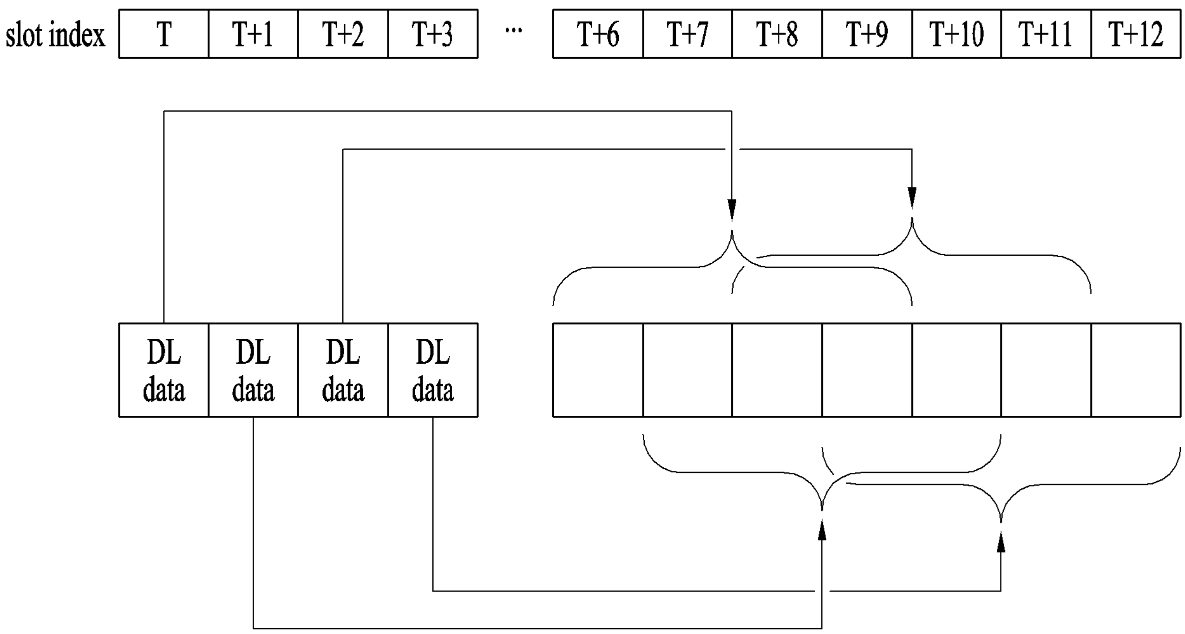
slot index
T
T+1
T+2
T+3
...
T+6
T+7
T+8
T+9
T+10
T+11
T+12
DL data
DL data
DL data
DL data

FIG. 12

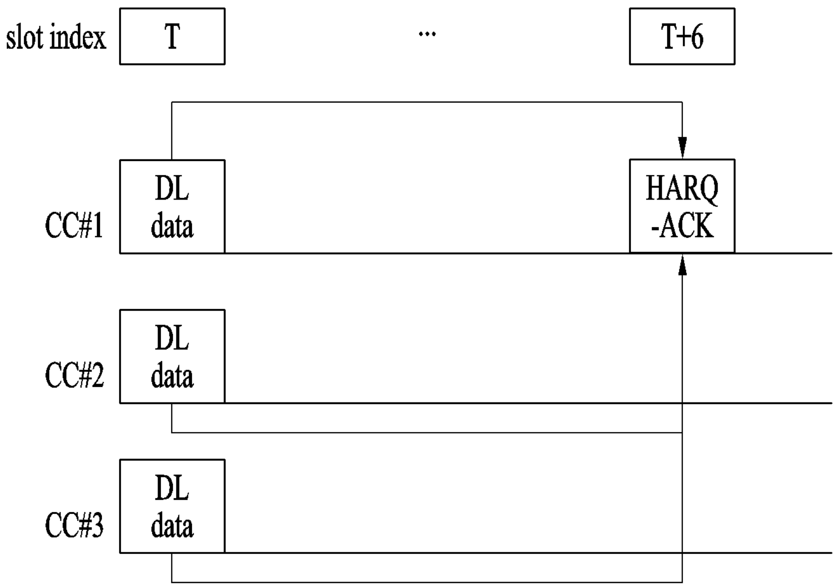
slot index
T
...
T+6
CC#1
DL data
HARQ -ACK
CC#2
DL data
CC#3
DL data

FIG. 13

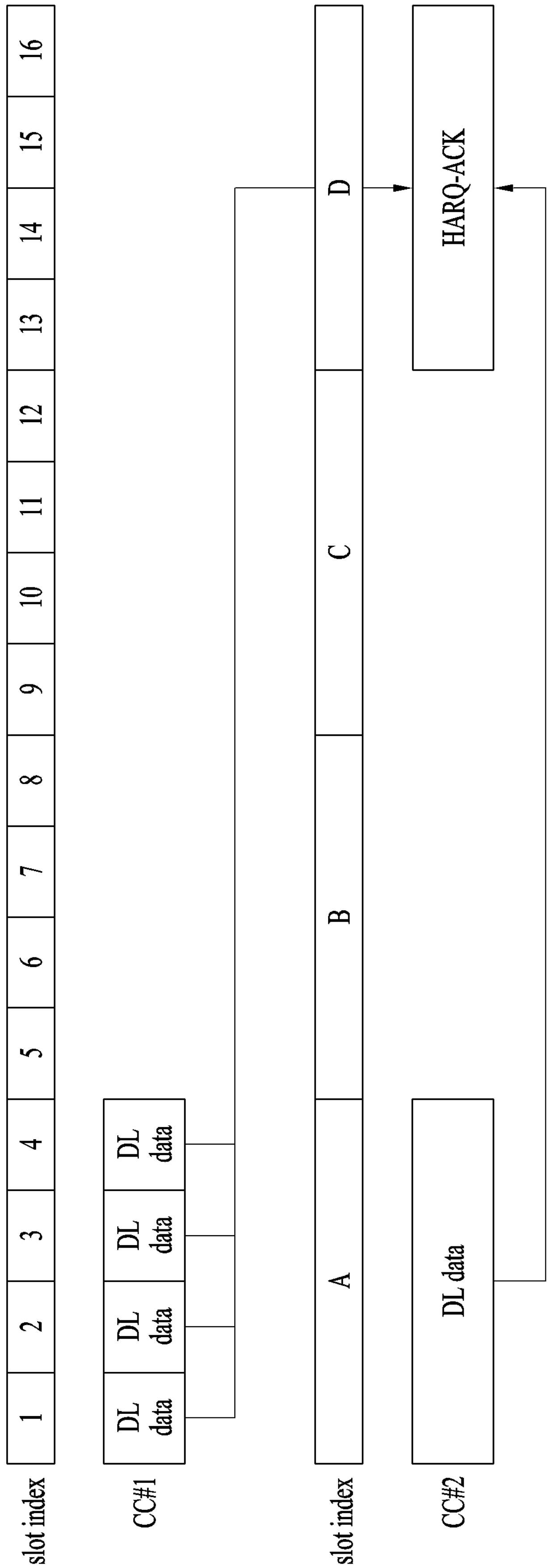
slot index
1
2
3
4
5
6
7
8
9
10
11
12
13
14
15
16
CC#1
DL data
DL data
DL data
DL data
slot index
A
B
C
D
CC#2
DL data
HARQ-ACK

FIG. 14

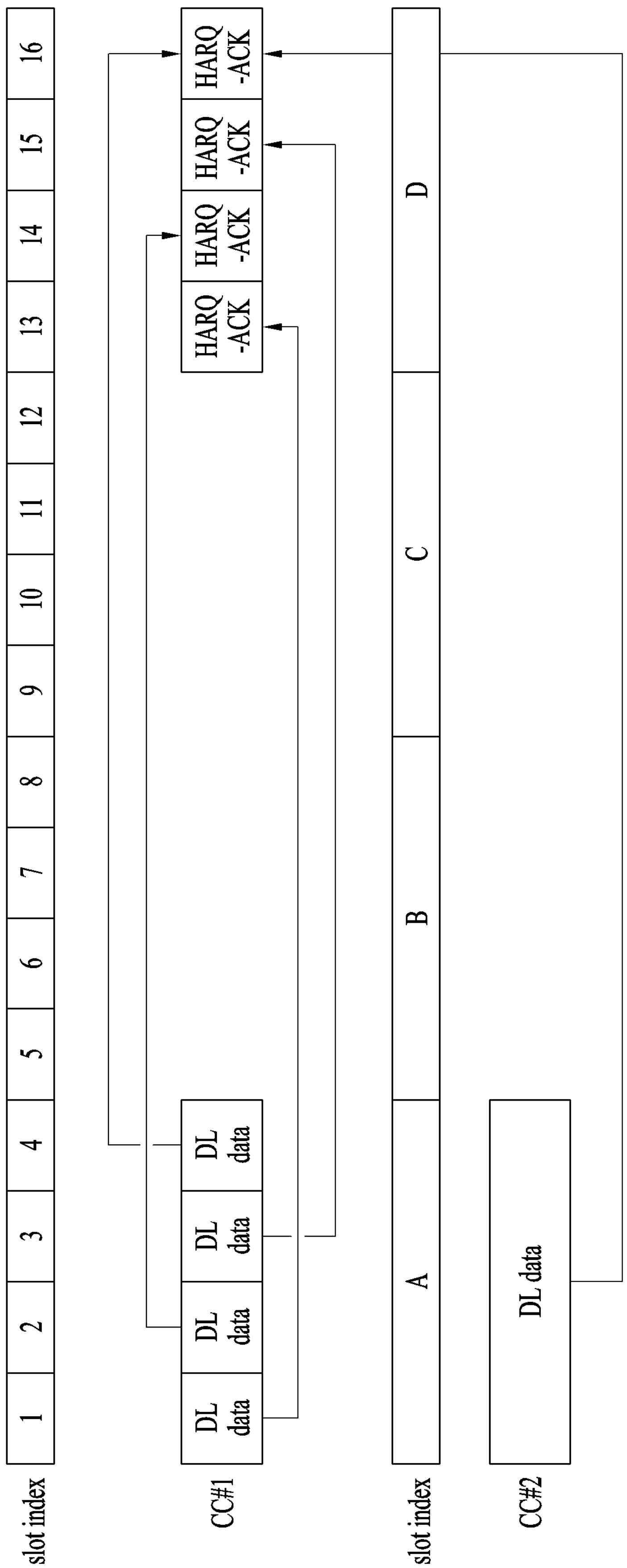
slot index
1
2
3
4
5
6
7
8
9
10
11
12
13
14
15
16
CC#1
DL data
DL data
DL data
DL data
HARQ -ACK
HARQ -ACK
HARQ -ACK
HARQ -ACK
slot index
A
B
C
D
CC#2
DL data

FIG. 15

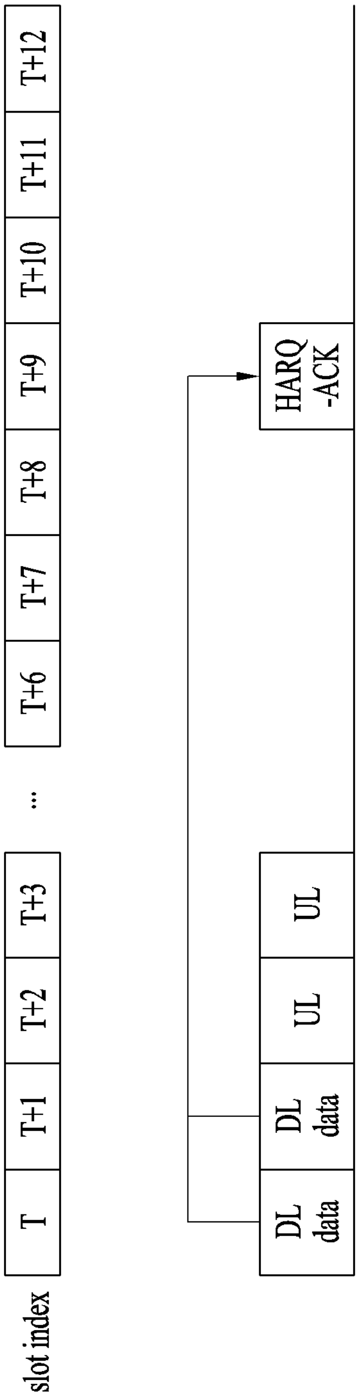
slot index
T
T+1
T+2
T+3
...
T+6
T+7
T+8
T+9
T+10
T+11
T+12
DL data
DL data
UL
UL
HARQ -ACK

FIG. 16

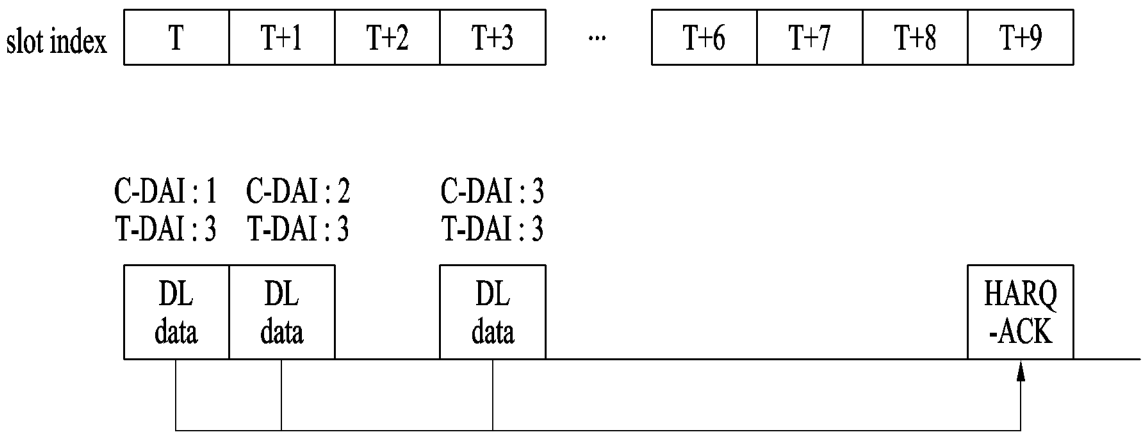
slot index
T
T+1
T+2
T+3
...
T+6
T+7
T+8
T+9
C-DAI : 1
T-DAI : 3
C-DAI : 2
T-DAI : 3
C-DAI : 3
T-DAI : 3
DL data
DL data
DL data
HARQ -ACK

FIG. 17

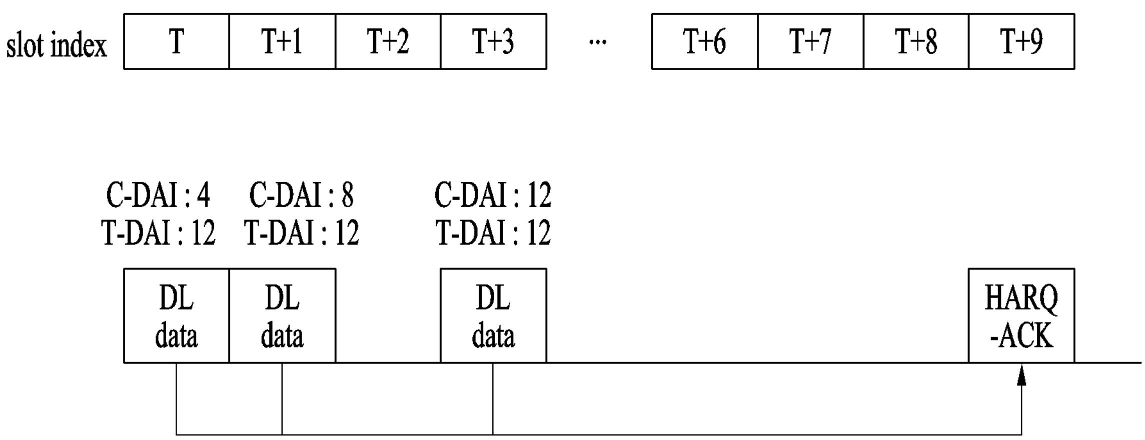
slot index
T
T+1
T+2
T+3
...
T+6
T+7
T+8
T+9
C-DAI : 4
T-DAI : 12
C-DAI : 8
T-DAI : 12
C-DAI : 12
T-DAI : 12
DL data
DL data
DL data
HARQ -ACK

FIG. 18

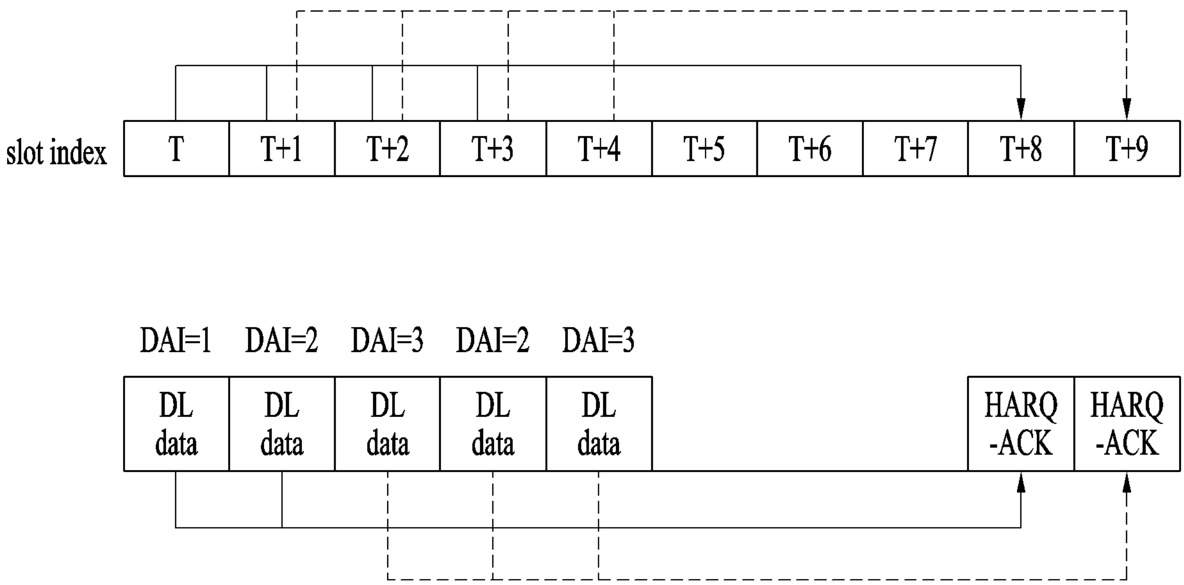
slot index
T
T+1
T+2
T+3
T+4
T+5
T+6
T+7
T+8
T+9
DAI=1
DAI=2
DAI=3
DAI=2
DAI=3
DL data
DL data
DL data
DL data
DL data
HARQ -ACK
HARQ -ACK

FIG. 19

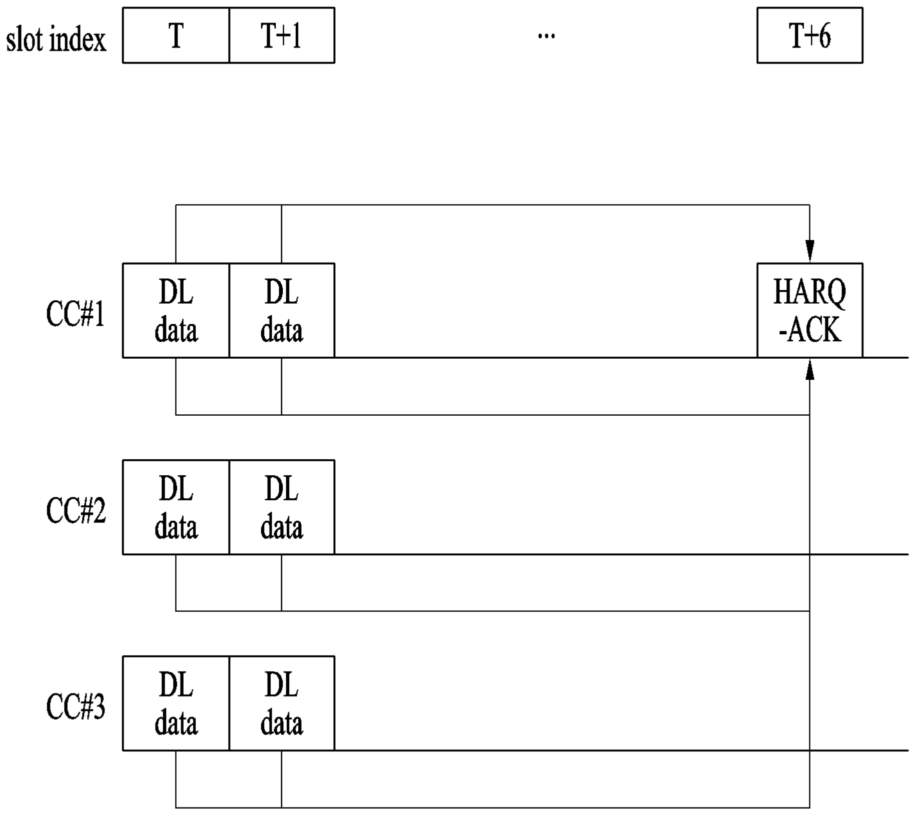
slot index
T
T+1
...
T+6
CC#1
DL data
DL data
HARQ -ACK
CC#2
DL data
DL data
CC#3
DL data
DL data

FIG. 20

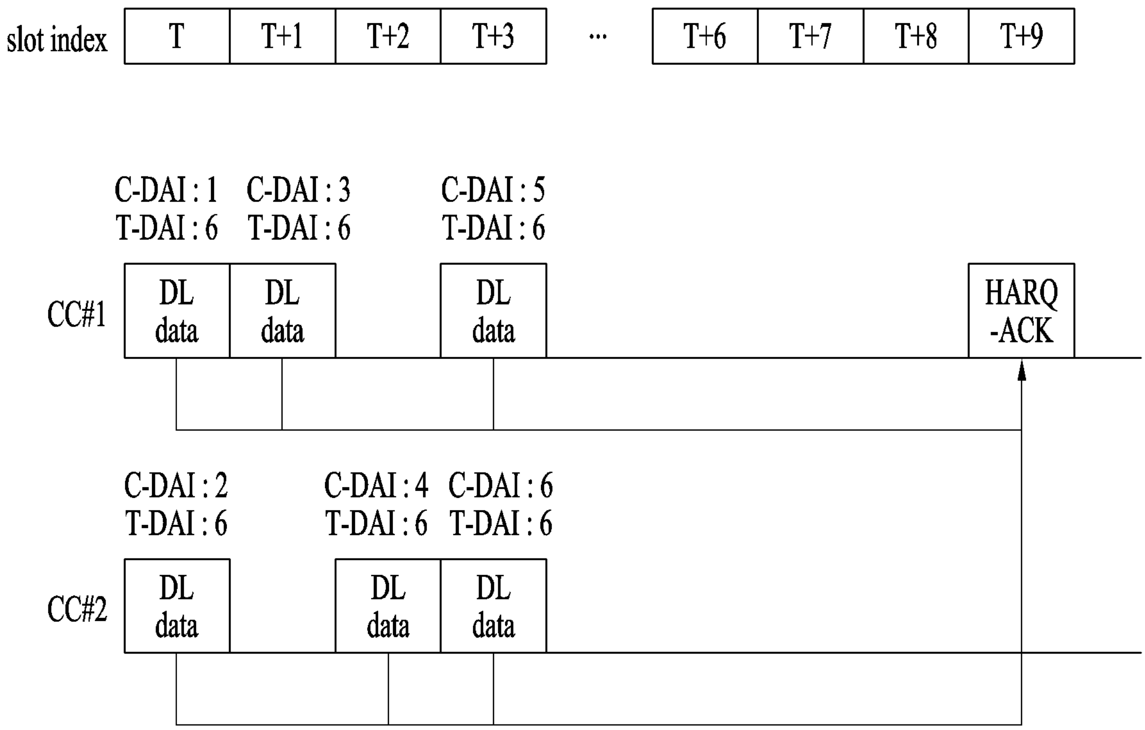
slot index
T
T+1
T+2
T+3
...
T+6
T+7
T+8
T+9
C-DAI : 1
T-DAI : 6
C-DAI : 3
T-DAI : 6
C-DAI : 5
T-DAI : 6
CC#1
DL data
DL data
DL data
HARQ -ACK
C-DAI : 2
T-DAI : 6
C-DAI : 4
T-DAI : 6
C-DAI : 6
T-DAI : 6
CC#2
DL data
DL data
DL data

FIG. 21

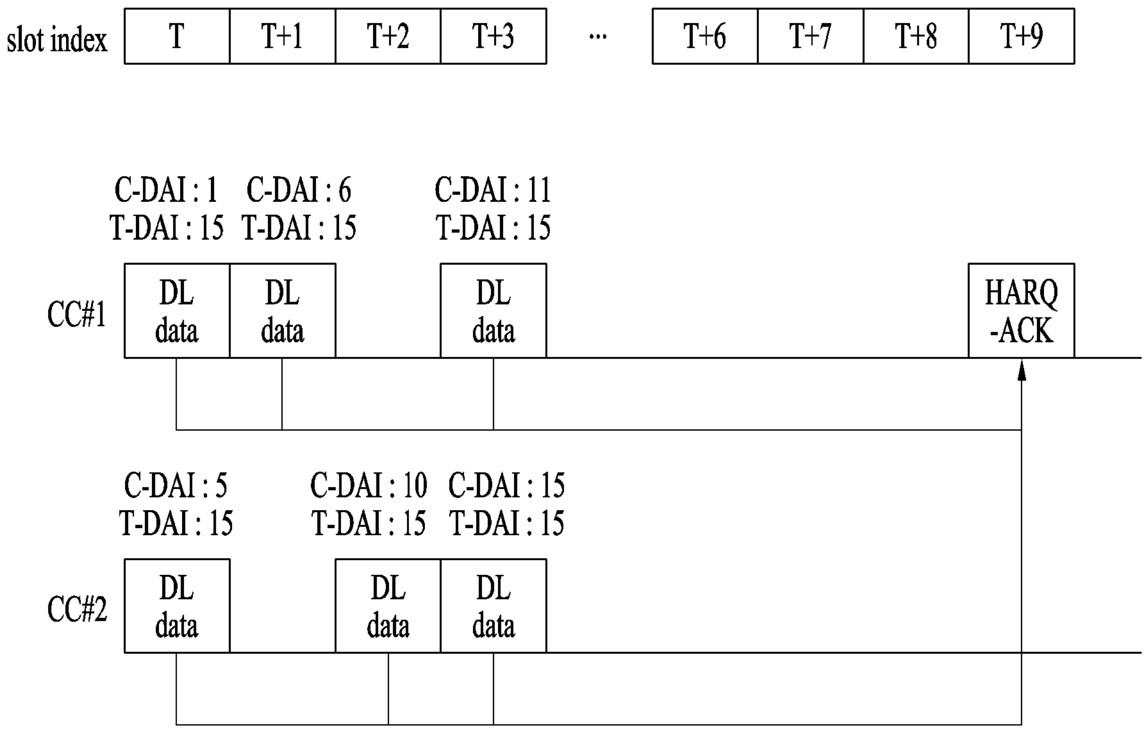
slot index
T
T+1
T+2
T+3
···
T+6
T+7
T+8
T+9
C-DAI : 1 T-DAI : 15
C-DAI : 6 T-DAI : 15
C-DAI : 11 T-DAI : 15
CC#1
DL data
DL data
DL data
HARQ -ACK
C-DAI : 5 T-DAI : 15
C-DAI : 10 T-DAI : 15
C-DAI : 15 T-DAI : 15
CC#2
DL data
DL data
DL data

FIG. 22

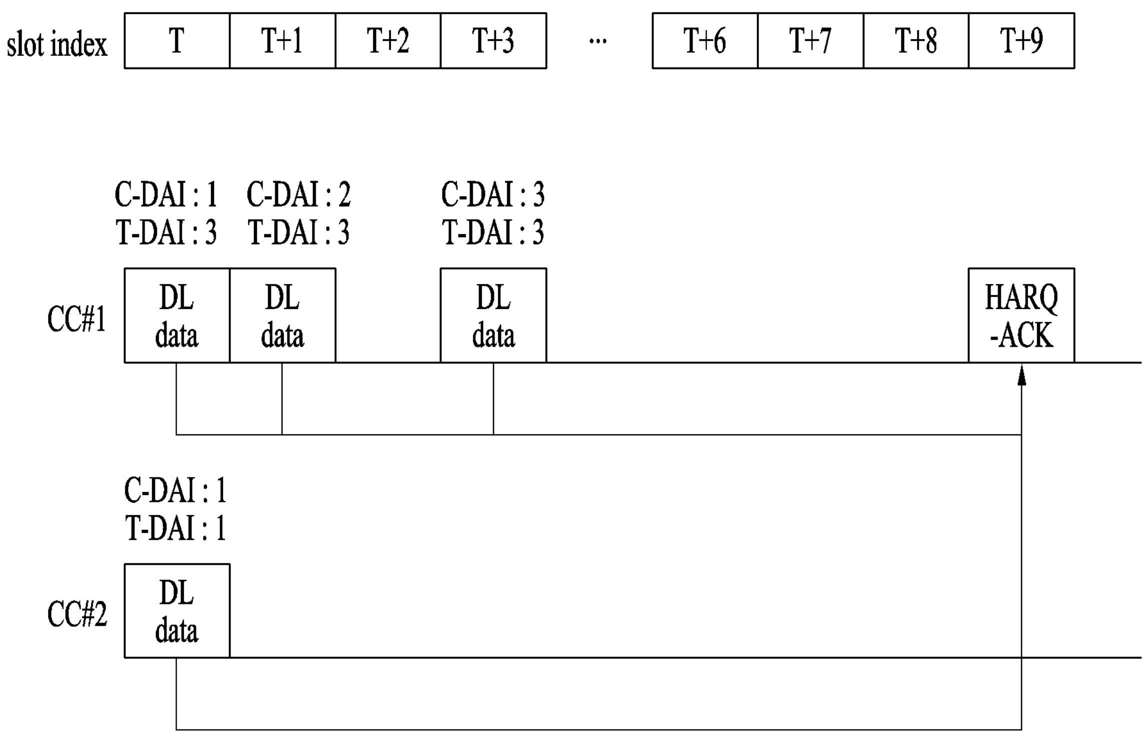
slot index
T
T+1
T+2
T+3
...
T+6
T+7
T+8
T+9
C-DAI : 1
T-DAI : 3
C-DAI : 2
T-DAI : 3
C-DAI : 3
T-DAI : 3
CC#1
DL data
DL data
DL data
HARQ -ACK
C-DAI : 1
T-DAI : 1
CC#2
DL data

FIG. 23

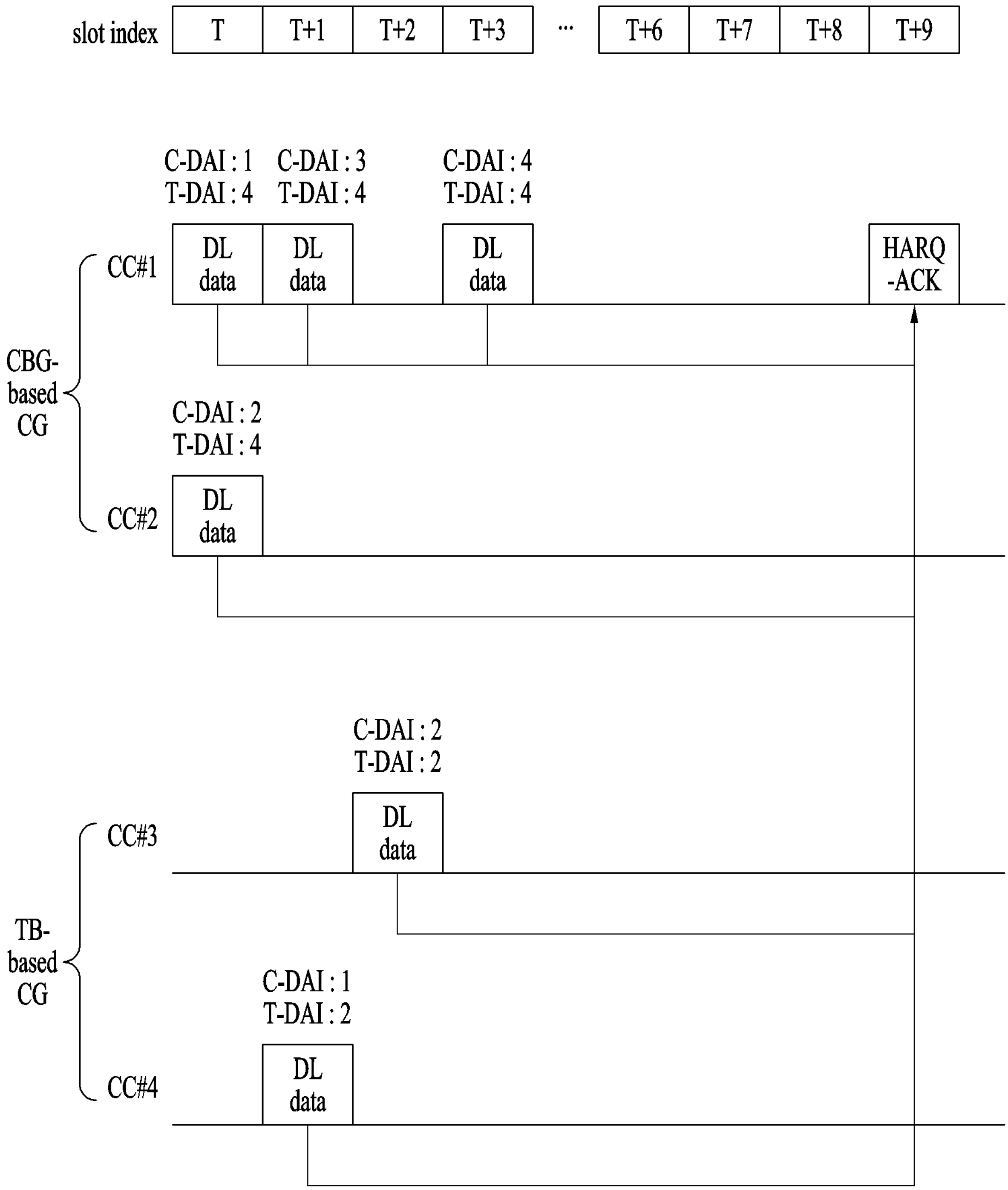
slot index
T
T+1
T+2
T+3
...
T+6
T+7
T+8
T+9
C-DAI : 1
T-DAI : 4
C-DAI : 3
T-DAI : 4
C-DAI : 4
T-DAI : 4
CC#1
DL data
DL data
DL data
HARQ -ACK
CBG-based CG
C-DAI : 2
T-DAI : 4
CC#2
DL data
C-DAI : 2
T-DAI : 2
CC#3
DL data
TB-based CG
C-DAI : 1
T-DAI : 2
CC#4
DL data

FIG. 24

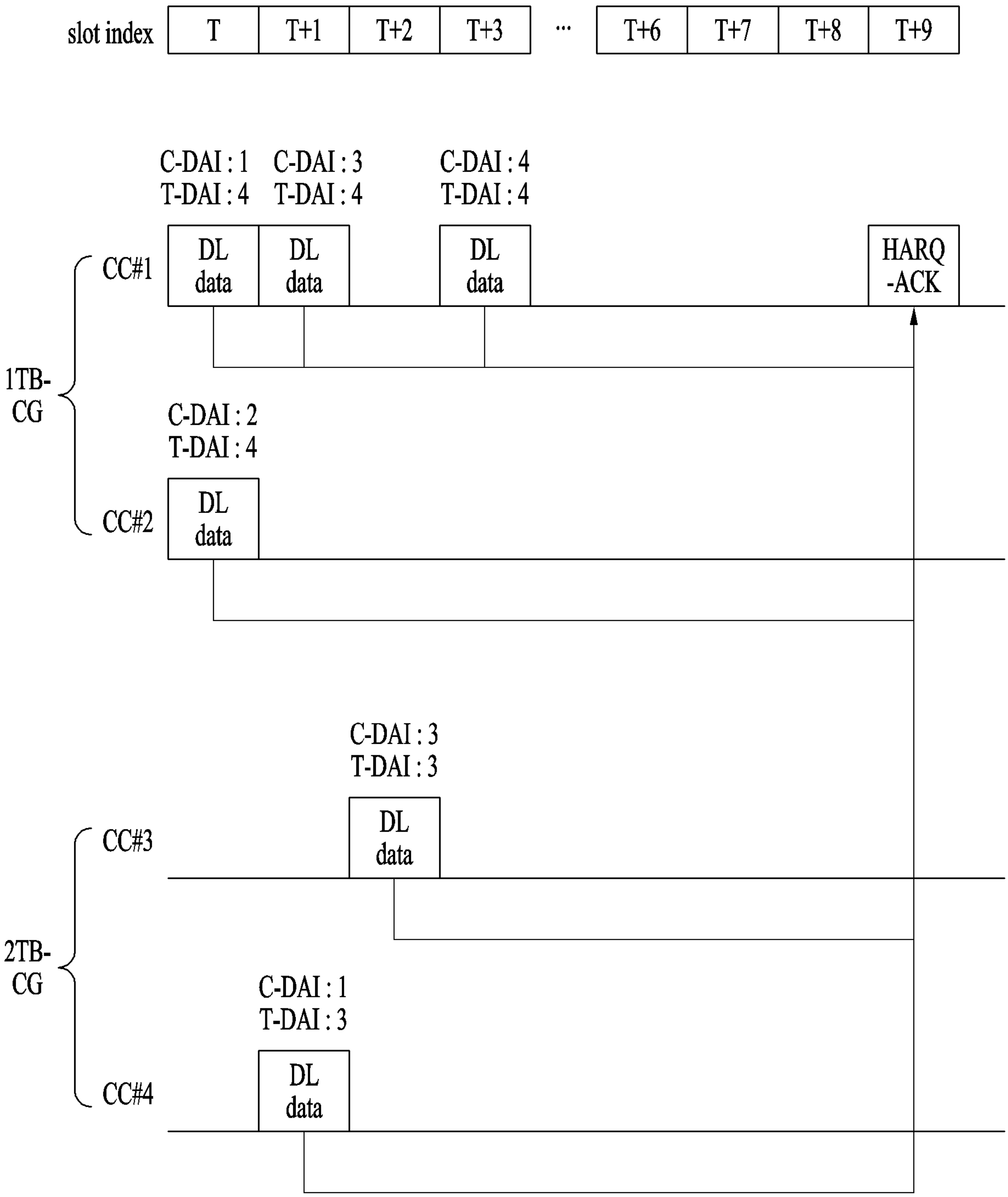
slot index
T
T+1
T+2
T+3
...
T+6
T+7
T+8
T+9
C-DAI : 1
T-DAI : 4
C-DAI : 3
T-DAI : 4
C-DAI : 4
T-DAI : 4
CC#1
DL data
DL data
DL data
HARQ -ACK
1TB-CG
C-DAI : 2
T-DAI : 4
CC#2
DL data
C-DAI : 3
T-DAI : 3
CC#3
DL data
2TB-CG
C-DAI : 1
T-DAI : 3
CC#4
DL data

FIG. 25

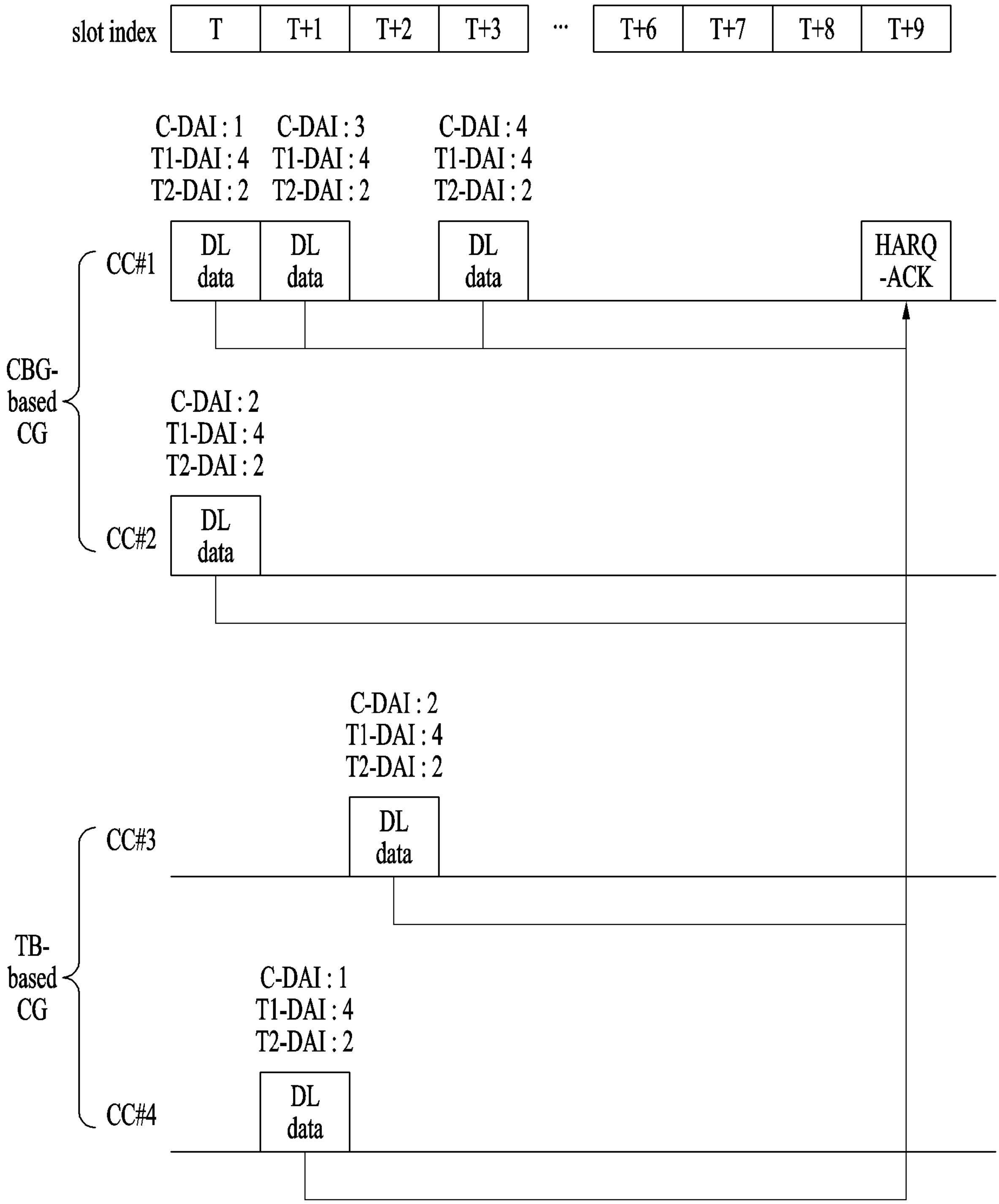

slot index
T
T+1
T+2
T+3
...
T+6
T+7
T+8
T+9
C-DAI : 1
T1-DAI : 4
T2-DAI : 2
C-DAI : 3
T1-DAI : 4
T2-DAI : 2
C-DAI : 4
T1-DAI : 4
T2-DAI : 2
CC#1
DL data
DL data
DL data
HARQ -ACK
CBG-based CG
C-DAI : 2
T1-DAI : 4
T2-DAI : 2
CC#2
DL data
C-DAI : 2
T1-DAI : 4
T2-DAI : 2
CC#3
DL data
TB-based CG
C-DAI : 1
T1-DAI : 4
T2-DAI : 2
CC#4
DL data

FIG. 26

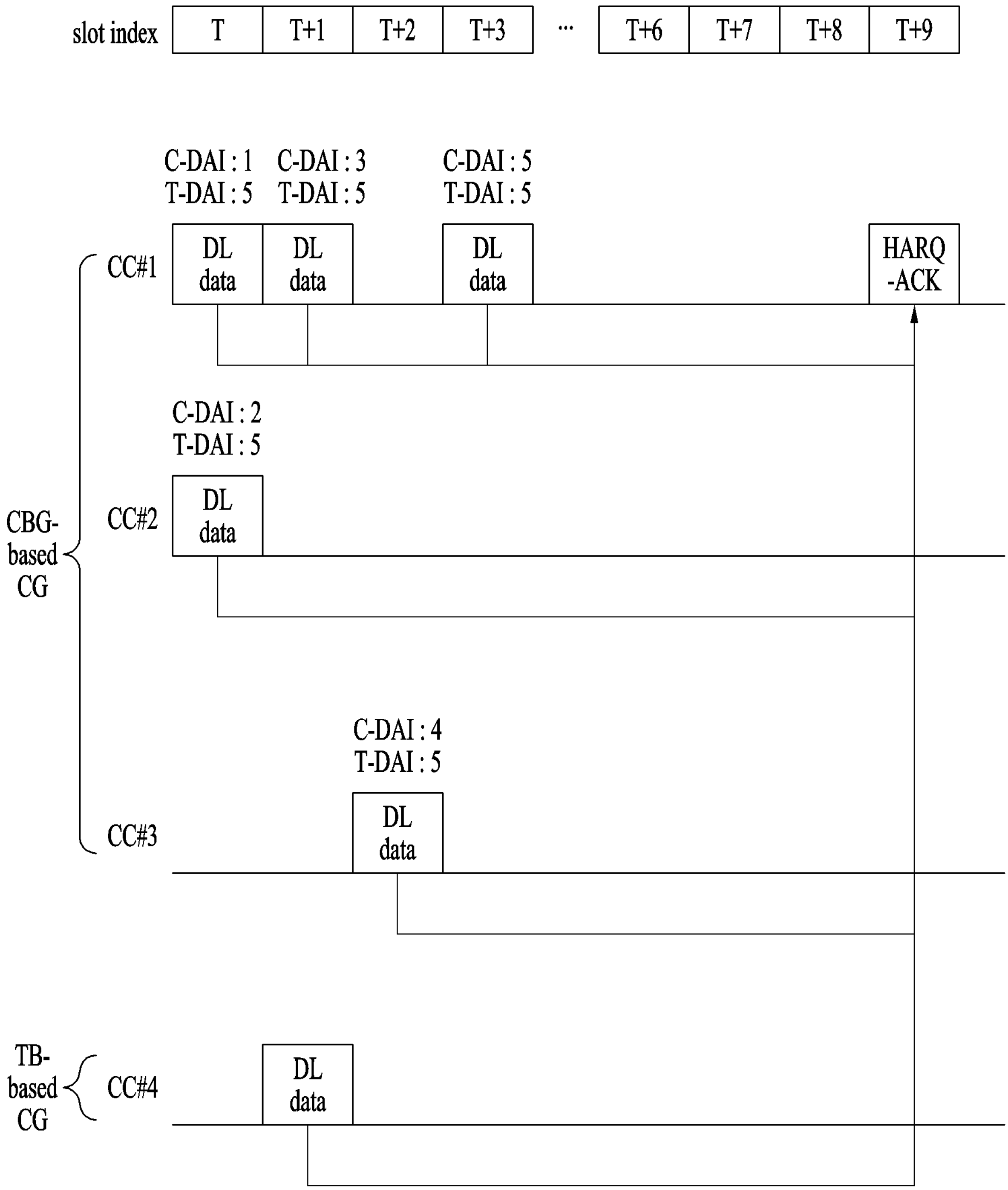
slot index
T
T+1
T+2
T+3
...
T+6
T+7
T+8
T+9
C-DAI : 1
T-DAI : 5
C-DAI : 3
T-DAI : 5
C-DAI : 5
T-DAI : 5
CC#1
DL data
DL data
DL data
HARQ -ACK
C-DAI : 2
T-DAI : 5
CBG-based CG
CC#2
DL data
C-DAI : 4
T-DAI : 5
CC#3
DL data
TB-based CG
CC#4
DL data

FIG. 27

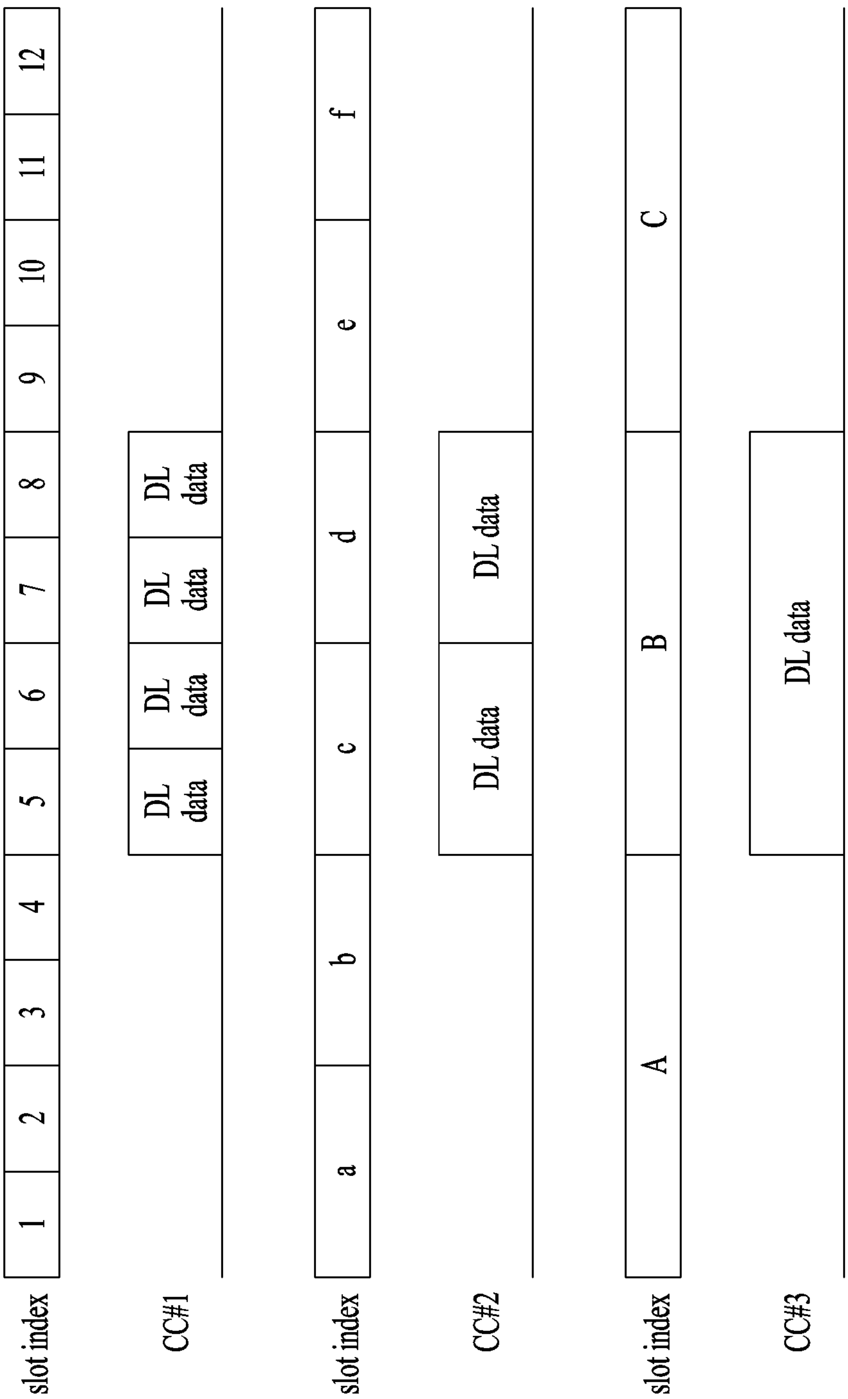
slot index
1
2
3
4
5
6
7
8
9
10
11
12
CC#1
DL data
DL data
DL data
DL data
slot index
a
b
c
d
e
f
CC#2
DL data
DL data
slot index
A
B
C
CC#3
DL data

FIG. 28

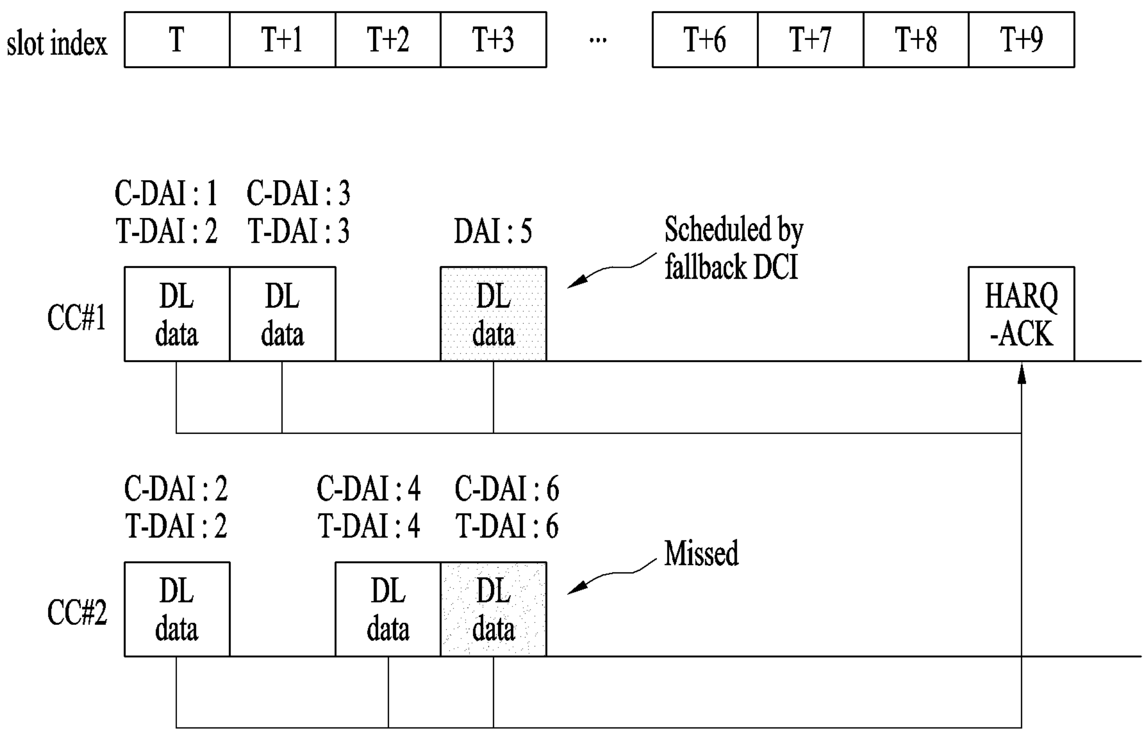
slot index
T
T+1
T+2
T+3
...
T+6
T+7
T+8
T+9
C-DAI : 1
T-DAI : 2
C-DAI : 3
T-DAI : 3
DAI : 5
Scheduled by
fallback DCI
CC#1
DL
data
DL
data
DL
data
HARQ
-ACK
C-DAI : 2
T-DAI : 2
C-DAI : 4
T-DAI : 4
C-DAI : 6
T-DAI : 6
Missed
CC#2
DL
data
DL
data
DL
data

FIG. 29

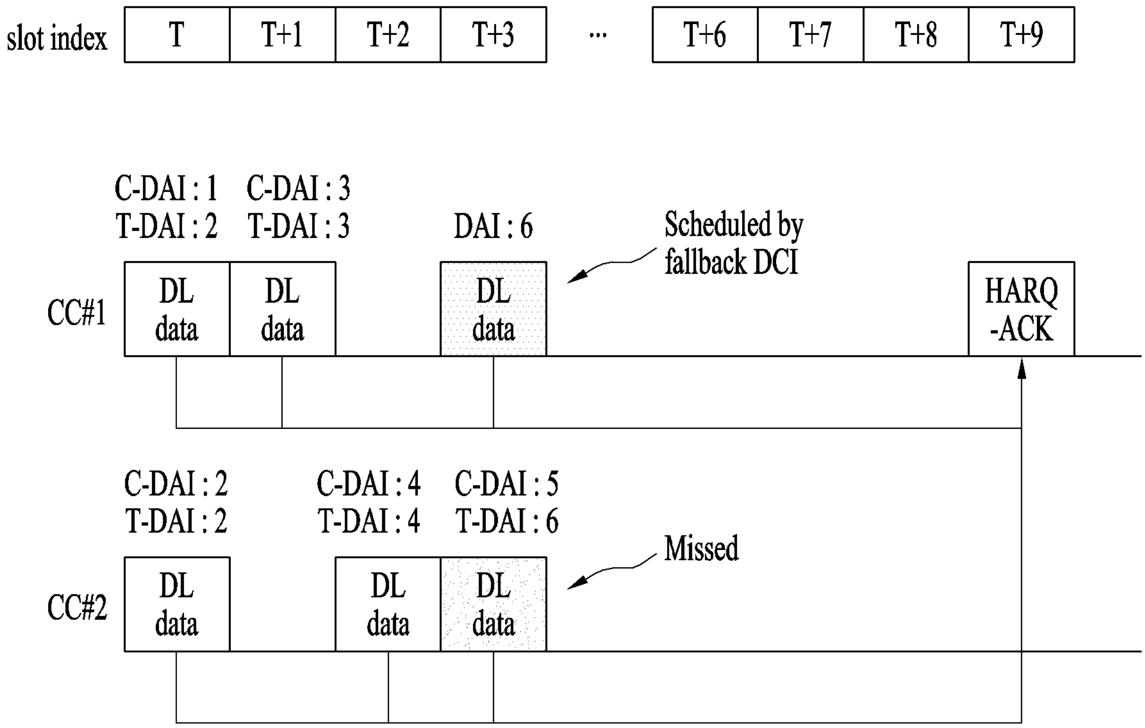
slot index
T
T+1
T+2
T+3
...
T+6
T+7
T+8
T+9
C-DAI : 1
T-DAI : 2
C-DAI : 3
T-DAI : 3
DAI : 6
Scheduled by
fallback DCI
CC#1
DL data
DL data
DL data
HARQ -ACK
C-DAI : 2
T-DAI : 2
C-DAI : 4
T-DAI : 4
C-DAI : 5
T-DAI : 6
Missed
CC#2
DL data
DL data
DL data

FIG. 30

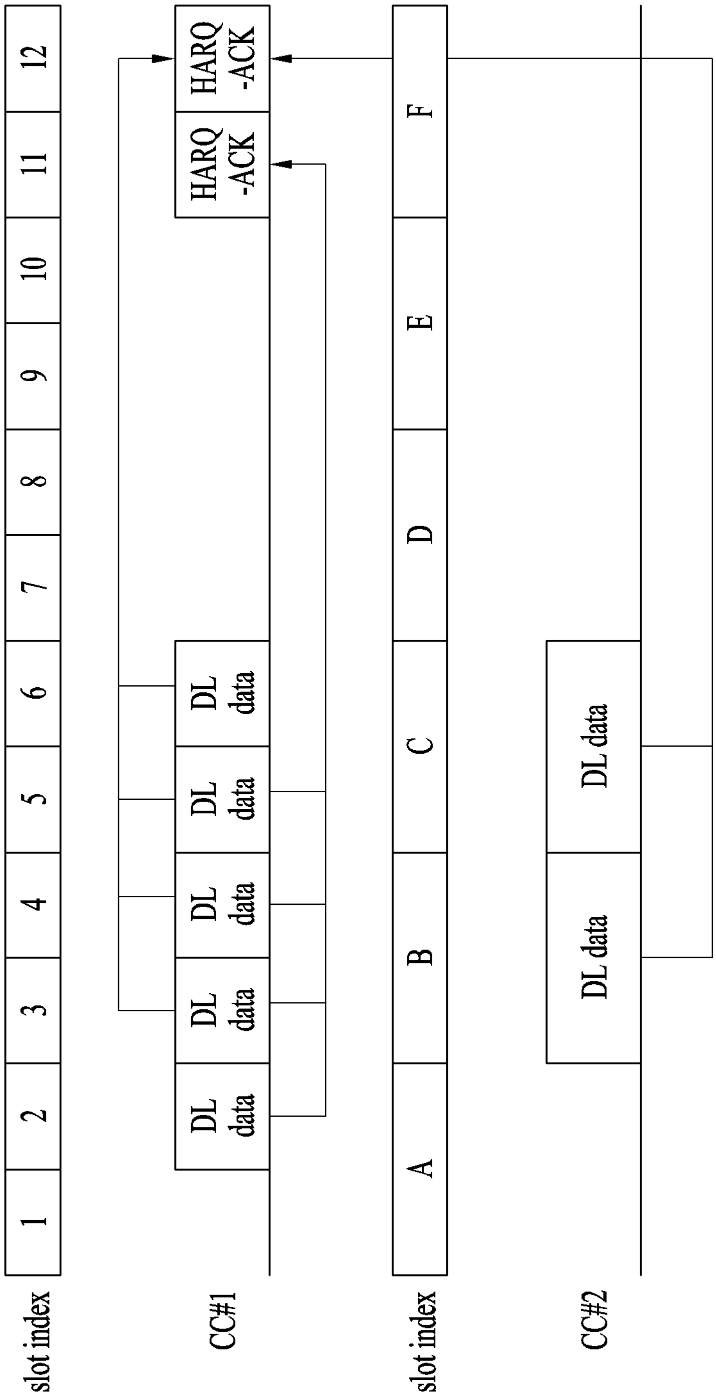
slot index
1
2
3
4
5
6
7
8
9
10
11
12
CC#1
DL data
DL data
DL data
DL data
DL data
HARQ -ACK
HARQ -ACK
slot index
A
B
C
D
E
F
CC#2
DL data
DL data

FIG. 31

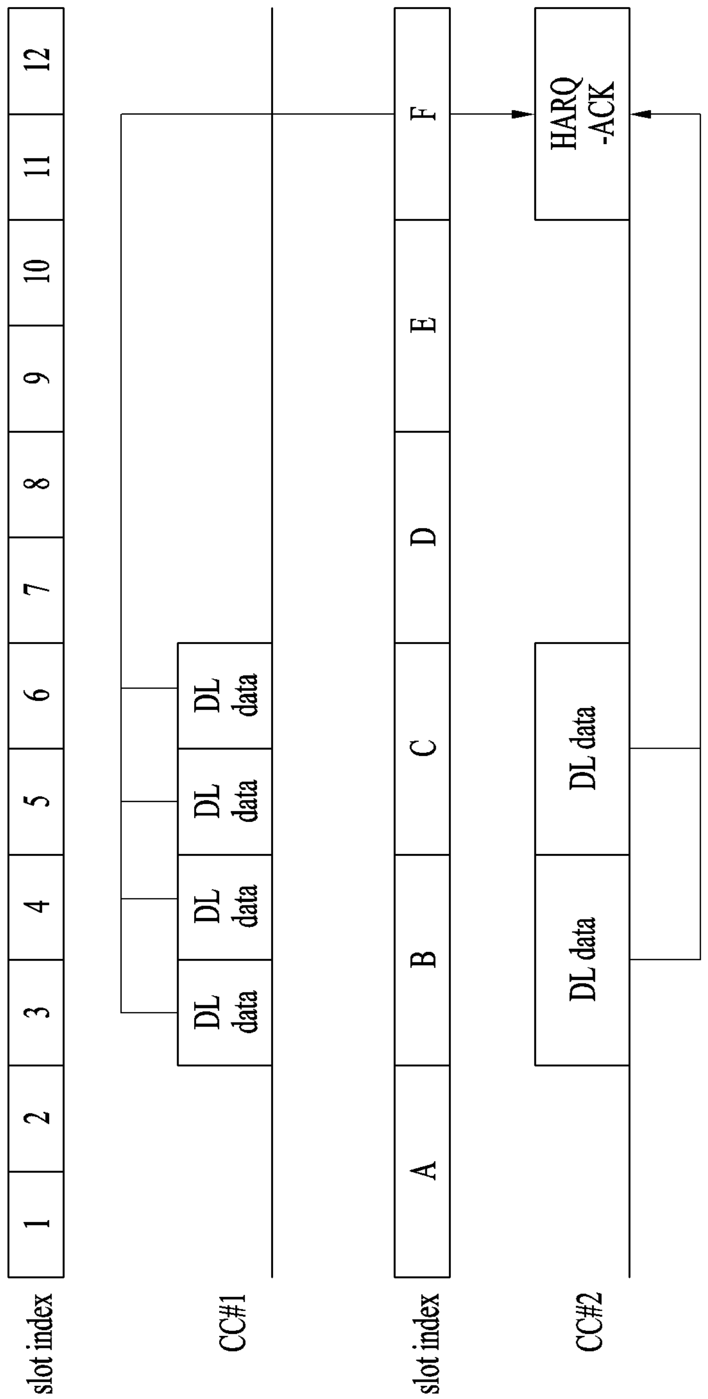
slot index
1
2
3
4
5
6
7
8
9
10
11
12
CC#1
DL data
DL data
DL data
DL data
slot index
A
B
C
D
E
F
CC#2
DL data
DL data
HARQ -ACK

FIG. 32

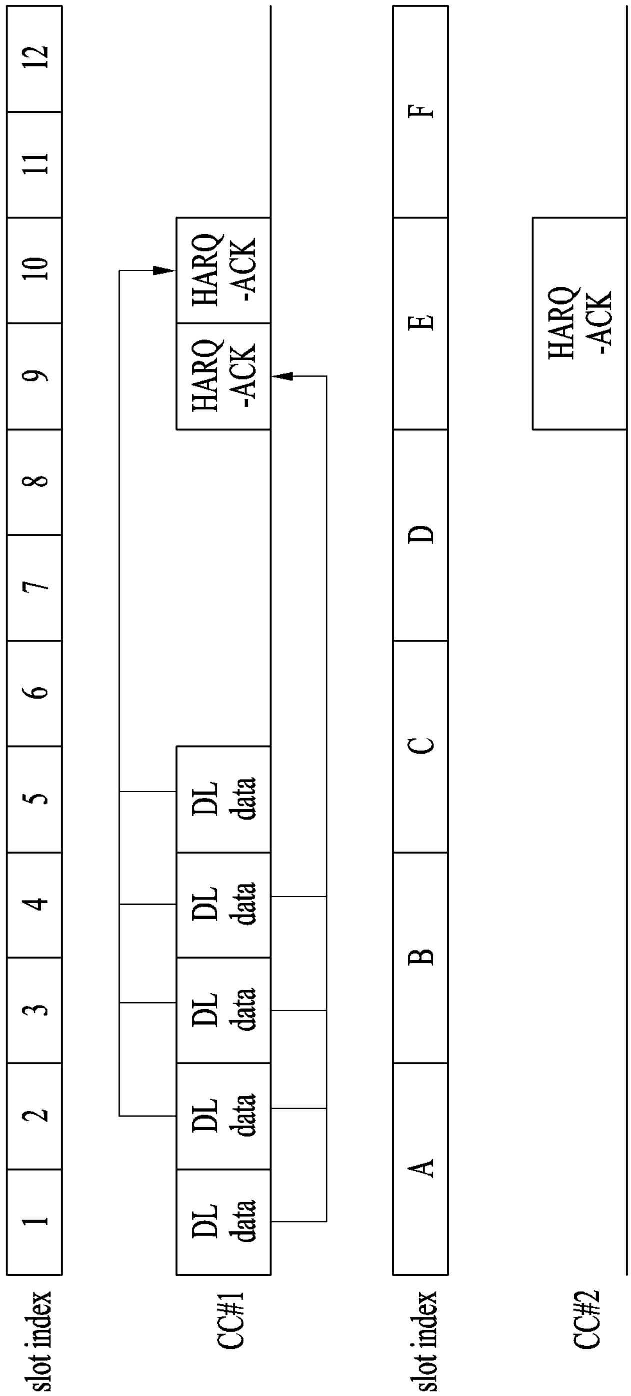
slot index
1
2
3
4
5
6
7
8
9
10
11
12
CC#1
DL data
DL data
DL data
DL data
DL data
HARQ -ACK
HARQ -ACK
slot index
A
B
C
D
E
F
CC#2
HARQ -ACK

FIG. 33

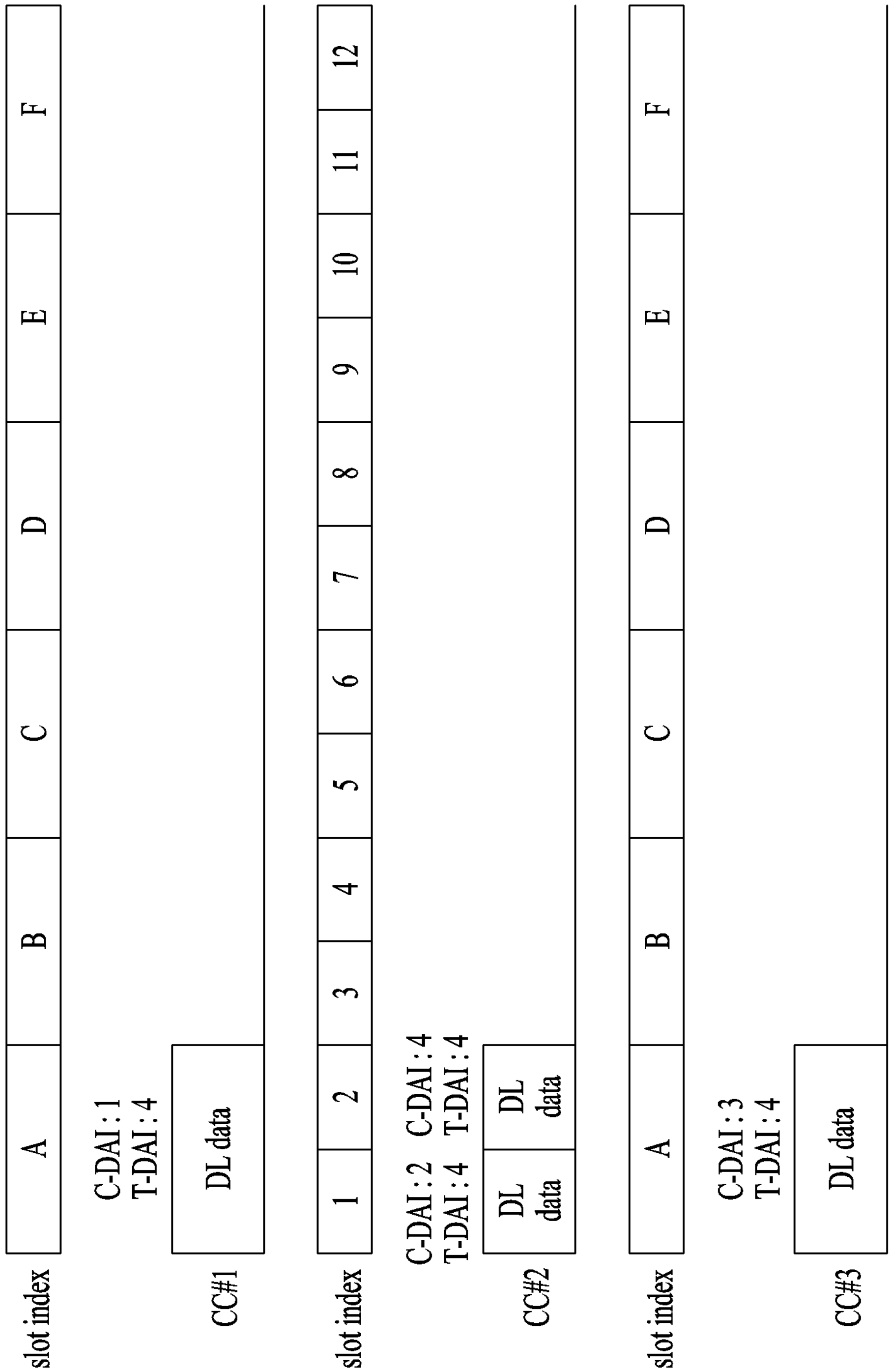
slot index
A
B
C
D
E
F
C-DAI : 1
T-DAI : 4
DL data
CC#1
slot index
1
2
3
4
5
6
7
8
9
10
11
12
C-DAI : 2
T-DAI : 4
C-DAI : 4
T-DAI : 4
DL data
DL data
CC#2
slot index
A
B
C
D
E
F
C-DAI : 3
T-DAI : 4
DL data
CC#3

FIG. 34

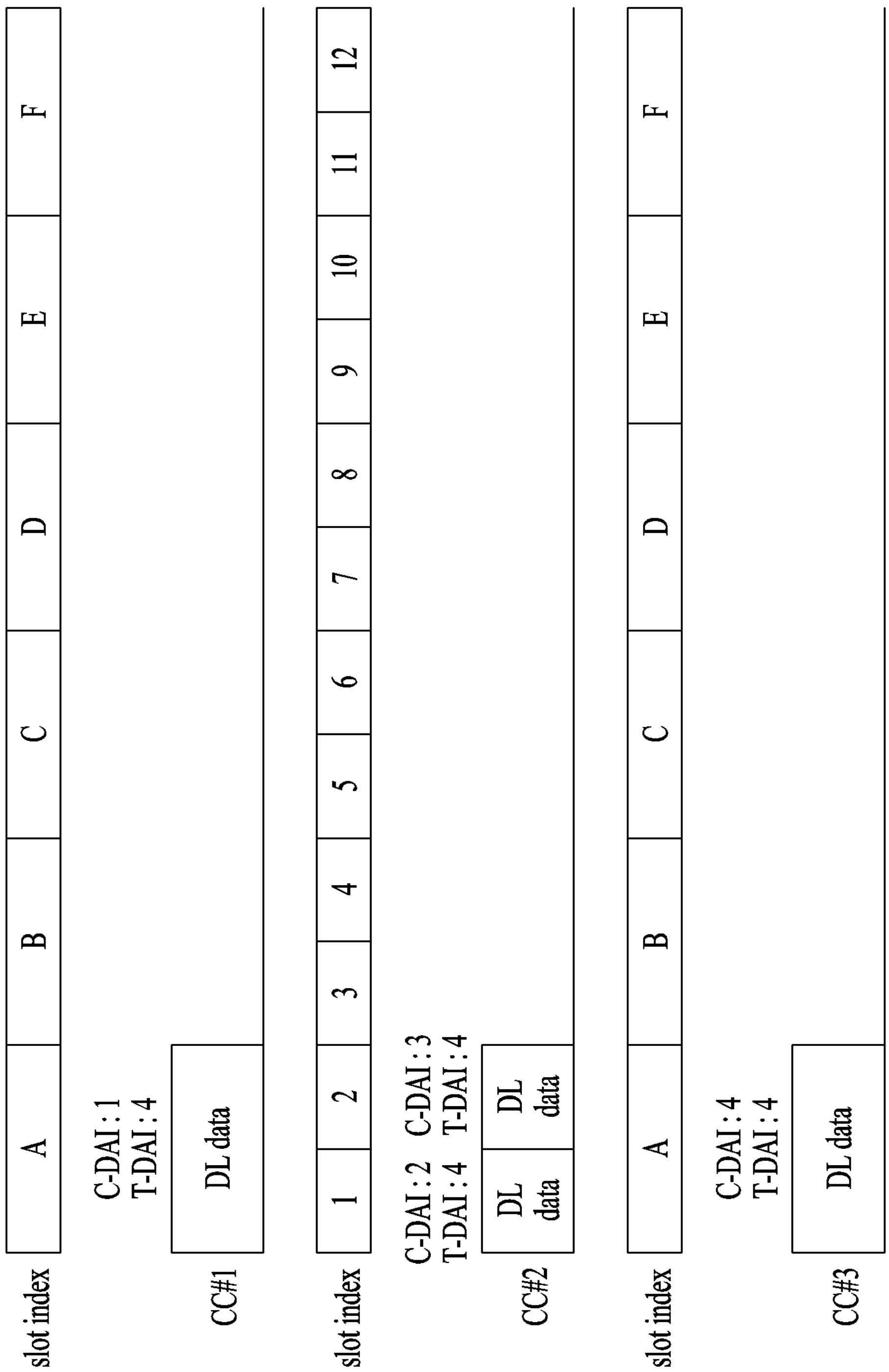
slot index
A
B
C
D
E
F
C-DAI : 1
T-DAI : 4
DL data
CC#1
slot index
1
2
3
4
5
6
7
8
9
10
11
12
C-DAI : 2
T-DAI : 4
C-DAI : 3
T-DAI : 4
DL data
DL data
CC#2
slot index
A
B
C
D
E
F
C-DAI : 4
T-DAI : 4
DL data
CC#3

FIG. 35

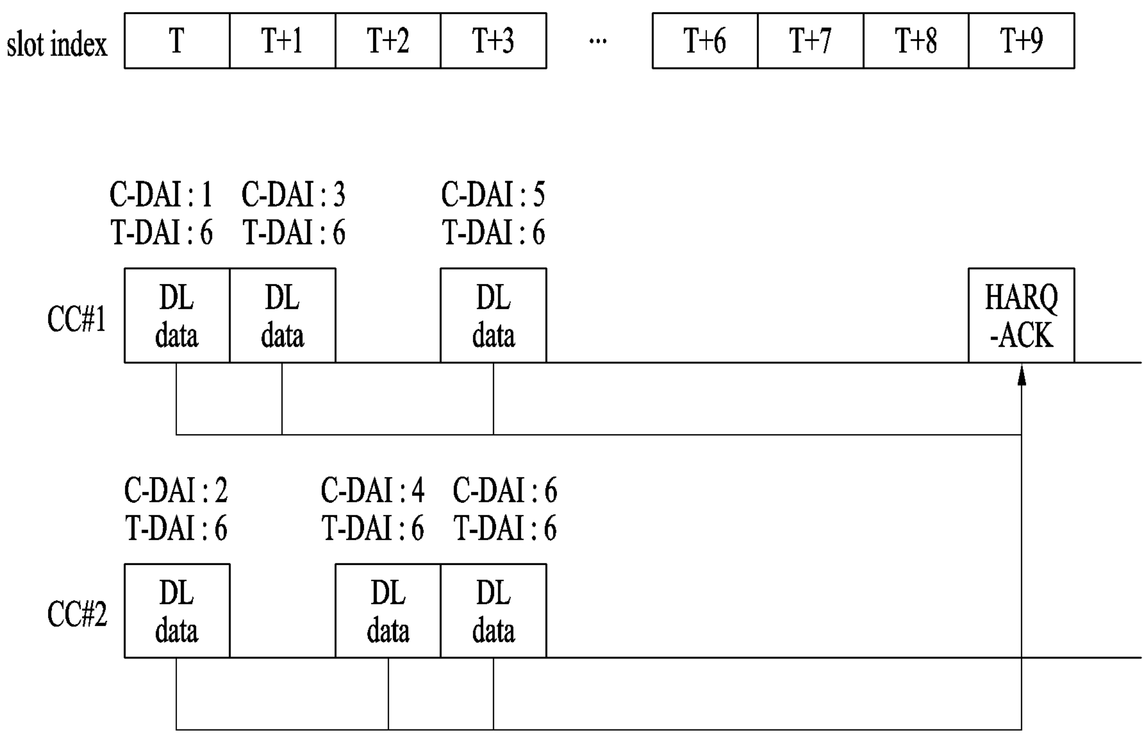
slot index
T
T+1
T+2
T+3
...
T+6
T+7
T+8
T+9
C-DAI : 1
T-DAI : 6
C-DAI : 3
T-DAI : 6
C-DAI : 5
T-DAI : 6
CC#1
DL data
DL data
DL data
HARQ -ACK
C-DAI : 2
T-DAI : 6
C-DAI : 4
T-DAI : 6
C-DAI : 6
T-DAI : 6
CC#2
DL data
DL data
DL data

FIG. 36

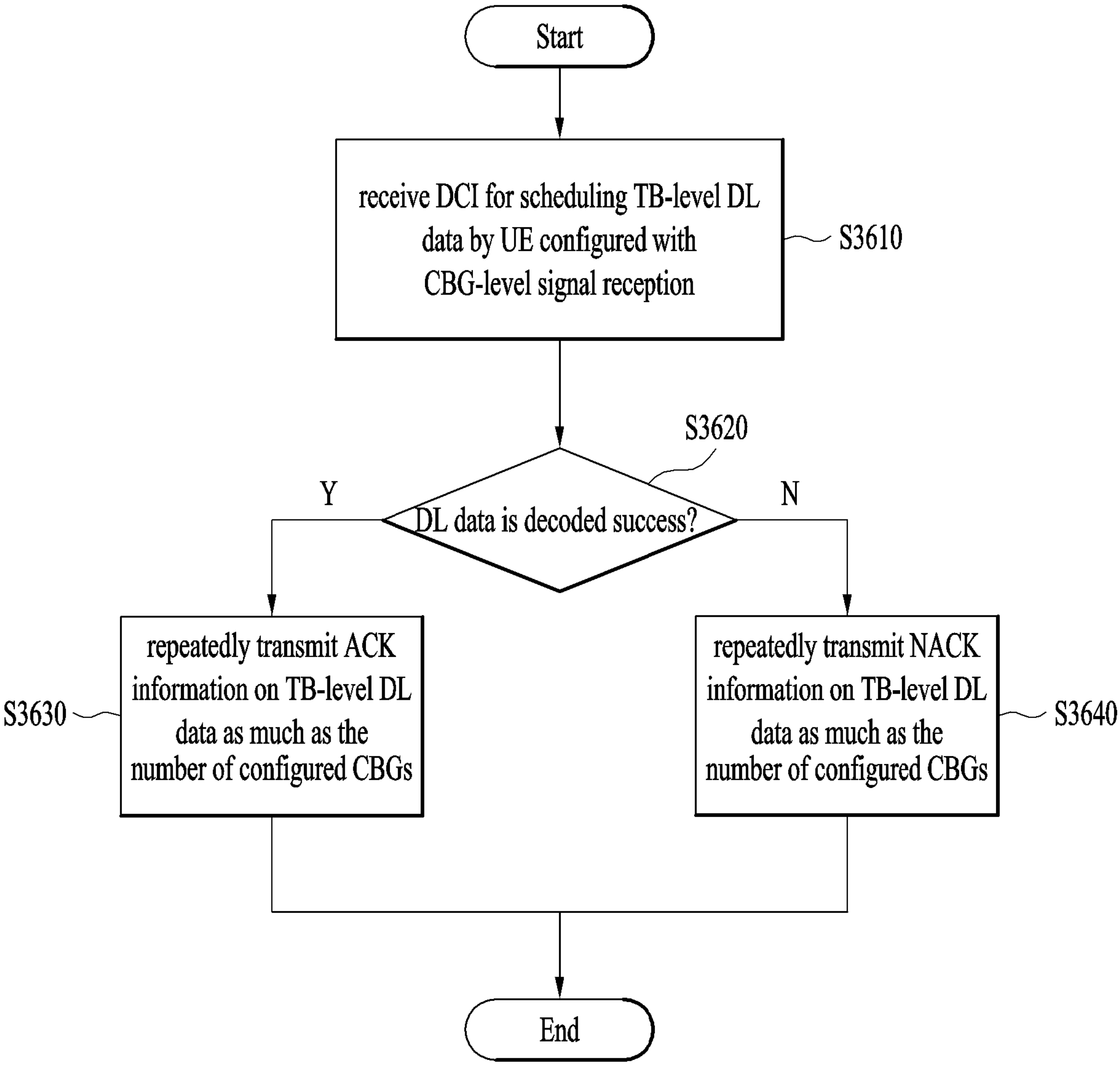
Start
receive DCI for scheduling TB-level DL data by UE configured with CBG-level signal reception
S3610
S3620
DL data is decoded success?
Y
N
repeatedly transmit ACK information on TB-level DL data as much as the number of configured CBGs
S3630
repeatedly transmit NACK information on TB-level DL data as much as the number of configured CBGs
S3640
End

FIG. 37

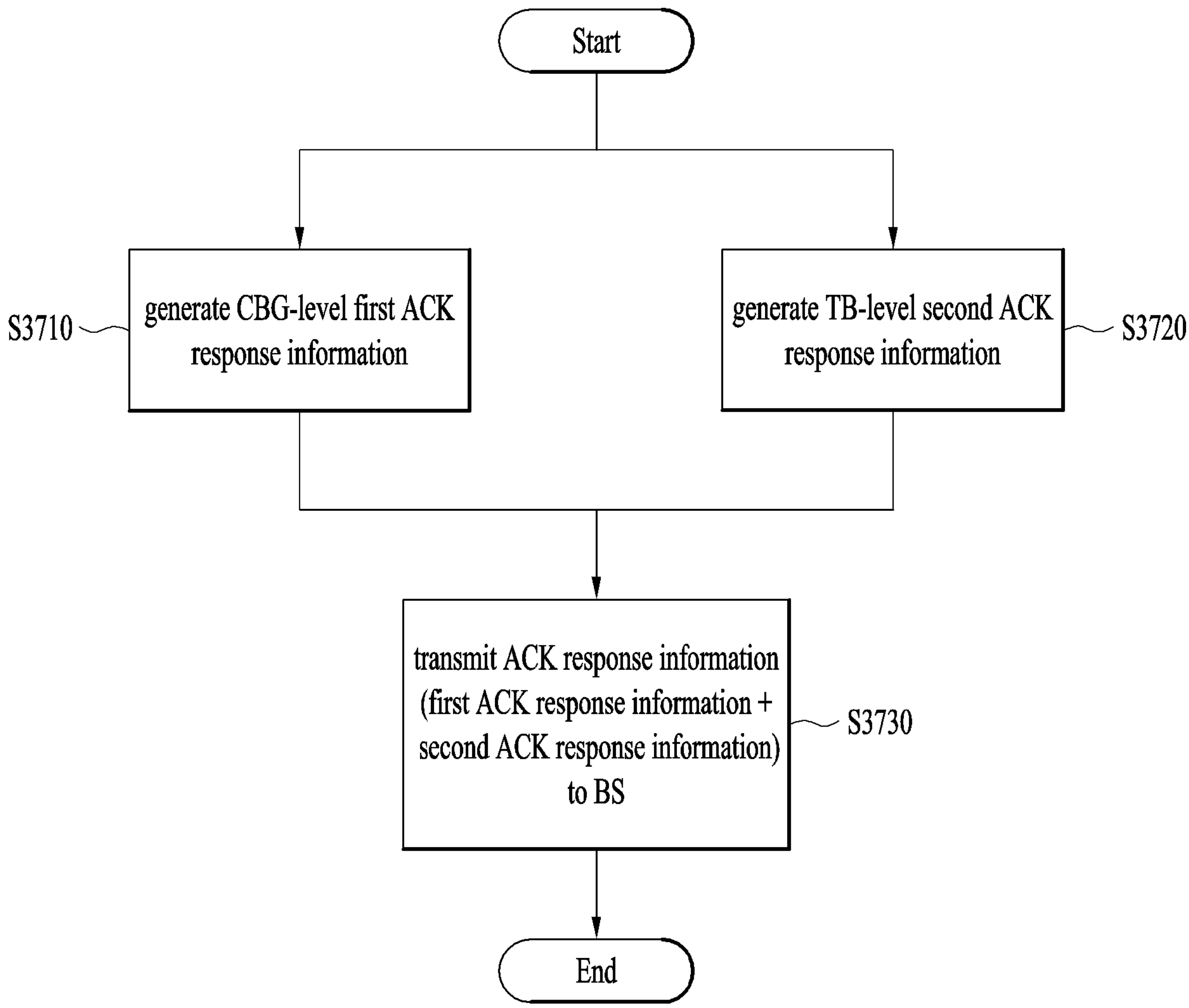
Start
generate CBG-level first ACK response information
S3710
generate TB-level second ACK response information
S3720
transmit ACK response information (first ACK response information + second ACK response information) to BS
S3730
End

FIG. 38

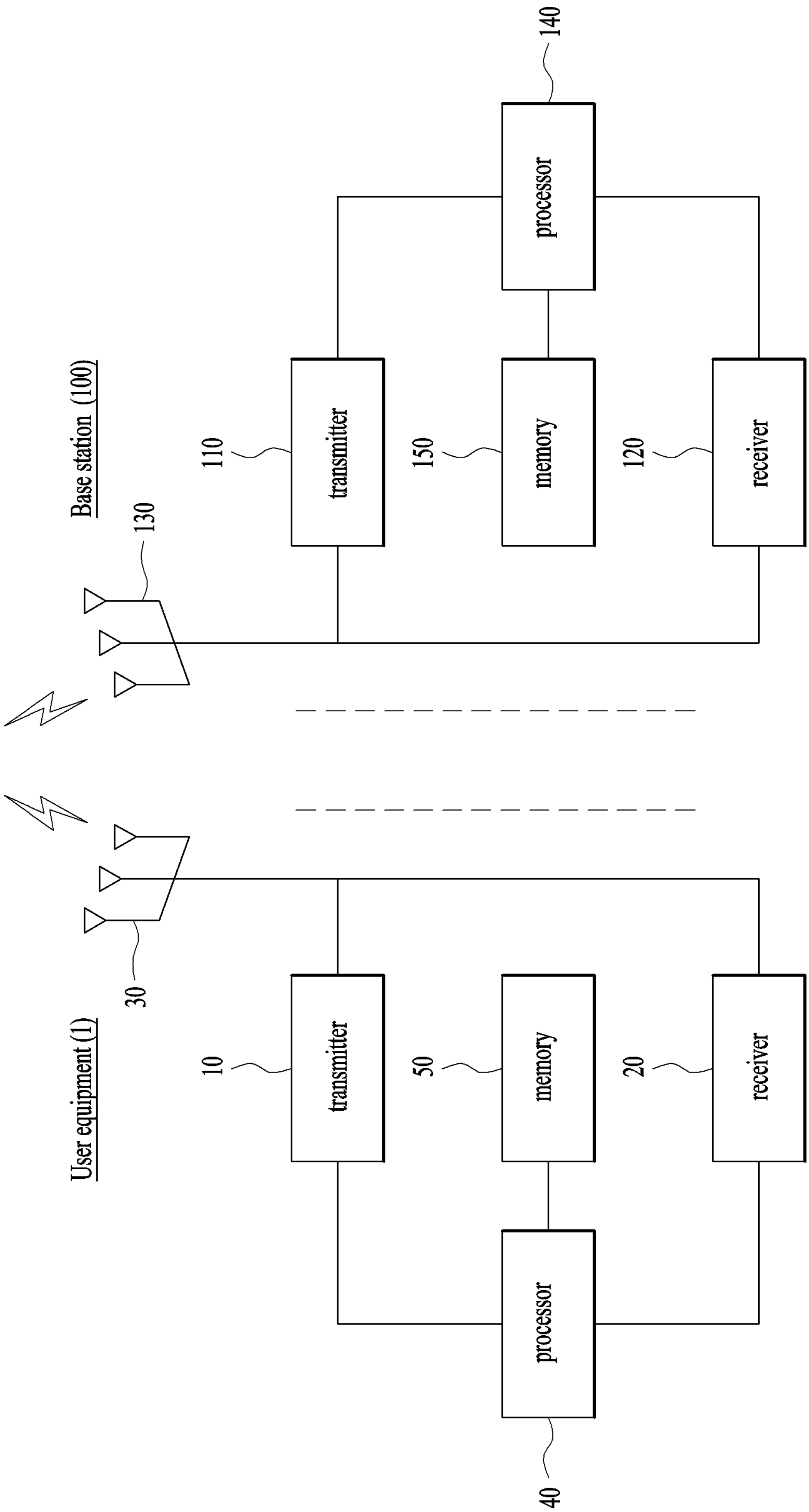
Base station (100)
130
110
transmitter
150
memory
120
receiver
140
processor
User equipment (1)
30
10
transmitter
50
memory
20
receiver
40
processor

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **NTT DOCOMO.** *3GPP contribution R1-1708481*
- **SAMSUNG.** *3GPP contribution R1-1708025*
- **HUAWEI.** *3GPP contribution R1-1706964*